# EUROPEAN PATENT APPLICATION

(11) **EP 4 685 940 A1**
(43) Date of publication of application: **28.01.2026**
(21) Application number: 23958662.1
(22) Date of filing: 17.11.2023
(51) Int. Cl.: H01M 50/131

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: CHEN, Xinxiang, Ningde, Fujian 352100 (CN); JIN, Haizu, Ningde, Fujian 352100 (CN); YANG, Rui, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN)
(74) Representative: Kraus & Lederer PartGmbB
(86) International application number: PCT/CN2023/132472
(87) International publication number: WO 2025/102389

(57) **Abstract**

Embodiments of the present application disclose a battery cell, a battery, and a power consuming device. The battery cell includes an electrode assembly and a case. The electrode assembly includes a negative electrode plate. The negative electrode plate includes a negative electrode active material with a metal ion reversely deintercalated and intercalated. The negative electrode active material includes a silicon-based material. The case is configured to accommodate the electrode assembly. At least a portion of regions of the case has a yield strength of Re at a temperature of 25°C, where Re satisfies: 140 MPa≤Re≤1000 MPa. According to the battery cell, the battery, and the power consuming device in the embodiments of the present application, the reliability of the battery cell can be improved.

## Description

### TECHNICAL FIELD

The present application relates to the field of batteries, and in particular, to a battery cell, a battery, and a power consuming device.

### BACKGROUND

Energy conservation and emission reduction are key to the sustainable development of an automotive industry. In this case, electric vehicles have become an important part of the sustainable development of the automotive industry due to their advantages in energy conservation and environmental protection. For electric vehicles, battery technology is also an important factor related to their development.

**In** the development of the battery technology, in addition to improving the performance of a battery, a safety problem is also a non-negligible problem. If the safety problem of the battery cannot be ensured, the battery cannot be used. Therefore, how to improve the performance of the battery and ensure the safety of the battery has become a particularly important problem in the development of the battery technology.

### SUMMARY

Embodiments of the present application provide a battery cell, a battery, and a power consuming device, to improve the reliability of the battery cell.

According to a first aspect, a battery cell is provided. The battery cell includes an electrode assembly and a case. The electrode assembly includes a negative electrode plate. The negative electrode plate includes a negative electrode active material with a metal ion reversely deintercalated and intercalated. The negative electrode active material includes a silicon-based material. The case is configured to accommodate the electrode assembly. At least a portion of regions of the case has a yield strength of Re at a temperature of 25°C, where Re satisfies: 140 MPa≤Re≤1000 MPa.

Therefore, in the battery cell according to this embodiment of the present application, the silicon-based material is disposed on the negative electrode plate, so that more metal ions may be accommodated, and the energy density of the battery cell can be effectively increased. In addition, when the negative electrode active material of the negative electrode plate has the silicon-based material, an amount of deformation of the electrode assembly in the battery cell during use may be increased. Particularly, during the charging of the battery cell, intercalation of the metal ion into the silicon-based material of the negative electrode plate may cause volume expansion of the electrode assembly, thereby increasing pressure of the electrode assembly on the case of the battery cell. Therefore, by increasing the yield strength Re of at least a portion of regions of the case at the room temperature of 25°C, the deformation capability of the case can be improved, thereby increasing the structural stability of the battery cell and prolonging the service life of the battery cell. During the charging and discharging of the battery cell, when the volume expansion and the volume reduction are cyclically performed on the electrode assembly, the yield strength Re of at least a portion of regions of the case at the room temperature is increased, and a maximum extrusion force borne by the case can be increased. When a limit of the yield strength of the case is not exceeded, the case is not prone to damage, and the deformed case can be recovered, thereby prolonging the service life of the case. However, the yield strength Re of at least a portion of regions of the case at the room temperature should not be excessively large, to reduce the selection difficulty and processing difficulty of the material of the case, reduce costs, and facilitate processing.

In some embodiments, in the negative electrode active material, the mass ratio of the silicon-based material is g, where g and Re satisfy: 2%<g<40% and 140 MPa<Re<600 MPa.

In some embodiments, the material of at least a portion of regions of the case includes carbon steel or stainless steel, where g and Re satisfy: 4.5%≤g≤40% and 170 MPa≤Re<600 MPa.

In some embodiments, g and Re satisfy: 8%≤g≤40% and 180 MPa≤Re<600 MPa.

In some embodiments, g and Re satisfy: 10%≤g≤40% and 190 MPa≤Re<600 MPa.

In some embodiments, g and Re satisfy: 15%≤g≤40% and 200 MPa≤Re<600 MPa.

In some embodiments, g and Re satisfy: 20%≤g≤40% and 210 MPa≤Re<600 MPa.

The foregoing materials not only facilitate processing, but also satisfy a design requirement. Specifically, the addition of the silicon-based material to the negative electrode active material of the negative electrode plate can effectively improve the energy density of the battery cell because the silicon-based material may accommodate more metal ions than another element, for example, the capacity of the silicon-based material is approximately ten times that of graphite. Also, the mass ratio g of the silicon-based material should not be set to be excessively large. Otherwise, the processing difficulty of the electrode assembly is increased. In addition, an amount of deformation of the electrode assembly in the battery cell during use may be increased. Particularly, during the charging of the battery cell, intercalation of the metal ion into the silicon-based material of the negative electrode plate may cause volume expansion of the electrode assembly, thereby increasing pressure of the electrode assembly on the case of the battery cell. Further, the processing difficulty of the battery cell is increased. Therefore, the yield strength Re of at least a portion of regions of the case at the room temperature may be properly increased, to improve the deformation capability of the portion of the case, to resist expansion of the electrode assembly, so that the portion of the case is not prone to breaking. In addition, if an expansion amount of the electrode assembly is reduced, the deformed case can be recovered without exceeding a limit of the yield strength of the case, thereby increasing the structural stability and service life of the battery cell. In addition, the yield strength Re of at least a portion of regions of the case at the room temperature is controlled not to be excessively large, to reduce the selection difficulty and processing difficulty of the material of the case, reduce costs, and facilitate processing.

In some embodiments, the silicon-based material includes at least one of elemental silicon, a silicon oxide, a silicon-carbon composite, a silicon-nitrogen composite, a silicon alloy, or a silicon oxycarbide composite, to facilitate implementation.

In some embodiments, the case includes a weld. At least a portion of regions of the case includes a region within a preset distance from the case to the weld. The preset distance is L, where L satisfies: L=10 mm. When the negative electrode active material of the negative electrode plate of the electrode assembly includes a silicon-based material, an amount of deformation of the electrode assembly in the battery cell during use is increased because the silicon-based material may accommodate more metal ions, causing volume expansion of the electrode assembly, and further increasing pressure of the electrode assembly on the case of the battery cell. Under the same conditions, the structural strength of a region of the case close to the weld is small relative to the structural strength of another region of the case. Therefore, the region of the case close to the weld is more prone to breaking during the use of the battery cell. Therefore, the region within the preset distance L from the weld is set to satisfy a requirement on the yield strength Re at the room temperature, so that the deformation capability of the region of the case close to the weld can be improved, and the region of the case is not prone to breaking, thereby increasing the structural stability and service life of the battery cell.

In some embodiments, at least a portion of regions of the case includes all walls of the case. When the negative electrode active material of the negative electrode plate of the electrode assembly includes a silicon-based material, an amount of deformation of the electrode assembly in the battery cell during use is increased because the silicon-based material may accommodate more metal ions, causing volume expansion of the electrode assembly, and further increasing pressure of the electrode assembly on the case of the battery cell. Therefore, when all regions of the case are set to satisfy a requirement on the yield strength Re at a room temperature, the overall deformation capability of the case can be improved, and an extrusion force of the electrode assembly inside on the case in all directions can be further limited, so that the strengths of portions of the case are balanced, and the partial weak region is not prone to breaking, thereby increasing the structural stability and service life of the battery cell.

In some embodiments, the case is in the shape of a cylinder or a polygonal prism, to facilitate processing.

In some embodiments, at least a portion of regions of the case has a tensile strength of Rm at a temperature of 25°C, where Rm satisfies: 250 MPa≤Rm≤2000 MPa. The silicon-based material is disposed on the negative electrode plate, so that more metal ions may be accommodated, and the energy density of the battery cell can be effectively increased. In addition, when the negative electrode active material of the negative electrode plate has the silicon-based material, an amount of deformation of the electrode assembly in the battery cell during use may be increased. Particularly, during the charging of the battery cell, intercalation of the metal ion into the silicon-based material of the negative electrode plate may cause volume expansion of the electrode assembly, thereby increasing pressure of the electrode assembly on the case of the battery cell. Therefore, by increasing the tensile strength Rm of at least a portion of regions of the case at a room temperature of 25°C, the deformation capability of the case can be improved, so that the case is not prone to breaking during the use of the battery cell, thereby improving the structural stability of the battery cell, and further prolonging the service life of the battery cell. However, the tensile strength Rm of at least a portion of regions of the case at the room temperature of 25°C should not be excessively large, to reduce the selection difficulty and processing difficulty of the material of the case, reduce costs, and facilitate processing.

In some embodiments, the electrode assembly further includes a positive electrode plate. The positive electrode plate includes a positive electrode active material with a metal ion reversely deintercalated and intercalated. The positive electrode active material includes a nickel-containing compound. At least a portion of regions of the case has a melting point of p, where p satisfies: 1200°C≤p≤2000°C. When the positive electrode active material of the positive electrode plate includes the nickel-containing compound, the energy density and the long cycle life of the battery cell can be effectively increased, and gases generated during the use of the battery cell can also be increased. Especially when thermal runaway occurs in the battery cell, the internal temperature of the battery cell rapidly increases, and a large quantity of gases are generated. Therefore, by properly increasing the melting point p of at least a portion of regions of the case, the case is not prone to melting, thereby reducing the possibility of exploding the battery cell, and further reducing a risk of thermal runaway from adjacent battery cells, to improve the reliability of the battery. However, the melting point p of the case should not be excessively large, to reduce the selection difficulty and processing difficulty of the material of the case, reduce costs, and facilitate processing.

In some embodiments, the electrode assembly further includes a positive electrode plate. The positive electrode plate includes a positive electrode active material with a metal ion reversely deintercalated and intercalated. The positive electrode active material includes a nickel-containing compound. At least a portion of regions of the case has a tensile strength of Rn at a temperature of 500°C, where Rn satisfies: 100 MPa≤Rn≤1200 MPa. When the positive electrode active material of the positive electrode plate includes the nickel-containing compound, the energy density and the long cycle life of the battery cell can be effectively increased, and gases generated during the use of the battery cell can also be increased. Especially when thermal runaway occurs in the battery cell, the internal temperature of the battery cell rapidly increases, and a large quantity of gases are generated. Therefore, by properly increasing the tensile strength Rn of at least a portion of regions of the case at a high temperature of 500°C, the deformation capability of the portion of the case when thermal runaway occurs in the battery cell, so that the case is not prone to quick damage and explosion, thereby further reducing a risk of thermal runaway from adjacent battery cells, to improve the reliability of the battery. However, the tensile strength Rn of at least a portion of regions of the case at the high temperature of 500°C should not be excessively large, to reduce costs and facilitate processing.

In some embodiments, at least a portion of regions of the case has a tensile strength of Rm at a temperature of 25°C. At least a portion of the case includes a third case wall. The third case wall has an average thickness of T, where Rm and T satisfy: 250 MPa≤Rm≤2000 MPa, 0.05 mm≤T≤0.5 mm, and 60 mm·MPa≤T×Rm≤500 mm·MPa. By increasing the tensile strength Rm of at least a portion of regions of the case at a room temperature of 25°C, the deformation capability of the case can be improved, so that the case is not prone to breaking during the use of the battery cell, thereby increasing the structural stability and service life of the battery cell. However, the tensile strength Rm of at least a portion of regions of the case at the room temperature should not be excessively large, to reduce the selection difficulty and processing difficulty of the material of the case, reduce costs, and facilitate processing. However, when the average thickness T of the third case wall of the case is small, the structural strength of the third case wall may be increased by improving the tensile strength Rm of the third case wall of the case at a room temperature of 25°C. In this way, the energy density of the battery cell can be improved, and the structural strength and stability of the battery cell can be improved. On the contrary, when the average thickness T of the third case wall of the case is large, the structural strength of the case can be improved, and the tensile strength Rm of the third case wall of the case at the room temperature can be properly reduced, to reduce difficulty in selecting a material of the case, thereby reducing the processing difficulty and processing costs of the battery cell. In addition, T×Rm represents the stiffness of the third case wall. It is limited that the stiffness of the third case wall cannot be excessively small or excessively large, so that the third case wall not only has a good deformation capability, but also can reduce the processing difficulty and reduce costs.

In some embodiments, the capacity of the battery cell is C. At least a portion of regions of the case has a tensile strength of Rm at a temperature of 25°C, where Rm and C satisfy: 250 MPa≤Rm≤2000 MPa and 25 Ah≤C≤550 Ah. On the one hand, the capacity C of the battery cell is increased, so that the capacity density of the battery including a plurality of such battery cells can be increased. Alternatively, when the total capacity of the battery is not changed, if the capacity C of a single battery cell is increased, the number of disposed battery cells can be reduced. Correspondingly, the quantity of electrical connections between the plurality of battery cells can also be reduced, thereby reducing a probability that the electrical connection fails, thereby helping improve the reliability of the battery. In addition, when the capacity C of the battery cell is large, a requirement of a high-capacity battery cell for the structural strength of the case may further be satisfied by increasing the tensile strength Rm of at least a portion of regions of the case at a room temperature of 25°C, thereby increasing the reliability and service life of the battery cell. On the other hand, if the battery cell has a large capacity, a reaction inside is exacerbated, thereby increasing a requirement on the structural strength of the case. Therefore, the capacity C of the battery cell should not be excessively large, to limit a design requirement on the structural strength of the case. In this way, the material selection difficulty and processing difficulty of the battery cell can be reduced, thereby reducing costs and improving processing efficiency.

In some embodiments, the case has an opening. The case includes a first case wall opposite to the opening and at least two second case walls. The first case wall and the second case walls intersect with each other. A transition region is provided between two adjacent second case walls in the at least two second case walls. A maximum thickness T1 of the transition region and a maximum thickness T0 of a thicker second case wall in the two second case walls satisfy: T1>T0.

In this embodiment, the transition region is disposed between two adjacent second case walls, so that stress concentration between the two adjacent second case walls can be reduced, and a structural failure risk caused by the stress concentration can be reduced. In addition, the maximum thickness T1 of the transition region is set to be greater than the maximum thickness T0 of the thicker second case wall in the two adjacent second case walls. The thickened transition region can improve the structural strength of the case, and is beneficial to resolving the problem of deformation of the case during the production and assembly of the battery cell, and the problem of deformation of the case due to expansion of generated gas during the use of the battery cell.

In some embodiments, the case is of an integrally formed structure. The case has an opening. The case includes a first case wall opposite to the opening and at least two second case walls. The first case wall and the second case walls intersect with each other. Two second case walls in the at least two second case walls are connected by using a first rounded corner. A depth H of the case and an inner diameter R1 of the first rounded corner satisfy: 2.5 mm≤R1≤20 mm and 50 mm<H≤250 mm, so as to resolve, as much as possible, the problem of cracking of the case caused by stress during integral forming without affecting the energy density of the battery cell, thereby reducing the forming difficulty of the case.

In some embodiments, the case is of an integrally formed structure. The case has an opening. The case includes a first case wall opposite to the opening and at least two second case walls. The first case wall and the second case walls intersect with each other. Two second case walls in the at least two second case walls are connected by using a first rounded corner. A yield strength Re of the case at a temperature of 25°C and an inner diameter R1 of the first rounded corner satisfy: 140 MPa≤Re≤1000 Mpa and 2.5 mm≤R1≤20 mm.

In this embodiment, the case is manufactured by using a material having a yield strength Re satisfying 140 MPa≤Re≤1000 Mpa, so that the wall thickness of the case can be reduced without reducing the strength of the case, thereby improving the capacity space of a battery cell. In addition, the inner diameter R1 of the first rounded corner between the adjacent second case walls is set to satisfy 2.5 mm≤R1≤20 mm, so as to reduce, as much as possible, a risk of cracking of the case caused by stress during integral forming, and reduce the forming difficulty of the case.

In some embodiments, the case has an opening. The case includes a first case wall opposite to the opening and at least one second case wall. The first case wall and the second case wall intersect with each other. The first case wall and the second case wall are connected by using a second rounded corner. An inner diameter r1 of the second rounded corner and a minimum thickness T2 of a thinner second case wall in the at least two second case walls satisfy: 2.0≤r1/T2≤30. A ratio of the inner diameter r1 of the second rounded corner between the first case wall and the second case wall to the minimum thickness T2 of the second case wall having the minimum wall thickness is set to [2.0, 30], which is beneficial to balancing the processing difficulty of the case with the space capacity and strength of the battery cell.

In some embodiments, the case includes a first case portion and a second case portion. An opening is formed in the first case portion. The first case portion includes a first wall opposite to the opening and a second wall connected to the first wall. The first wall and the second wall are integrally formed. The second case portion is fixedly connected to the second wall. In a depth direction of the first case portion, at least a portion of regions of the case is jointly formed by the first case portion and the second case portion. Compared with a technical solution of directly integrally forming the case, the manner of preparing the case can reduce the risk of cracking of the case during integral stretch forming.

In some embodiments, the battery cell is applied to a battery. The electrode assembly includes a first tab and a second tab having opposite polarity. The case includes a barrel and a cover connected to the barrel. The cover and the barrel are of an integrally formed structure. The barrel is disposed around an outer periphery of the electrode assembly. The cover is provided with an electrode lead-out hole. At least a portion of the cover is configured to be electrically connected to a first connection member of the battery and the first tab. The battery cell further includes: a second electrode terminal, configured to be electrically connected to a second connection member of the battery and the second tab. The second electrode terminal is insulated from the cover and is mounted in the electrode lead-out hole. One of the cover and the second electrode terminal is a positive output electrode of the battery cell, and the other is a negative output electrode of the battery cell. The cover and the second electrode terminal are used as output electrodes, so that the structure of the battery cell can be simplified, and the overcurrent capability of the battery cell can be ensured. The cover and the second electrode terminal are located at the same end of the battery cell. In this way, the first connection member and the second connection member may be assembled to the same side of the battery cell. In this way, the assembly process can be simplified, and the efficiency of assembling a plurality of battery cells into a group can be improved.

In some embodiments, the second tab is disposed at an end of the electrode assembly facing the cover. The first tab is disposed at an end of the electrode assembly facing away from the cover. The barrel is configured to connect the first tab to the cover, so that the first tab is electrically connected to the cover. In this embodiment of the present application, the first tab and the second tab are disposed at two ends of the electrode assembly, thereby reducing a risk of conduction of the first tab and the second tab, and increasing an overcurrent area of the first tab and an overcurrent area of the second tab.

In some embodiments, the electrode assembly includes a first tab. The case includes a barrel and a cover connected to the barrel. The barrel is disposed around an outer periphery of the electrode assembly. The cover includes the first electrode terminal. The first tab is electrically connected to the first electrode terminal by using the barrel. The case is of a multi-layer structure. The multi-layer structure has different resistivity. The electrode assembly includes a first tab. The first tab is electrically connected to the first electrode terminal of the battery cell by using the case. The case is of a multi-layer structure. The multi-layer structure has different resistivity. The first tab is electrically connected to the first electrode terminal by using the barrel, so that the structure of the battery cell can be simplified. The case is of a multi-layer structure, and the multi-layer structure has different resistivity. Therefore, an overcurrent capability of the battery cell can be improved by using a layer with a low resistivity, and the structural strength of the case can be improved by using a layer with a high resistivity. This not only can improve the performance of the battery cell, but also can improve the structural strength of the battery cell, thereby prolonging the service life of the battery cell.

In some embodiments, the case is of a multi-layer structure. A material of an outermost case of the case includes at least one of the following: aluminum, an aluminum alloy, copper, a copper alloy, and chromium. When the material of the outermost case contains aluminum, the aluminum may be oxidized into a dense aluminum oxide, which can protect against corrosion. When the material of the outermost case contains copper, the copper may be oxidized into a copper oxide, i.e., patina, which can protect against corrosion. When the material of the outermost case contains chromium, the chromium is oxidized to a chromium oxide, which can protect against corrosion. Therefore, when the material of the outermost case is a material capable of protecting against corrosion, another case layer located on an inner side of the outermost case can be protected by using the outermost case, thereby improving the structural stability of the case, and prolonging the service life of the case.

According to a second aspect, a battery is provided, including a plurality of battery cells. The battery cell is the battery cell according to the first aspect or any embodiment in the first aspect.

According to a third aspect, a power consuming device is provided, including a battery. The battery includes a battery cell according to the first aspect or any embodiment in the first aspect. The battery is configured to supply power to the power consuming device.

In some embodiments, the power consuming device is a vehicle, a ship, or a spacecraft.

### BRIEF DESCRIPTION OF THE DRAWINGS

FIG. 1 is a schematic diagram of a vehicle according to an embodiment of the present application;
FIG. 2 is an exploded schematic structural diagram of a battery according to an embodiment of the present application;
FIG. 3 is a schematic structural diagram of a battery cell according to an embodiment of the present application;
FIG. 4 is an exploded schematic structural diagram of a battery cell according to an embodiment of the present application;
FIG. 5 is a cross-sectional schematic diagram of an electrode assembly according to an embodiment of the present application;
FIG. 6 is a cross-sectional schematic diagram of a negative electrode plate or a positive electrode plate of an electrode assembly according to an embodiment of the present application;
FIG. 7 is a schematic structural diagram of a clamp for a cyclic charging fatigue test according to an embodiment of the present application;
FIG. 8 is a side-view schematic structural diagram of a case of a battery cell according to an embodiment of the present application;
FIG. 9 is a cross-sectional schematic structural diagram of a case of a battery cell according to an embodiment of the present application;
FIG. 10 is an exploded schematic diagram of a battery cell according to an embodiment of the present application;
FIG. 11 is a cross-sectional view of a case according to an embodiment of the present application;
FIG. 12 is a schematic diagram of a transition region of a case according to an embodiment of the present application;
FIG. 13 is a schematic diagram of another transition region of a case according to an embodiment of the present application;
FIG. 14 is a schematic diagram of material flow of a case in an integral forming process according to an embodiment of the present application;
FIG. 15 is a schematic diagram of stress on a case in an integral forming process according to an embodiment of the present application;
FIG. 16 is another cross-sectional view of a case according to an embodiment of the present application;
FIG. 17 is a partially enlarged schematic diagram of a portion B in FIG. 10;
FIG. 18 is an exploded schematic diagram of a case according to an embodiment of the present application;
FIG. 19 is a schematic structural diagram of a second case portion according to an embodiment of the present application;
FIG. 20 is another schematic structural diagram of a second case portion according to an embodiment of the present application;
FIG. 21 is another exploded schematic diagram of a case according to an embodiment of the present application;
FIG. 22 is a schematic cross-sectional diagram of a case according to an embodiment of the present application;
FIG. 23 is a partially enlarged structural diagram of a case according to an embodiment of the present application;
FIG. 24 is a partial cross-sectional schematic structural diagram of a battery according to another embodiment of the present application;
FIG. 25 is an exploded schematic structural diagram of a battery cell according to another embodiment of the present application;
FIG. 26 is a cross-sectional schematic structural diagram of a battery cell according to another embodiment of the present application;
FIG. 27 is a partial cross-sectional schematic structural diagram of a battery according to another embodiment of the present application; and
FIG. 28 is another partial cross-sectional schematic structural diagram of a battery according to another embodiment of the present application.

In the accompanying drawings, the figures are not drawn to actual scale.

### DETAILED DESCRIPTION

The following describes technical solutions in embodiments of the present application with reference to the accompanying drawings.

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some embodiments of the present application rather than all of the embodiments. All other embodiments obtained by a person of ordinary skill in the art based on the embodiments of the present application without making creative efforts shall fall within the protection scope of the present application.

Unless otherwise defined, all technical and scientific terms used in the present application have same meanings as commonly understood by a person skilled in the technical field of the present application. The terms used in the specification of the present application are merely for an objective of describing specific embodiments, and are not intended to limit the present application. The terms "include", "have" and any variations thereof in the specification and claims of the present application and in the foregoing descriptions of the accompanying drawings are intended to cover non-exclusive inclusion. In the specification, claims, or accompanying drawings of the present application, the terms "first", "second", and so on are intended to distinguish different objects but do not describe a specific order or primary and secondary relation.

Reference to "an embodiment" in the present application means that a particular feature, structure or characteristic described in combination with the embodiment may be included in at least one embodiment of the present application. The appearances of the phrase in various places in the specification are not necessarily all referring to the same embodiment, nor a separate or alternative embodiment that is mutually exclusive of other embodiments. It is explicitly and implicitly understood by a person skilled in the art that the embodiments described in the present application may be combined with another embodiment.

In the descriptions of the present application, it should be noted that unless otherwise explicitly specified or defined, the terms such as "mount", "connect", "connection", and "attach" should be understood in a broad sense. For example, the connection may be a fixed connection, a detachable connection, or an integral connection. Alternatively, the connection may be a direct connection, an indirect connection through an intermediary, or internal communication between two components. A person of ordinary skill in the art may understand specific meanings of the terms in the present application according to specific situations.

In the present application, the term "and/or" is merely an association to describe associated objects. It may mean that there are three relationships, such as A and/or B, indicating that A exists alone, A and B exist at the same time, and B exists alone. In addition, in the present application, the character "/" usually indicates an "or" relationship between the associated objects.

In the embodiments of the present application, same reference numerals represent same components, and for brevity, detailed descriptions of the same components are omitted in different embodiments. It will be understood that dimensions, such as the thickness, the length, and the width of various components in the embodiments of the present application and the entire thickness, length, and the width of an integrated apparatus shown in the accompanying drawings are merely exemplary descriptions, and should not be construed as any limitation to the present application.

In the present application, the term "a plurality of" means two or more (including two). Similarly, "a plurality of groups" means two or more groups (including two groups), and "a plurality of pieces" means two or more pieces (including two pieces).

In the embodiments of the present application, a battery cell may be a secondary battery. The secondary battery is referred to as a battery cell that may be continuously used by activating an active material in a charging manner after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of the present application.

In some embodiments, the battery cell in this embodiment of the present application may be a metal battery. Specifically, the metal battery may include a lithium metal secondary battery, a sodium metal battery, a magnesium metal battery, or the like. This is not limited in this embodiment of the present application.

The battery cell generally includes an electrode assembly. The electrode assembly includes a positive electrode, a negative electrode, and a spacer. During charging and discharging of the battery cell, active ions (e.g., lithium ions) are intercalated and deintercalated back and forth between the positive electrode and the negative electrode. The spacer is disposed between the positive electrode and the negative electrode, may prevent a short circuit between the positive and negative electrodes, and may allow the active ions to pass through.

In some embodiments, the positive electrode may be a positive electrode plate. The positive electrode plate may include a positive electrode current collector and a positive electrode active material disposed on at least one surface of the positive electrode current collector.

As an example, the positive electrode current collector has two surfaces opposite to each other in a thickness direction of the positive electrode current collector. The positive electrode active material is disposed on either or both of the two opposite surfaces of the positive electrode current collector.

As an example, the positive electrode current collector may be a metal foil, metal foam, or a composite current collector. For example, silver surface-treated aluminum or stainless steel, stainless steel, copper, aluminum, nickel, a carbon electrode, carbon, nickel, titanium, or the like may be used as the metal foil. The metal foam may be nickel foam, copper foam, aluminum foam, alloy foam, carbon foam, or the like. The composite current collector may include a high molecular material substrate and a metal layer. The composite current collector may be formed by forming a metal material (aluminum, an aluminum alloy, nickel, a nickel alloy, titanium, a titanium alloy, silver, a silver alloy, or the like) on a polymer material substrate (e.g., a substrate of polypropylene, polyethylene terephthalate, polybutylene terephthalate, polystyrene, or polyethylene).

By way of example, the positive electrode active material may include at least one of the following materials: a lithium-containing phosphate, a lithium transition metal oxide, and respective modified compounds thereof. However, the present application is not limited to such materials, and may alternatively use another conventional material that may be used as a positive electrode active material for batteries. Only one or a combination of two or more of these positive electrode active materials may be used. An example of the lithium-containing phosphates may include, but is not limited to, at least one of lithium iron phosphate (e.g., LiFePO₄ (also referred to as LFP for short)), a composite material of lithium iron phosphate and carbon, lithium manganese phosphate (e.g., LiMnPO4), a composite material of lithium manganese phosphate and carbon, lithium iron manganese phosphate, and a composite material of lithium manganese iron phosphate and carbon.

In some embodiments, the negative electrode may be a negative electrode plate, and the negative electrode plate may include a negative electrode current collector and a negative electrode active material arranged on at least one surface of the negative electrode current collector.

As an example, the negative electrode current collector has two surfaces opposite to each other in a thickness direction of the negative electrode current collector. The negative electrode active material is disposed on either or both of the two opposite surfaces of the negative electrode current collector.

As an example, the negative electrode current collector may be a metal foil, metal foam, or a composite current collector. For example, silver surface-treated aluminum or stainless steel, stainless steel, copper, aluminum, nickel, a carbon electrode, used carbon, nickel, titanium, or the like may be used as the metal foil. The composite current collector may include a high molecular material substrate and a metal layer. The metal foam may be nickel foam, copper foam, aluminum foam, alloy foam, carbon foam, or the like. The composite current collector may be formed by forming a metal material (copper, a copper alloy, nickel, a nickel alloy, titanium, a titanium alloy, silver, a silver alloy, or the like) on a polymer material substrate (e.g., a substrate of polypropylene, polyethylene terephthalate, polybutylene terephthalate, polystyrene, or polyethylene).

In some embodiments, the electrode assembly further includes a spacer. The spacer is disposed between the positive electrode and the negative electrode.

In some embodiments, the spacer is a separator. A type of the separator is not particularly limited in the present application, and any well-known separator with a porous structure having good chemical stability and mechanical stability may be selected.

As an example, a main material of the separator may be selected from at least one of glass fiber, non-woven fabric, polyethylene, polypropylene, polyvinylidene fluoride, and ceramic.

In some embodiments, the spacer is a solid electrolyte. The solid electrolyte is disposed between the positive electrode and the negative electrode, and is capable of transmitting ions and isolating the positive and negative electrodes.

In some embodiments, the battery cell further includes an electrolyte. The electrolyte is capable of conducting ions between the positive and negative electrodes. A type of the electrolyte is not specifically limited in the present application, and may be selected according to requirements. The electrolyte may be liquid, gelled, or solid.

In some embodiments, the electrode assembly is provided with a tab. The tab may output a current from the electrode assembly. The tab includes a positive tab and a negative tab.

In some embodiments, the battery cell may include a shell. The shell is configured to encapsulate the electrode assembly, the electrolyte, and other components. The shell may be a steel shell, an aluminum shell, a plastic shell (e.g., polypropylene), a composite metal shell (e.g., a composite copper-aluminum shell), an aluminum-plastic film, or the like. The shell includes a case and a cover plate.

A battery mentioned in embodiments of the present application may be a single physical module including one or more battery cells to provide a higher voltage and a higher capacity. When there are a plurality of battery cells, the plurality of battery cells are connected in series, in parallel, or in series-parallel by using a bus component.

In some embodiments, the battery may be a battery pack. The battery pack includes a box and a battery cell, and the battery cell or the battery module is accommodated in the box.

In some embodiments, the box may be used as a part of a chassis structure of a vehicle. For example, a portion of the box may become at least a portion of a floor of the vehicle. Alternatively, a portion of the box may become at least a portion of a cross beam and a longitudinal beam of the vehicle.

In some embodiments, the battery may be located at an energy storage device. The energy storage device includes an energy storage container, an energy storage electric cabinet, and the like.

Design factors in many aspects need to be all considered for the development of the battery technology, such as an energy density, a cycle life, a discharge capacity, a charge-discharge rate, and other performance parameters. In addition, the safety and stability of the battery also need to be considered. For example, energy of the battery cell can be effectively improved by properly selecting the positive electrode active material of the positive electrode plate or the negative electrode active material of the negative electrode plate of the electrode assembly, thereby improving energy of the battery. Using the negative electrode active material of the negative electrode plate of the electrode assembly as an example, the addition of a silicon-based material to the negative electrode active material can improve the energy of the battery cell. However, during the cyclic charging and discharging of the battery cell, expansion of the electrode assembly also increases, which easily increases an amount of deformation of the case of the battery cell. If the strength of the case is insufficient, the case may be broken, affecting the life of the battery cell.

Therefore, embodiments of the present application provide a battery cell, a battery, and a power consuming device, to resolve the foregoing problems. The battery cell in this embodiment of the present application includes an electrode assembly and a case for accommodating the electrode assembly. The electrode assembly includes a negative electrode plate. The negative electrode plate includes a negative electrode active material with a metal ion reversely deintercalated and intercalated. The negative electrode active material includes a silicon-based material. At least a portion of regions of the case has a yield strength of Re at a temperature of 25°C, where Re satisfies: 140 MPa≤Re≤1000 MPa. The silicon-based material is disposed on the negative electrode plate, so that more metal ions may be accommodated, and the energy density of the battery cell can be effectively increased. In addition, when the negative electrode active material of the negative electrode plate has the silicon-based material, an amount of deformation of the electrode assembly in the battery cell during use may be increased. Particularly, during the charging of the battery cell, intercalation of the metal ion into the silicon-based material of the negative electrode plate may cause volume expansion of the electrode assembly, thereby increasing pressure of the electrode assembly on the case of the battery cell. Therefore, by increasing the yield strength Re of at least a portion of regions of the case at the room temperature of 25°C, the deformation capability of the case can be improved, thereby increasing the structural stability of the battery cell and prolonging the service life of the battery cell. During the charging and discharging of the battery cell, when the volume expansion and the volume reduction are cyclically performed on the electrode assembly, the yield strength Re of at least a portion of regions of the case at the room temperature is increased, and a maximum extrusion force borne by the case can be increased. When a limit of the yield strength of the case is not exceeded, the case is not prone to damage, and the deformed case can be recovered, thereby prolonging the service life of the case. However, the yield strength Re of at least a portion of regions of the case at the room temperature should not be excessively large, to reduce the selection difficulty and processing difficulty of the material of the case, reduce costs, and facilitate processing.

The technical solutions described in this embodiment of the present application are all applicable to various power consuming devices using a battery.

The power consuming device may be a vehicle, a mobile phone, a portable device, a notebook computer, a ship, a spacecraft, an electric toy, an electric tool, or the like. The vehicle may be a fuel powered vehicle, a gas powered vehicle, or a new energy vehicle. The new energy vehicle may be a pure electric vehicle, a hybrid electric vehicle, or an extended range vehicle, or the like. The spacecraft includes an airplane, a rocket, a space shuttle, a spaceship, and the like. The electric toy includes a fixed or mobile electronic toy, such as a game console, an electric vehicle toy, an electric ship toy, an electric aircraft toy, and the like. The electric tool includes a metal-cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, an electric planer, and the like. The foregoing power consuming device is not specifically limited in this embodiment of the present application.

For ease of description, the following embodiment is described by using an example in which the power consuming device is a vehicle.

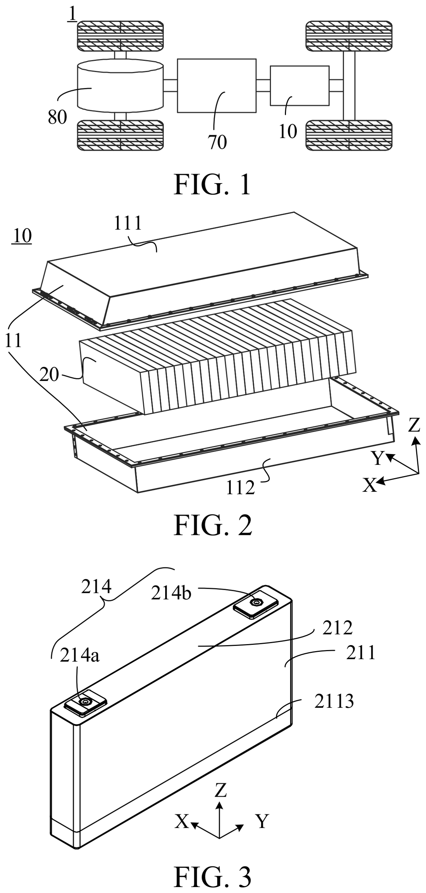

For example, FIG. 1 shows a schematic structural diagram of a vehicle 1 according to an embodiment of the present application. The vehicle 1 may be a fuel powered vehicle, a gas powered vehicle, or a new energy vehicle. The new energy vehicle may be a pure electric vehicle, a hybrid electric vehicle, or an extended range vehicle, or the like. A motor 80, a controller 70 and a battery 10 may be disposed inside the vehicle 1. The controller 70 is configured to control the battery 10 to supply power to the motor 80. For example, the battery 10 may be disposed on the bottom, in the front, or in the rear of the vehicle 1. The battery 10 may be configured to supply power to the vehicle 1. For example, the battery 10 may be used as an operating power supply of the vehicle 1 and used for a circuit system of the vehicle 1, for example, may be used for operating electricity requirements during starting, navigation, and operation of the vehicle 1. In another embodiment of the present application, the battery 10 may be used not only as the operating power supply of the vehicle 1, but also as a driving power supply of the vehicle 1, to alternatively or partially replace fuel or natural gas to provide driving power for the vehicle 1.

To satisfy different use power demands, the battery may include a plurality of battery cells. The plurality of battery cells may be connected in series, in parallel, or in series-parallel. The series-parallel is a mixture of serial connection and parallel connection. The battery may alternatively be referred to as a battery pack. For example, the plurality of battery cells may be first connected in series, in parallel, or in series-parallel to form battery modules. A plurality of battery modules are then connected in series, parallel, or series-parallel to form the battery. To be specific, the plurality of battery cells may directly form the battery, or may first form the battery modules, which then form the battery.

FIG. 2 shows a schematic structural diagram of a battery 10 according to an embodiment of the present application. The battery 10 may include a plurality of battery cells 20. The battery 10 may further include a box 11. The box 11 has a hollow structure inside, and the plurality of battery cells 20 are accommodated in the box 11. FIG. 2 shows a possible embodiment of a box 11 according to an embodiment of the present application. As shown in FIG. 2, the box 11 may include two box portions, which are respectively referred to as a first box portion 111 and a second box portion 112 herein. The first box portion 111 and the second box portion 112 are fastened together. Shapes of the first box portion 111 and the second box portion 112 may be determined according to a combined shape of the plurality of battery cells 20. At least one of the first box portion 111 and the second box portion 112 has an opening. For example, as shown in FIG. 2, the first box portion 111 and the second box portion 112 may each be a hollow cuboid and may separately have only one face serving as an open face. The opening of the first box portion 111 is opposite to the opening of the second box portion 112, and the first box portion 111 and the second box portion 112 are fastened to form the box 11 having a closed cavity. The cavity may be configured to accommodate the plurality of battery cells 20. After being connected in series, in parallel, or in series-parallel, the plurality of battery cells 20 are placed in the box 11 formed by fastening the first box portion 111 and the second box portion 112.

For another example, different from that shown in FIG. 2, only one of the first box portion 111 and the second box portion 112 may be a hollow cuboid having an opening, and the other portion is plate-shaped, to cover the opening. For example, the second box portion 112 is a hollow cuboid, only one face is an open face, and the first box portion 111 is plate-shaped. The first box portion 111 covers the opening of the second box portion 112 to form the box 11 having a closed cavity. This is not limited in this embodiment of the present application.

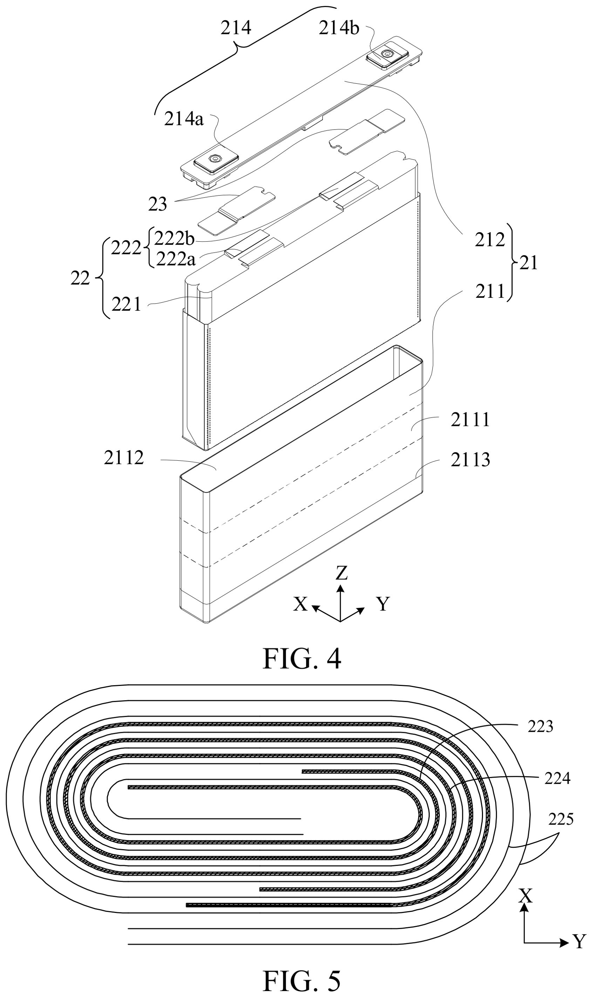

FIG. 3 shows a schematic structural diagram of a battery cell 20 according to an embodiment of the present application. For example, the battery cell 20 shown in FIG. 3 may be any battery cell 20 in the battery 10 shown in FIG. 2. FIG. 4 shows a partially exploded schematic structural diagram of a battery cell 20 according to an embodiment of the present application. For example, FIG. 4 may be a partially exploded schematic structural diagram of the battery cell 20 shown in FIG. 3.

In this embodiment of the present application, as shown in FIG. 3 and FIG. 4, the battery cell 20 may include an electrode assembly 22 and a case 211. Specifically, the electrode assembly 22 includes a negative electrode plate 224. The negative electrode plate 224 includes a negative electrode active material with a metal ion reversely deintercalated and intercalated. The negative electrode active material includes a silicon-based material. The case 211 is configured to accommodate the electrode assembly 22. At least a portion of regions of the case 211 has a yield strength of Re at a temperature of 25°C, where Re satisfies: 140 MPa≤Re≤1000 MPa.

As shown in FIG. 3 and FIG. 4, the battery cell 20 in this embodiment of the present application may include a shell 21. Specifically, the shell 21 may include a case 211. The case 211 is of a hollow structure having at least one opening. Further, the battery cell 20 may further include a cover plate 212. For example, the shell 21 includes a cover plate 212. The cover plate 212 is configured to cover the opening of the case 211, so that the electrode assembly 22 can be accommodated in the shell 21.

It should be understood that in this embodiment of the present application, the case 211 is a component for accommodating the electrode assembly 22, and the case 211 may be of a hollow structure having openings formed at one or more ends. For example, if the case 211 is of a hollow structure having an opening formed at one end, there may be one cover plate 212 correspondingly. If the case 211 is of a hollow structure having openings formed at two opposite ends, there may be two cover plates 212, and the two cover plates 212 respectively cover the openings at the two ends of the case 211.

It should be understood that the battery cell 20 in this embodiment of the present application may be a cylindrical battery cell, a prismatic battery cell, a pouch cell, or a battery cell of another shape. The prismatic battery cell may include a square battery cell, a blade battery cell, or another polygonal prism battery cell, for example, a hexagonal prism battery cell or an octagonal prism battery cell. This is not limited in this embodiment of the present application.

Corresponding to the battery cells 20 of different shapes, the case 211 of the battery cell 20 may have various shapes. For example, the case 211 is in the shape of a cylinder or a polygonal prism. For example, as shown in FIG. 3 and FIG. 4, in this embodiment of the present application, descriptions are provided mainly by using an example in which the case 211 is of a hollow cuboid structure. In addition, this embodiment of the present application mainly uses an example in which the case 211 is of a hollow structure having an opening formed at one end. However, related descriptions in this embodiment of the present application are also applicable to a battery cell 20 of another shape. For brevity, details are not described herein.

It should be understood that the cover plate 212 in this embodiment of the present application is a component for covering the opening of the case 211, to isolate an internal environment of the battery cell 20 from an external environment. A shape of the cover plate 212 may be adapted to a shape of the case 211. As shown in FIG. 3 and FIG. 4, the case 211 is of a cuboid structure, and the cover plate 212 is of a rectangular plate-shaped structure adapted to the case 211.

In the battery cell 20, the electrode assembly 22 is a component that performs an electro-chemical reaction in the battery cell 20. According to an actual use requirement, there may be one or more electrode assemblies 22 in the case 211. For example, as shown in FIG. 3 and FIG. 4, two electrode assemblies 22 are disposed in the battery cell 20. The electrode assembly 22 may be a cylinder, a cuboid, or the like. If the electrode assembly 22 is of a cylinder structure, the case 211 may also be of a cylinder structure. If the electrode assembly 22 is of a cuboid structure, the case 211 may also be of a cuboid structure.

It should be understood that, as shown in FIG. 3 and FIG. 4, the electrode assembly 22 in this embodiment of the present application may include a tab 222 and an electrode body portion 221. The tab 222 of the electrode assembly 22 may include a positive tab 222a and a negative tab 222b. The positive tab 222a may be formed by stacking portions, not coated with a positive electrode active material, on the positive electrode plate 223. The negative tab 222b may be formed by stacking portions, not coated with a negative electrode active material, on the negative electrode plate 224. The electrode body portion 221 may be formed by stacking or winding the positive electrode plate 223 and the negative electrode plate 224.

The negative electrode active material included in the negative electrode plate 224 in this embodiment of the present application may be flexibly set according to an actual application. For example, the negative electrode active material may include a silicon-based material. When the silicon-based material is added to the negative electrode plate 224, the silicon-based material may accommodate more metal ions, thereby effectively increasing the energy density of the battery cell 20. In addition, an amount of deformation of the electrode assembly 22 in the battery cell 20 during use may be increased. Particularly, during the charging of the battery cell 20, intercalation of the metal ion into the silicon-based material of the negative electrode plate 224 may cause volume expansion of the electrode assembly 22, thereby increasing pressure of the electrode assembly 22 on the case 211 of the battery cell 20.

Therefore, by increasing the yield strength Re of at least a portion of regions of the case 211 at the room temperature, the deformation capability of the case 211 can be improved, thereby increasing the structural stability and service life of the battery cell 20. During the charging and discharging of the battery cell 20, when the volume expansion and the volume reduction are cyclically performed on the electrode assembly 22, the yield strength Re of at least a portion of regions of the case 211 at the room temperature is increased, and a maximum extrusion force borne by the case 211 can be increased. When a limit of the yield strength of the case 211 is not exceeded, the case 211 is not prone to damage, and the deformed case 211 can be recovered, thereby prolonging the service life of the case 211. However, the yield strength Re of at least a portion of regions of the case 211 at the room temperature should not be excessively large, to reduce the selection difficulty and processing difficulty of the material of the case 211, reduce costs, and facilitate processing. For example, it may be generally set that the yield strength Re of at least a portion of regions of the case 211 at the room temperature satisfies: 140 MPa≤Re≤1000 MPa.

It should be understood that, in this embodiment of the present application, a value range of the yield strength Re of at least a portion of regions of the case 211 at the room temperature of 25°C may be adjusted according to an actual application. For example, the value of the yield strength Re at the room temperature may satisfy 140 MPa≤Re≤1000 MPa. For another example, the value of the yield strength Re at the room temperature may satisfy 180 MPa≤Re<600 MPa. On one hand, by increasing the yield strength Re of at least a portion of regions of the case 211 at the room temperature, the deformation capability of the portion of the case 211 can be improved, to resist expansion of the electrode assembly 22, so that the portion of the case 211 is not prone to breaking. In addition, if an expansion amount of the electrode assembly 22 is reduced, the deformed case 211 can be recovered without exceeding a limit of the yield strength of the case 211, thereby increasing the structural stability and service life of the battery cell 20. On the other hand, the yield strength Re of at least a portion of regions of the case 211 at the room temperature is controlled not to be excessively large, to reduce the selection difficulty and processing difficulty of the material of the case 211, reduce costs, and facilitate processing.

Further, it may be generally set that the yield strength Re of at least a portion of regions of the case 211 at the room temperature satisfies: 220 MPa≤Re≤400 MPa. The yield strength Re of at least a portion of regions of the case 211 at the room temperature is not excessively large or not excessively small, thereby improving the deformation capability of the portion of the case 211, to resist expansion of the electrode assembly 22, and facilitating implementation and reducing costs.

In some embodiments, the value of the yield strength Re of at least a portion of regions of the case 211 at the room temperature in this embodiment of the present application may alternatively be set to another value. For example, the value of the yield strength Re at the room temperature may be any one of the following values or between any two of the following values: 140 MPa, 150 MPa, 160 MPa, 180 MPa, 200 MPa, 220 MPa, 250 MPa, 280 MPa, 300 MPa, 330 MPa, 350 MPa, 380 MPa, 400 MPa, 430 MPa, 450 MPa, 480 MPa, 500 MPa, 530 MPa, 550 MPa, 580 MPa, 600 MPa, 630 MPa, 650 MPa, 680 MPa, 700 MPa, 730 MPa, 750 MPa, 780 MPa, 800 MPa, 830 MPa, 850 MPa, 880 MPa, 900 MPa, 930 MPa, 950 MPa, 980 MPa, and 1000 MPa.

It should be understood that the yield strength in this embodiment of the present application may be understood as a critical stress value for material yield. Generally, after a material is under stress, as the stress increases, in addition to elastic deformation, the material may further be plastically deformed. A point at which the material is plastically deformed may be referred to as a yield point, and strength corresponding to the yield point is referred to as the yield strength. In addition, the yield strength in this embodiment of the present application is generally an upper yield strength. To be specific, the upper yield strength of at least a portion of regions of the case 211 at a temperature of 25°C is Re.

A manner of testing the yield strength Re of at least a portion of regions of the case 211 at a temperature of 25°C in this embodiment of the present application may be selected according to an actual application. For example, a national standard GB/T 228.1-2010 may be used to test the yield strength Re at a room temperature of 25°C.

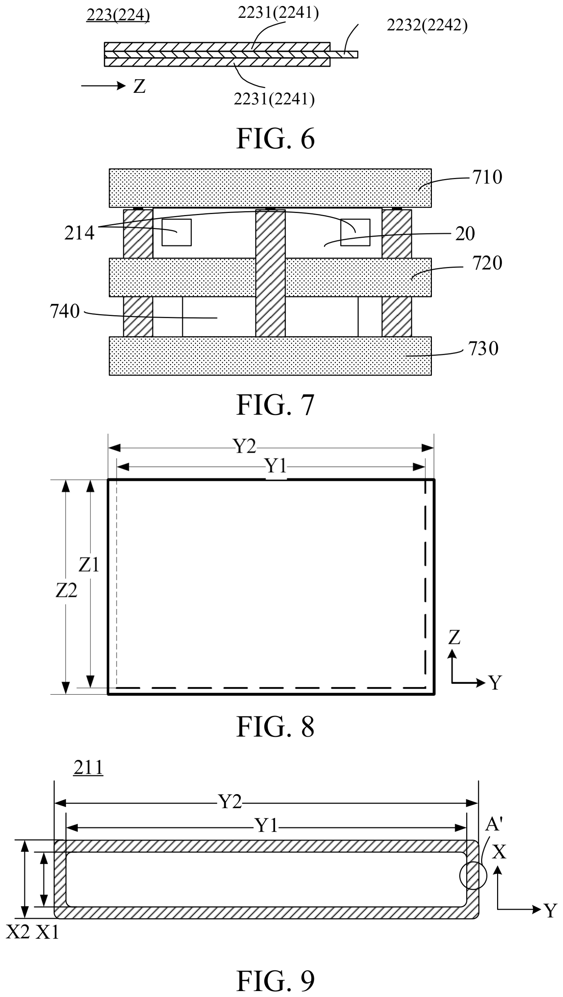

FIG. 5 shows a cross-sectional schematic diagram of an electrode assembly 22 according to an embodiment of the present application. For example, the cross-sectional schematic diagram shown in FIG. 5 may be a cross-sectional schematic diagram of the electrode assembly 22 shown in FIG. 4. The cross-section is perpendicular to a height direction Z of the battery cell 20. FIG. 6 shows a partial cross-sectional schematic diagram of a positive electrode plate 223 or a negative electrode plate 224 according to an embodiment of the present application. For example, FIG. 6 may represent a partial cross-sectional schematic diagram of a negative electrode plate 224 of an electrode assembly 22 shown in FIG. 5 along a thickness direction thereof, or may represent a partial cross-sectional schematic diagram of a positive electrode plate 223 of an electrode assembly 22 shown in FIG. 5 along a thickness direction thereof.

As shown in FIG. 3 to FIG. 6, the electrode assembly 22 in this embodiment of the present application includes a positive electrode plate 223 and a negative electrode plate 224. The electrode assembly 22 may be formed by stacking or winding the positive electrode plate 223 and the negative electrode plate 224. For example, the electrode assembly 22 may include a plurality of positive electrode plates 223 and a plurality of negative electrode plates 224. The plurality of positive electrode plates 223 and the plurality of negative electrode plates 224 are alternately stacked on each other along a thickness direction Y of the electrode assembly 22, to form the stacked electrode assembly 22. For another example, the electrode assembly 22 may include a plurality of positive electrode plates 223. A negative electrode plate 224 includes a plurality of bent segments and a plurality of stacked segments that are connected to each other and alternately disposed. After the bent segments are bent, the plurality of positive electrode plates 223 and the plurality of stacked segments of the negative electrode plate 224 are alternately stacked on each other, to form the stacked electrode assembly 22. For another example, the electrode assembly may alternatively be a wound electrode assembly 22 formed by winding the positive electrode plate 223 and the negative electrode plate 224. For ease of description, the wound electrode assembly 22 is adopted in the accompanying drawings of this embodiment of the present application as an example, but this embodiment of the present application is not limited thereto. Further, the electrode assembly 22 may include a separator 225, to separate the positive electrode plate 223 from the negative electrode plate 224.

In this embodiment of the present application, the negative electrode plate 224 includes a negative electrode active material. For example, the negative electrode active material applied to the negative electrode plate 224 may be configured for forming a negative electrode active material layer 2241. The negative electrode active material layer 2241 may be disposed on a surface of at least one side of a negative electrode current collector 2242. For example, the negative electrode active material layer 2241 may be disposed on both sides, perpendicular to the thickness direction, of the negative electrode current collector 2242.

In some embodiments, the negative electrode current collector 2242 may use a metal foil or a composite current collector. Examples of the metal foil may include a copper foil, a copper alloy foil, an aluminum foil, and an aluminum alloy foil. The composite current collector may include a polymer material base layer and a layer of a metal material formed on at least one surface of the polymer material base layer. As an example, the metal material may include one or more of copper, copper alloy, nickel, nickel alloy, titanium, titanium alloy, silver, and silver alloy. For example, the polymer material base layer may include one or more of polypropylene (PP), polyethylene terephthalate (PET), polybutylene terephthalate (PBT), polystyrene (PS), and polyethylene (PE).

It should be understood that the negative electrode active material in this embodiment of the present application may be flexibly set according to an actual application. Specifically, the negative electrode active material in this embodiment of the present application may include a silicon-based material, thereby improving the energy density of a battery. The silicon-based material may include at least one of elemental silicon, a silicon oxide, a silicon-carbon composite, a silicon-nitrogen composite, a silicon alloy, or a silicon oxycarbide composite.

In some embodiments, the silicon-based material may include one or more of a silicon element, an alkali metal element, and an alkaline earth metal element. As an example, the alkali metal element may include Li. As an example, the alkaline earth metal element includes Mg. As an example, the silicon-based material may be a silicon-based material pre-embedded with an alkali metal and/or an alkaline earth metal, for example, may be a silicon-based material pre-embedded with Li and/or Mg.

It should be understood that a mass ratio g of the silicon-based material in this embodiment of the present application may be flexibly set according to an actual application.

For example, a value range of the mass ratio g of the silicon-based material may be set to satisfy 2%≤g≤40%. The addition of the silicon-based material to the negative electrode active material of the negative electrode plate 224 can effectively improve the energy density of the battery cell 20 because the silicon-based material may accommodate more metal ions than another element, for example, the capacity of the silicon-based material is approximately ten times that of graphite. Also, the mass ratio g of the silicon-based material should not be set to be excessively large. Otherwise, the processing difficulty of the electrode assembly 22 is increased. In addition, an amount of deformation of the electrode assembly 22 in the battery cell 20 during use may be increased. Particularly, during the charging of the battery cell 20, intercalation of the metal ion into the silicon-based material of the negative electrode plate 224 may cause volume expansion of the electrode assembly 22, thereby increasing pressure of the electrode assembly 22 on the case 211 of the battery cell 20. Further, the processing difficulty of the battery cell 20 is increased.

Further, the value range of the mass ratio g of the silicon-based material may be set to satisfy 8%≤g≤40%. By properly reducing the mass ratio g of the silicon-based material, the processing difficulty of the electrode assembly 22 can be reduced, and the amount of deformation of the electrode assembly 22 during the charging and discharging of the battery cell 20 can also be reduced. To be specific, the volume expansion of the electrode assembly 22 is reduced, thereby reducing the pressure of the electrode assembly 22 on the case 211 of the battery cell 20, reducing a requirement on the structural strength of the case 211, facilitating processing, and reducing costs.

Further, the value range of the mass ratio g of the silicon-based material may be set to satisfy 10%≤g≤30%. By reasonably adjusting the mass ratio g of the silicon-based material, the energy density of the battery cell 20 can be effectively increased, the processing difficulty of the electrode assembly 22 can be effectively reduced, and the amount of deformation of the electrode assembly 22 during the charging and discharging of the battery cell 20 can be effectively reduced, thereby reducing the requirement on the structural strength of the case 211.

In some embodiments, a value of the mass ratio g of the silicon-based material in this embodiment of the present application may alternatively be set to another value. For example, the value of the mass ratio g of the silicon-based material may be any one of the following values or between any two of the following values: 5%, 8%, 10%, 13%, 15%, 18%, 20%, 23%, 25%, 28%, 30%, 33%, 35%, 38%, 40%, 43%, 45%, 48%, and 50%.

It should be understood that, in this embodiment of the present application, the mass ratio g of the silicon-based material in the negative electrode active material represents that a ratio of a mass of the silicon-based material in the negative electrode active material to a total mass of the negative electrode active material is g. A manner of testing the mass ratio g of the silicon-based material may be selected according to an actual application, and may adopt a method known in the art.

In this embodiment of the present application, the negative electrode active material may further include other materials. For example, the negative electrode active material may further include a negative electrode binder. For example, the negative electrode binder may include one or more of styrene-butadiene rubber (SBR), water-soluble unsaturated resin SR-1B, waterborne acrylic resin (e.g., polyacrylic acid PAA, poly(methyl methacrylate) PMMA, and sodium polyacrylate PAAS), polyacrylamide (PAM), polyvinyl alcohol (PVA), sodium alginate (SA), and carboxymethyl chitosan (CMCS). This is not limited in this embodiment of the present application.

In some embodiments, the negative electrode active material may further include a negative electrode conductive agent. A type of the negative electrode conductive agent is not particularly limited in the present application. As an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode active material may further include other additives. For example, the other additives may include a thickening agent, for example, sodium carboxymethyl cellulose (CMC) and a PTC thermistor material.

The negative electrode plate 224 does not exclude other additional functional layers than the negative electrode active material layer 2241. In some embodiments, the negative electrode plate 224 may, for example, further include a conductive primer layer (which is, for example, formed by a conductive agent and a binder) sandwiched between the negative electrode current collector 2242 and the negative electrode active material layer 2241 and disposed on the surface of the negative electrode current collector 2242. In some embodiments, the negative electrode plate 224 may further include a protective layer covering the surface of the negative electrode active material layer 2241.

In some embodiments, the negative electrode plate 224 may be prepared according to the following method: dispersing the negative electrode active material, an optional negative electrode binder, an optional negative electrode conductive agent, and an optional another additive in a solvent, and forming a negative electrode slurry by uniform stirring; and coating the negative electrode slurry on the negative electrode current collector 2242, and forming the negative electrode plate 224 by means of drying, cold pressing, and other procedures. The solvent may be N-methylpyrrolidone (NMP) or deionized water, but this is not limited in this embodiment of the present application.

In this embodiment of the present application, the value of the mass ratio g of the silicon-based material and the value of the yield strength Re of at least a portion of regions of the case 211 at a temperature of 25°C may be mutually limited, to improve the structural strength of the case 211 while improving the energy density of the battery cell 20, thereby increasing the structural strength and service life of the battery cell 20.

For example, in the negative electrode active material, the mass ratio of the silicon-based material is g, where g and Re satisfy: 2%<g<40% and 140 MPa<Re<600 MPa. The addition of the silicon-based material to the negative electrode active material of the negative electrode plate 224 can effectively improve the energy density of the battery cell 20 because the silicon-based material may accommodate more metal ions than another element, for example, the capacity of the silicon-based material is approximately ten times that of graphite. Also, the mass ratio g of the silicon-based material should not be set to be excessively large. Otherwise, the processing difficulty of the electrode assembly 22 is increased. In addition, an amount of deformation of the electrode assembly 22 in the battery cell 20 during use may be increased. Particularly, during the charging of the battery cell 20, intercalation of the metal ion into the silicon-based material of the negative electrode plate may cause volume expansion of the electrode assembly 22, thereby increasing pressure of the electrode assembly 22 on the case 211 of the battery cell 20. Further, the processing difficulty of the battery cell 20 is increased. Therefore, the yield strength Re of at least a portion of regions of the case 211 at the room temperature may be properly increased, to improve the deformation capability of the portion of the case 211, to resist expansion of the electrode assembly 22, so that the portion of the case 211 is not prone to breaking. In addition, if an expansion amount of the electrode assembly 22 is reduced, the deformed case 211 can be recovered without exceeding a limit of the yield strength of the case 211, thereby increasing the structural stability and service life of the battery cell 20. In addition, the yield strength Re of at least a portion of regions of the case 211 at the room temperature is controlled not to be excessively large, to reduce the selection difficulty and processing difficulty of the material of the case 211, reduce costs, and facilitate processing.

In some embodiments, the material of at least a portion of regions of the case 211 includes carbon steel or stainless steel, and g and Re satisfy: 4.5%≤g≤40% and 170 MPa≤Re<600 MPa. For example, the material of at least a portion of regions of the case 211 may include SPCC carbon steel, which not only facilitates processing, but also satisfies the value of the yield strength Re under a condition of 25°C.

In some embodiments, g and Re satisfy: 8%≤g≤40% and 180 MPa≤Re<600 MPa. For example, the material of at least a portion of regions of the case 211 may include modified stainless steel, which not only facilitates processing, but also satisfies the value of the yield strength Re under a condition of 25°C.

In some embodiments, g and Re satisfy: 10%≤g≤40% and 190 MPa≤Re<600 MPa. For example, the material of at least a portion of regions of the case 211 may include 316 stainless steel, which not only facilitates processing, but also satisfies the value of the yield strength Re under a condition of 25°C.

In some embodiments, g and Re satisfy: 15%≤g≤40% and 200 MPa≤Re<600 MPa. For example, the material of at least a portion of regions of the case 211 may include 304 stainless steel, which not only facilitates processing, but also satisfies the value of the yield strength Re under a condition of 25°C.

In some embodiments, g and Re satisfy: 20%≤g≤40% and 210 MPa≤Re<600 MPa.

A plurality of comparative examples and a plurality of embodiments are used for comparison below. Specifically, the battery cells 20 in the following embodiments and comparative examples belong, for example, to a square battery shown in FIG. 3 and FIG. 4, where the case 211 is of a hollow structure with one end open.

In the following embodiments and comparative examples, methods for preparing a positive electrode plate 223, a negative electrode plate 224, an electrolytic solution, and a spacer 225 of the battery cell 20 are as follows.

### 1. Preparation of a positive electrode plate 223

A positive electrode slurry was prepared by mixing a positive electrode active material LiNi_{0.95}Co_{0.04}Mn_{0.01}O₂, a conductive agent Super P, and a binder polyvinylidene fluoride (PVDF) in N-methylpyrrolidone (NMP), where the solid content in the positive electrode slurry was 50wt%, and a mass ratio of LiNi_{0.7}Co_{0.1}Mn_{0.1}O₂, Super P, and PVDF in solid components was 8:1:1. The positive electrode slurry was coated onto upper and lower surfaces of an aluminum foil current collector and dried at 85°C, followed by cold pressing, trimming, slicing, and slitting. Then the positive electrode plate 223 was prepared by drying for 4 h under a vacuum condition of 85°C.

### 2. Preparation of a negative electrode plate 224

A negative electrode slurry was prepared by uniformly mixing a negative electrode active material, the conductive agent Super P, a thickener carboxymethyl cellulose (CMC), and a binder styrene-butadiene rubber (SBR) in deionized water, where the negative electrode active material included graphite and a silicon-based material, the silicon-based material was a silicon oxide, the solid content in the negative electrode slurry was 30wt%, and the mass ratio of the negative electrode active material, silicon monoxide, Super P, CMC, and the binder styrene-butadiene rubber (SBR) in solid components was 88:7:3:2. The negative electrode slurry was coated onto upper and lower surfaces of a copper foil current collector and dried at 85°C, followed by cold pressing, trimming, slicing, and slitting. Then the negative electrode plate 224 was prepared by drying for 12 h under a vacuum condition of 120°C.

### 3. Preparation of an electrolytic solution

In an argon atmosphere glove box (H2O<0.1 ppm and O2<0.1 ppm), a thoroughly dried electrolyte salt LiPF6 was dissolved in a mixed solvent (the mixed solvent included ethylene carbonate (EC) and diethyl carbonate (DEC). The ethylene carbonate (EC) and the diethyl carbonate (DEC) were mixed at a mass ratio of 50:50. An electrolytic solution having a concentration of 1 mol/L was obtained after uniform mixing.

### 4. Preparation of a spacer 225

A polyethylene film having a thickness of 16 µm was used as the spacer 225.

### 5. Preparation of a lithium-ion battery cell 20

The positive electrode plate 223, the spacer 225, and the negative electrode plate 224 were laminated in order, so that the spacer 225 was located between the positive electrode plate 223 and the negative electrode plate 224 to space a positive electrode from a negative electrode, wound to obtain a bare battery core, and welded with tabs. The bare battery core was placed in a shell of different materials. The prepared electrolytic solution was injected into the dried shell, followed by packaging, standing, formation, shaping, capacity testing, and the like. In this way, the preparation of the lithium-ion battery cell 20 was completed.

In the following embodiments and comparative examples, the yield strength of the case 211 of the battery cell 20 at a temperature of 25°C is Re, and to obtain different yield strengths Re, different materials are correspondingly selected for the case 211. The negative electrode active material of the negative electrode plate 224 of the electrode assembly 22 of the battery cell 20 includes a silicon-based material, and a mass ratio of the silicon-based material is g. The foregoing specific parameter settings are shown in Table 1. In addition, in each embodiment and comparative example, materials in all regions of the case 211 are the same, and the yield strength Re of the case 211 under a condition of 25°C is measured by using a method stipulated by GB/T 228.1-2010. In addition, except that the parameter settings shown in Table 1 are different, setting conditions of the battery cells 20 in the following embodiments and comparative examples are all the same. For example, the wall thickness of each wall of the case 211 of the battery cell 20 in the embodiments is 0.25 mm. For another example, the capacity of the battery cell 20 in the embodiments is 350 Ah.

A cyclic charging fatigue test is performed on the battery cells 20 in the following embodiments and comparative examples. Specifically, FIG. 7 shows a schematic structural diagram of a clamp 700 for a cyclic charging fatigue test according to an embodiment of the present application. As shown in FIG. 7, the clamp 700 includes three 10 mm steel plates. The steel plates completely cover a wall, which has the largest area, of the battery cell 20. For ease of description, the three steel plates of the clamp are sequentially defined herein as a first steel plate 710, a second steel plate 720, and a third steel plate 730. The first steel plate 710 and the third steel plate 730 are located at two ends of the clamp 700, and are connected by means of bolting. The second steel plate 720 in the middle is constrained by using a guide rail, so that the second steel plate 720 can only translate along a direction perpendicular to a large face of the second steel plate 720. The first steel plate 710 and the second steel plate 720 are provided for clamping the battery cell 20, and a wall having the largest area of the battery cell 20 is attached to the first steel plate 710 and the second steel plate 720. A pressure sensor 740 is disposed between the second steel plate 720 and the third steel plate 730. An initial extrusion force of the second steel plate 720 on the battery cell 20 may be adjusted by adjusting the position of the second steel plate 720.

Specifically, the battery cell 20 is clamped and fixed into a dedicated clamp 700, to ensure that two opposite walls having the largest area of the battery cell 20 are clamped, an initial pressure is set to 2000 N, and the electrode terminal 214 of the battery cell 20 is connected to a dedicated battery charging and discharging device.

The clamp 700 holding the battery cell 20 is placed in a constant-temperature environment of 25±2°C, and a test is started after the battery cell 20 reaches temperature balance.

Specific test steps are performed with reference to Chapter 6.4 "Standard Cycle Life" of *GBT31484-2015 Cycle Life Requirement of Power Battery for Electric Vehicles and Test Method*, and a test cycle stopping condition is changed to "Stopping the test until a weld 2113 of the battery cell 20 is broken".

For example, the test may be performed according to the following steps: step a: discharging at 1I(A) to a discharging termination condition specified by an enterprise; step b: stopping for not less than 30 min or a stopping condition specified by the enterprise; step c: charging according to a method 6.1.1.3; step d: stopping for not less than 30 min or the stopping condition specified by the enterprise; step e: discharging at 1I1(A) to the discharging termination condition specified by the enterprise; and step f: cyclically performing step b to step e, and stopping testing until the weld 2113 is broken.

In the foregoing test process, the weld 2113 of the battery cell 20 is continuously observed until liquid leakage occurs in the weld 2113, and the number of cycles is recorded, to obtain failure and fatigue conditions of the case 211 after 1000 cycles shown in Table 1. In the following embodiments and comparative examples, the weld 2113 refers to a weld between the case 211 and the cover plate 212. To be specific, the weld 2113 surrounds an open end of the case 211, and the case 211 is of an integrally formed structure.

**Table 1**

| | Re (MPa) | g | Case material | Failure and fatigue conditions of case after 1000 cycles |
|---|---|---|---|---|
| Comparative Example 1 | 125 | 0.1 | Aluminum | 728 failures and fatigues |
| Comparative Example 2 | 115 | 0.2 | Aluminum | 541 failures and fatigues |
| Embodiment 1 | 145 | 0.02 | Modified stainless steel | Not failed and fatigued |
| Embodiment 2 | 145 | 0.4 | Modified stainless steel | Not failed and fatigued |
| Embodiment 3 | 173 | 0.045 | Modified stainless steel | Not failed and fatigued |
| Embodiment 4 | 173 | 0.4 | Modified stainless steel | Not failed and fatigued |
| Embodiment 5 | 182 | 0.08 | SUS316 | Not failed and fatigued |
| Embodiment 6 | 182 | 0.4 | SUS316 | Not failed and fatigued |
| Embodiment 7 | 193 | 0.1 | SUS316 | Not failed and fatigued |
| Embodiment 8 | 193 | 0.4 | SUS316 | Not failed and fatigued |
| Embodiment 9 | 203 | 0.15 | Q195 | Not failed and fatigued |
| Embodiment 10 | 203 | 0.4 | Q195 | Not failed and fatigued |
| Embodiment 11 | 212 | 0.2 | SUS304 | Not failed and fatigued |
| Embodiment 12 | 212 | 0.4 | SUS304 | Not failed and fatigued |

It should be understood that, in the foregoing Table 1, the material of the case 211 may be modified stainless steel, and the yield strength Re of the modified stainless steel at a room temperature of 25°C is generally at least 140 MPa to 180 MPa. In the forgoing embodiments, the yield strength is only 145 MPa and 173 MPa, but this is not limited thereto. Similarly, the material of the case 211 may be SUS316 stainless steel, and the yield strength Re of the SUS316 stainless steel at a room temperature of 25°C is generally at least 177 MPa. In the forgoing embodiments, the yield strength is only 182 MPa and 193 MPa. The material of the case 211 may be Q195 carbon steel, and the yield strength Re of the Q195 carbon steel at a room temperature of 25°C is generally at least 195 MPa. In the forgoing embodiments, the yield strength is only 203 MPa. The material of the case 211 may be SUS304 stainless steel, and the yield strength Re of the SUS304 stainless steel at a room temperature of 25°C is generally at least 205 MPa. In the forgoing embodiments, the yield strength is only 212 MPa.

As can be seen by comparing the two comparative examples and the 12 embodiments in the foregoing Table 1, when the case 211 uses different materials, different yield strengths Re may be correspondingly determined. When the yield strength Re satisfies 140 MPa≤Re≤1000 MPa, for example, in Embodiments 1 to 12, even if the mass ratios g of the silicon-based material in the material of the negative electrode plate 224 of the battery cell 20 are different, failures and fatigues of the battery cell 20 may reach more than one thousand, to satisfy a design requirement of the battery cell 20. However, when the yield strength Re does not satisfy 140 MPa≤Re≤1000 MPa, for example, in Comparative Examples 1 to 2, even if the mass ratios g of the silicon-based material in the material of the negative electrode plate 224 of the battery cell 20 are low, failures and fatigues of the battery cell 20 are less than one thousand, so that the design requirement of the battery cell 20 cannot be satisfied.

It should be understood that the battery cell 20 in this embodiment of the present application may further satisfy another design requirement. Specifically, at least a portion of regions of the case has a tensile strength of Rm at a temperature of 25°C, where Rm satisfies: 250 MPa≤Rm≤2000 MPa. By increasing the tensile strength Rm of at least a portion of regions of the case 211 at a room temperature of 25°C, the deformation capability of the portion of the case 211 can be improved, so that the portion of the case 211 is not prone to breaking during the use of the battery cell 20, thereby increasing the structural stability and service life of the battery cell 20. However, the tensile strength Rm of at least a portion of regions of the case 211 at the room temperature should not be excessively large, to reduce the selection difficulty and processing difficulty of the material of the case 211, reduce costs, and facilitate processing. For example, it may be generally set that the tensile strength Rm of at least a portion of regions of the case 211 at the room temperature satisfies: 250 MPa≤Rm≤2000 MPa.

It should be understood that, in this embodiment of the present application, a value range of the tensile strength Rm of at least a portion of regions of the case 211 at a temperature of 25°C may be adjusted according to an actual application. For example, the value of the tensile strength Rm at the room temperature may satisfy 250 MPa≤Rm≤2000 MPa. For another example, the value of the tensile strength Rm at the room temperature may alternatively satisfy 400 MPa≤Rm≤1200 MPa. On one hand, by increasing the tensile strength Rm of at least a portion of regions of the case 211 at the room temperature, the deformation capability of the portion of the case 211 can be improved, to resist expansion of the electrode assembly 22, so that the portion of the case 211 is not prone to breaking, thereby increasing the structural stability and service life of the battery cell 20. On the other hand, the tensile strength Rm of at least a portion of regions of the case 211 at the room temperature is controlled not to be excessively large, to reduce the selection difficulty and processing difficulty of the material of the case 211, reduce costs, and facilitate processing.

Further, it may be generally set that the tensile strength Rm of at least a portion of regions of the case 211 at the room temperature satisfies: 450 MPa≤Rm≤800 MPa. The tensile strength Rm of at least a portion of regions of the case 211 at the room temperature is not excessively large or not excessively small, thereby improving the deformation capability of the portion of the case 211, to resist expansion of the electrode assembly 22, and facilitating implementation and reducing costs.

In some embodiments, the value of the tensile strength Rm of at least a portion of regions of the case 211 at the room temperature in this embodiment of the present application may alternatively be set to another value. For example, the value of the tensile strength Rm at the room temperature may be any one of the following values or between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength in this embodiment of the present application refers to a maximum value of stress applied to the material before being broken. A manner of testing the tensile strength Rm of at least a portion of regions of the case 211 at a temperature of 25°C in this embodiment of the present application may be selected according to an actual application. For example, a national standard GB/T 228.1-2010 may be used to test the tensile strength Rm at a room temperature of 25°C.

In this embodiment of the present application, the value of the mass ratio g of the silicon-based material and the value of the tensile strength Rm of at least a portion of regions of the case 211 at a temperature of 25°C may be mutually limited, to balance a relationship between the energy density and structural strength of the battery cell 20. For example, in the negative electrode active material, the mass ratio of the silicon-based material is g, the material of at least a portion of regions of the case 211 includes an iron element, and Rm and g satisfy: 2%<g<40% and 300 MPa<Rm<2000 MPa. The material of at least a portion of regions of the case 211 includes the iron element, so that the structural strength of the material of the portion of regions of the case 211 can be increased, to satisfy a design requirement.

In some embodiments, the material of at least a portion of regions of the case 211 includes carbon steel or stainless steel, and Rm and g satisfy: 2.5%≤g≤15% and 315 MPa≤Rm<800 MPa. For example, the material of at least a portion of regions of the case 211 may include Q195 carbon steel, which not only facilitates processing, but also satisfies the value of the tensile strength Rm under a condition of 25°C.

In some embodiments, the material of at least a portion of regions of the case 211 includes carbon steel or stainless steel, and Rm and g satisfy: 4.5%≤g≤40% and 380 MPa≤Rm<2000 MPa. For example, the material of at least a portion of regions of the case 211 may include SPCC carbon steel, which not only facilitates processing, but also satisfies the value of the tensile strength Rm under a condition of 25°C.

In some embodiments, Rm and g satisfy: 8%≤g≤40% and 400 MPa≤Rm<2000 MPa. For example, the material of at least a portion of regions of the case 211 may include modified stainless steel, which not only facilitates processing, but also satisfies the value of the tensile strength Rm under a condition of 25°C.

In some embodiments, Rm and g satisfy: 10%≤g≤40% and 480 MPa≤Rm<2000 MPa. For example, the material of at least a portion of regions of the case 211 may include 316 stainless steel, which not only facilitates processing, but also satisfies the value of the tensile strength Rm under a condition of 25°C.

In some embodiments, Rm and g satisfy: 15%≤g≤40% and 520 MPa≤Rm<2000 MPa. For example, the material of at least a portion of regions of the case 211 may include 304 stainless steel, which not only facilitates processing, but also satisfies the value of the tensile strength Rm under a condition of 25°C.

In some embodiments, Rm and g satisfy: 20%≤g≤40% and 600 MPa≤Rm<2000 MPa.

A plurality of comparative examples and a plurality of embodiments are used for comparison below. Specifically, the battery cells 20 in the following embodiments and comparative examples belong, for example, to a square battery shown in FIG. 3 and FIG. 4, where the case 211 is of a hollow structure with one end open.

In the following embodiments and comparative examples, methods for preparing a positive electrode plate 223, a negative electrode plate 224, an electrolytic solution, and a spacer 225 of the battery cell 20 are as follows.

### 1. Preparation of a positive electrode plate 223

A positive electrode slurry was prepared by mixing a positive electrode active material LiNi_{0.95}Co_{0.04}Mn_{0.01}O₂, a conductive agent Super P, and a binder polyvinylidene fluoride (PVDF) in N-methylpyrrolidone (NMP), where the solid content in the positive electrode slurry was 50wt%, and a mass ratio of LiNi_{0.7}Co_{0.1}Mn_{0.1}O₂, Super P, and PVDF in solid components was 8:1:1. The positive electrode slurry was coated onto upper and lower surfaces of an aluminum foil current collector and dried at 85°C, followed by cold pressing, trimming, slicing, and slitting. Then the positive electrode plate 223 was prepared by drying for 4 h under a vacuum condition of 85°C.

### 2. Preparation of a negative electrode plate 224

A negative electrode slurry was prepared by uniformly mixing a negative electrode active material, the conductive agent Super P, a thickener carboxymethyl cellulose (CMC), and a binder styrene-butadiene rubber (SBR) in deionized water, where the negative electrode active material included graphite and a silicon-based material, the silicon-based material was a silicon oxide, the solid content in the negative electrode slurry was 30wt%, and the mass ratio of the negative electrode active material, silicon monoxide, Super P, CMC, and the binder styrene-butadiene rubber (SBR) in solid components was 88:7:3:2. The negative electrode slurry was coated onto upper and lower surfaces of a copper foil current collector and dried at 85°C, followed by cold pressing, trimming, slicing, and slitting. Then the negative electrode plate 224 was prepared by drying for 12 h under a vacuum condition of 120°C.

### 3. Preparation of an electrolytic solution

In an argon atmosphere glove box (H2O<0.1 ppm and O2<0.1 ppm), a thoroughly dried electrolyte salt LiPF6 was dissolved in a mixed solvent (the mixed solvent included ethylene carbonate (EC) and diethyl carbonate (DEC). The ethylene carbonate (EC) and the diethyl carbonate (DEC) were mixed at a mass ratio of 50:50. An electrolytic solution having a concentration of 1 mol/L was obtained after uniform mixing.

### 4. Preparation of a spacer 225

A polyethylene film having a thickness of 16 µm was used as the spacer 225.

### 5. Preparation of a lithium-ion battery cell 20

The positive electrode plate 223, the spacer 225, and the negative electrode plate 224 were laminated in order, so that the spacer 225 was located between the positive electrode plate 223 and the negative electrode plate 224 to space a positive electrode from a negative electrode, wound to obtain a bare battery core, and welded with tabs. The bare battery core was placed in a shell of different materials. The prepared electrolytic solution was injected into the dried shell, followed by packaging, standing, formation, shaping, capacity testing, and the like. In this way, the preparation of the lithium-ion battery cell 20 was completed.

In the following embodiments and comparative examples, the tensile strength of the case 211 of the battery cell 20 at a temperature of 25°C is Rm, and to obtain different tensile strengths Rm, different materials are correspondingly selected for the case 211. The negative electrode active material of the negative electrode plate 224 of the electrode assembly 22 of the battery cell 20 includes a silicon-based material, and a mass ratio of the silicon-based material is g. The foregoing specific parameter settings are shown in Table 2. In addition, in each embodiment and comparative example, materials in all regions of the case 211 are the same, and the tensile strength Rm of the case 211 under a condition of 25°C is measured by using a method stipulated by GB/T 228.1-2010. In addition, except that the parameter settings shown in Table 2 are different, setting conditions of the battery cells 20 in the following embodiments and comparative examples are all the same. For example, the wall thickness of each wall of the case 211 of the battery cell 20 in the embodiments is 0.25 mm. For another example, the capacity of the battery cell 20 in the embodiments is 350 Ah.

A cyclic charging fatigue test is performed on the battery cells 20 in the following embodiments and comparative examples. Specifically, the test may be performed by using a clamp 700 for the cyclic charging fatigue test shown in FIG. 7.

Specifically, the battery cell 20 is clamped and fixed into the dedicated clamp 700, to ensure that two opposite walls having the largest area of the battery cell 20 are clamped, an initial pressure is set to 2000 N, and the electrode terminal 214 of the battery cell 20 is connected to a dedicated battery charging and discharging device.

The clamp 700 holding the battery cell 20 is placed in a constant-temperature environment of 25+2°C, and a test is started after the battery cell 20 reaches temperature balance.

Specific test steps are performed with reference to Chapter 6.4 "Standard Cycle Life" of *GBT31484-2015 Cycle Life Requirement of Power Battery for Electric Vehicles and Test Method,* and a test cycle stopping condition is changed to "Stopping the test until a weld 2113 of the battery cell 20 is broken".

For example, the test may be performed according to the following steps: step a: discharging at 1I(A) to a discharging termination condition specified by an enterprise; step b: stopping for not less than 30 min or a stopping condition specified by the enterprise; step c: charging according to a method 6.1.1.3; step d: stopping for not less than 30 min or the stopping condition specified by the enterprise; step e: discharging at 1I1(A) to the discharging termination condition specified by the enterprise; and step f: cyclically performing step b to step e, and stopping testing until the weld 2113 is broken.

In the foregoing test process, the weld 2113 of the battery cell 20 is continuously observed until liquid leakage occurs in the weld 2113, and the number of cycles is recorded, to obtain conditions of the case 211 after 1000 cycles shown in Table 2. In the following embodiments and comparative examples, the weld 2113 refers to a weld between the case 211 and the cover plate 212. To be specific, the weld 2113 surrounds an open end of the case 211, and the case 211 is of an integrally formed structure.

**Table 2**

| | Rm (MPa) | g | Case material | Conditions of case after 1000 cycles |
|---|---|---|---|---|
| Comparative Example 1 | 178 | 0.03 | Aluminum | 656 cracks of case |
| Comparative Example 2 | 189 | 0.05 | Aluminum | 437 cracks of case |
| Embodiment 1 | 328 | 0.025 | Q195 | Not cracked |
| Embodiment 2 | 328 | 0.15 | Q195 | Not cracked |
| Embodiment 3 | 396 | 0.045 | SPCC | Not cracked |
| Embodiment 4 | 396 | 0.4 | SPCC | Not cracked |
| Embodiment 5 | 421 | 0.08 | Modified stainless steel | Not cracked |
| Embodiment 6 | 421 | 0.4 | Modified stainless steel | Not cracked |
| Embodiment 7 | 459 | 0.1 | SUS430 | Not cracked |
| Embodiment 8 | 459 | 0.4 | SUS430 | Not cracked |
| Embodiment 9 | 533 | 0.15 | SUS304 | Not cracked |
| Embodiment 10 | 533 | 0.4 | SUS304 | Not cracked |
| Embodiment 11 | 625 | 0.2 | SUS304 | Not cracked |
| Embodiment 12 | 625 | 0.4 | SUS304 | Not cracked |

It should be understood that, in the foregoing Table 2, the material of the case 211 may be Q195 carbon steel, and the tensile strength Rm of the Q195 carbon steel at a room temperature of 25°C is generally at least 315 MPa to 430 MPa. In the forgoing embodiments, the tensile strength is only 328 MPa, but this is not limited thereto. Similarly, the material of the case 211 may be SPCC carbon steel, and the tensile strength Rm of the SPCC carbon steel at a room temperature of 25°C is generally at least 380 MPa to 430 MPa. In the forgoing embodiments, the tensile strength is only 396 MPa. The material of the case 211 may be modified stainless steel, and the tensile strength Rm of the modified stainless steel at a room temperature of 25°C is generally at least 400 MPa to 600 MPa. In the forgoing embodiments, the tensile strength is only 421 MPa. The material of the case 211 may be SUS430 stainless steel, and the tensile strength Rm of the SUS430 stainless steel at a room temperature of 25°C is generally at least 450 MPa. In the forgoing embodiments, the tensile strength is only 459 MPa. The material of the case 211 may be SUS304 stainless steel, and the tensile strength Rm of the SUS304 stainless steel at a room temperature of 25°C is generally at least 520 MPa. In the forgoing embodiments, the tensile strength is only 533 MPa and 625 MPa.

As can be seen by comparing the two comparative examples and the 12 embodiments in the foregoing Table 2, when the case 211 uses different materials, different tensile strengths Rm may be correspondingly determined. When the tensile strength Rm satisfies 250 MPa≤Rm≤2000 MPa, for example, in Embodiments 1 to 12, even if the mass ratios g of the silicon-based material in the material of the negative electrode plate 224 of the battery cell 20 are different, failures and fatigues of the battery cell 20 may reach more than one thousand, to satisfy a design requirement of the battery cell 20. However, when the tensile strength Rm does not satisfy 250 MPa≤Rm≤2000 MPa, for example, in Comparative Examples 1 to 2, even if the mass ratios g of the silicon-based material in the material of the negative electrode plate 224 of the battery cell 20 are low, failures and fatigues of the battery cell 20 are less than one thousand, so that the design requirement of the battery cell 20 cannot be satisfied.

In some embodiments, the electrode assembly further includes a positive electrode plate. The positive electrode plate includes a positive electrode active material with a metal ion reversely deintercalated and intercalated. The positive electrode active material includes a nickel-containing compound. At least a portion of regions of the case has a melting point of p, where p satisfies: 1200°C≤p≤2000°C.

The positive electrode plate 223 in this embodiment of the present application is provided with the positive electrode active material with the metal ion reversely deintercalated and intercalated. The positive electrode active material may be flexibly set according to an actual application. For example, the positive electrode active material may include the nickel-containing compound, so that the energy density and the long cycle life of the battery cell 20 can be effectively increased. However, temperature and gases generated during the use of the battery cell 20 can also be increased. Especially when thermal runaway occurs during the use of the battery cell 20, the internal temperature of the battery cell 20 rapidly increases, and a large quantity of gases are generated.

Therefore, by properly increasing the melting point p of at least a portion of regions of the case 211, the case 211 is not prone to melting, thereby reducing the possibility of exploding the battery cell 20, and further reducing a risk of thermal runaway from adjacent battery cells 20, to improve the reliability of the battery 10. However, the melting point p of at least a portion of regions of the case 211 should not be excessively large, to reduce the selection difficulty and processing difficulty of the material of the case 211, reduce costs, and facilitate processing. For example, it may be generally set that the melting point p of at least a portion of regions of the case 211 satisfies: 1200°C≤p≤2000°C.

It should be understood that, in this embodiment of the present application, a value range of the melting point p of at least a portion of regions of the case 211 may be adjusted according to an actual application. For example, the melting point p of at least a portion of regions of the case 211 generally satisfies 1200°C≤p≤2000°C. For another example, the melting point p of at least a portion of regions of the case 211 may alternatively satisfy 1300°C≤p≤1800°C. On one hand, by properly increasing the value of the melting point p, an anti-fusion capability of the portion of the case 211 when thermal runaway occurs in the battery cell 20 can be improved, so that the case 211 is not prone to melting, thereby reducing a risk of thermal runaway occurring to adjacent battery cells 20. To be specific, a risk of heat diffusion is reduced, to improve the reliability of the battery 10. In addition, the melting point p cannot be excessively large, for selecting a suitable material, thereby reducing the processing difficulty, reducing costs, and facilitating processing.

Further, it may be set that the melting point p of at least a portion of regions of the case 211 satisfies 1400°C≤p≤1600°C. The structural strength of the case 211 can be improved when thermal runaway occurs in the battery cell 20, so that the case 211 is not prone to melting, and the structural integrity of the portion of the case 211 is maintained, thereby reducing a risk of thermal runaway occurring to adjacent battery cells 20. In addition, the processing difficulty can be reduced, and costs can be reduced.

In some embodiments, the value range of the melting point p of at least a portion of regions of the case 211 may alternatively be set to another value. For example, the value of the melting point p may be any one of the following values or between any two of the following values: 1200°C, 1250°C, 1300°C, 1350°C, 1400°C, 1450°C, 1500°C, 1550°C, 1600°C, 1650°C, 1700°C, 1750°C, 1800°C, 1850°C, 1900°C, 1950°C, and 2000°C.

In this embodiment of the present application, the positive electrode plate 223 includes a positive electrode active material. For example, the positive electrode active material applied to the positive electrode plate 223 may be configured for forming a positive electrode active material layer 2231. The positive electrode active material layer 2231 may be disposed on a surface of at least one side of a positive electrode current collector 2232. For example, the positive electrode active material layer 2241 may be disposed on both sides, perpendicular to the thickness direction, of the positive electrode current collector 2232. However, this is not limited in this embodiment of the present application.

In some embodiments, the positive electrode current collector 2232 may use a metal foil or a composite current collector. As an example of the metal foil, an aluminum foil may be used. The composite current collector may include a polymer material base layer and a layer of a metal material formed on at least one surface of the polymer material base layer. For example, the metal material may include one or more of aluminum, aluminum alloy, nickel, nickel alloy, titanium, titanium alloy, silver, and silver alloy. For example, the polymer material base layer may include one or more of polypropylene (PP), polyethylene terephthalate (PET), polybutylene terephthalate (PBT), polystyrene (PS), and polyethylene (PE).

It should be understood that the positive electrode active material in this embodiment of the present application may be flexibly set according to an actual application. For example, the positive electrode active material may include a nickel-containing compound. As an example, the nickel-containing compound includes a layered lithium-containing transition metal oxide, and a molar weight of nickel in the layered lithium-containing transition metal oxide accounts for more than 50% of a total molar weight of transition metal elements in the layered lithium-containing transition metal oxide. By increasing the proportion of the molar weight of nickel in the layered lithium-containing transition metal oxide to more than 50%, the energy density and the long cycle life of the battery cell 20 can be effectively improved. However, the proportion cannot be set to be excessively large. Otherwise, the processing difficulty of the electrode assembly 22 is increased, and processing costs of the battery cell 20 are then increased.

Further, the proportion of the molar weight of nickel in the layered lithium-containing transition metal oxide may alternatively be more than 70%, or more than 80%, or 90%. In this way, when the energy density of the battery cell 20 can be effectively improved, the processing difficulty of the electrode assembly 22 is also controlled, to reduce the processing costs of the battery cell 20.

In some embodiments, a value of the proportion of the molar weight of nickel in the layered lithium-containing transition metal oxide in this embodiment of the present application may alternatively be set to another value. For example, the value of the proportion of the molar weight of nickel in the layered lithium-containing transition metal oxide may be any one of the following values or between any two of the following values: 50%, 53%, 55%, 58%, 60%, 63%, 65%, 68%, 70%, 73%, 75%, 78%, 80%, 83%, 85%, 88%, 90%, 92%, 94%, 96%, and 98%.

It should be understood that, in this embodiment of the present application, a manner of testing the molar weight of nickel in the layered lithium-containing transition metal oxide and the total molar weight of transition metal elements in the layered lithium-containing transition metal oxide may be selected according to an actual application, for determining using an instrument and a method known in the art. For example, the positive electrode active material may be laid on and adhered to a conductive adhesive, to form a to-be-tested 6 cm×1.1 cm (length × width) sample. The particle morphology is tested by using a scanning electron microscope and an energy disperse spectroscopy (e.g., ZEISSSigma300). For the test, refer to JY/T010-1996. To ensure accuracy of a test result, 20 different regions may be randomly selected from the to-be-tested sample to perform a scan test, and at a magnification rate (e.g., more than 1000 times), the content of the layered lithium-containing transition metal oxide in each region is statistically calculated. For example, an average value of test results of 20 test regions may be used as a quantity of layered lithium-containing transition metal oxides in the positive electrode active material, to further determine molar weights of the layered lithium-containing transition metal oxides. Similarly, the method may further be used for determining molar weights of nickel in the layered lithium-containing transition metal oxides.

In some embodiments, the layered lithium-containing transition metal oxide may include one or more of lithium cobaltate and a ternary material. As an example, the layered lithium-containing transition metal oxide includes LiaNibCocMdOeAf, where 0<a<1.2, 0.5<b<1, optionally, 0.9≤b<1, 0<c<1, 0<d<1, 1≤e≤2, and 0≤F≤1. M includes, but is not limited to, one or more of Mn, Al, Zr, Zn, Cu, Cr, Mg, Fe, V, Ti, and B. A includes, but is not limited to, one or more of N, F, S, and Cl. The proportion b of the molar weight of nickel in the layered lithium-containing transition metal oxide is set to more than 50%. To be specific, the proportion b satisfies: 0.5≤b<1, or may satisfy 0.8≤b<1, or 0.9≤b<1, thereby further improving the energy density of the battery cell 20.

As an example, the layered lithium-containing transition metal oxide may include, but is not limited to, one or more of LiNi0.5 Co0.2 Mn0.3 O2 (NCM523 for short), LiNi0.5 Co0.25 Mn0.25 O2 (NCM211 for short), LiNi0.6 Co0.2 Mn0.2 O2 (NCM622 for short), LiNi0.8 Co0.1 Mn0.1 O2 (NCM811 for short), LiNi0.9 Co0.06 Mn0.04 O2, LiNi0.96 Co0.02 Mn0.02 O2, and LiNi0.85 Co0.15 Al0.05 O2.

In some embodiments, the positive electrode active material may further include other materials. For example, the positive electrode active material may further include a positive electrode conductive agent. A type of the positive electrode conductive agent is not particularly limited in the present application. As an example, the positive electrode conductive agent may include one or more of superconducting carbon, conductive graphite, acetylene black, carbon black, Ketjen black, carbon dots, carbon nanotubes, graphene, and carbon nanofibers.

In some embodiments, the positive electrode active material may further include a positive electrode binder. A type of the positive electrode binder is not particularly limited in the present application. As an example, the positive electrode binder may include one or a combination of more than one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode plate 223 may be prepared by using the following method. The positive electrode active material layer 2231 is generally formed by coating a positive electrode slurry on the positive electrode current collector 2232, and drying and cold pressing the positive electrode slurry. The positive electrode slurry is generally formed by dispersing the positive electrode active material, the positive electrode binder, the positive electrode conductive agent, and the like in a solvent and performing stirring uniformly. The solvent may be N-methylpyrrolidone (NMP) or deionized water, but this is not limited in this embodiment of the present application.

A plurality of comparative examples and a plurality of embodiments are used for comparison below. Specifically, the battery cells 20 in the following embodiments and comparative examples belong, for example, to a square battery shown in FIG. 3 and FIG. 4, where the case 211 is of a hollow structure with one end open.

In the following embodiments and comparative examples, methods for preparing a positive electrode plate 223, a negative electrode plate 224, an electrolytic solution, and a spacer 225 of the battery cell 20 are as follows.

### 1. Preparation of a positive electrode plate 223

A positive electrode slurry was prepared by mixing a positive electrode active material LiNi_{0.95}Co_{0.04}Mn_{0.01}O₂, a conductive agent Super P, and a binder polyvinylidene fluoride (PVDF) in N-methylpyrrolidone (NMP), where the solid content in the positive electrode slurry was 50wt%, and a mass ratio of LiNi_{0.7}Co_{0.1}Mn_{0.1}O₂, Super P, and PVDF in solid components was 8:1:1. The positive electrode slurry was coated onto upper and lower surfaces of an aluminum foil current collector and dried at 85°C, followed by cold pressing, trimming, slicing, and slitting. Then the positive electrode plate 223 was prepared by drying for 4 h under a vacuum condition of 85°C.

### 2. Preparation of a negative electrode plate 224

A negative electrode slurry was prepared by uniformly mixing a negative electrode active material, the conductive agent Super P, a thickener carboxymethyl cellulose (CMC), and a binder styrene-butadiene rubber (SBR) in deionized water, where the negative electrode active material included graphite and a silicon-based material, the silicon-based material was a silicon oxide, the solid content in the negative electrode slurry was 30wt%, and the mass ratio of the negative electrode active material, silicon monoxide, Super P, CMC, and the binder styrene-butadiene rubber (SBR) in solid components was 88:7:3:2. The negative electrode slurry was coated onto upper and lower surfaces of a copper foil current collector and dried at 85°C, followed by cold pressing, trimming, slicing, and slitting. Then the negative electrode plate 224 was prepared by drying for 12 h under a vacuum condition of 120°C.

### 3. Preparation of an electrolytic solution

In an argon atmosphere glove box (H2O<0.1 ppm and O2<0.1 ppm), a thoroughly dried electrolyte salt LiPF6 was dissolved in a mixed solvent (the mixed solvent included ethylene carbonate (EC) and diethyl carbonate (DEC). The ethylene carbonate (EC) and the diethyl carbonate (DEC) were mixed at a mass ratio of 50:50. An electrolytic solution having a concentration of 1 mol/L was obtained after uniform mixing.

### 4. Preparation of a spacer 225

A polyethylene film having a thickness of 16 µm was used as the spacer 225.

### 5. Preparation of a lithium-ion battery cell 20

The positive electrode plate 223, the spacer 225, and the negative electrode plate 224 were laminated in order, so that the spacer 225 was located between the positive electrode plate 223 and the negative electrode plate 224 to space a positive electrode from a negative electrode, wound to obtain a bare battery core, and welded with tabs. The bare battery core was placed in a shell of different materials. The prepared electrolytic solution was injected into the dried shell, followed by packaging, standing, formation, shaping, capacity testing, and the like. In this way, the preparation of the lithium-ion battery cell 20 was completed.

In the following embodiments and comparative examples, the melting point of the case 211 of the battery cell 20 is p, and to obtain different melting points, different materials are correspondingly selected for the case 211. The capacity of the battery cell 20 is C. The wall thickness of a wall having the largest area of the battery cell 20 is T. The foregoing specific parameter settings are shown in Table 3. In addition, in each embodiment and comparative example, materials in all regions of the case 211 are the same. In addition, except that the parameter settings shown in Table 3 are different, setting conditions of the battery cells 20 in the following embodiments and comparative examples are all the same. For example, the positive electrode active material of the positive electrode plate 223 of the electrode assembly 22 of the battery cell 20 in the embodiments includes a nickel-containing compound. The nickel-containing compound includes a layered lithium-containing transition metal oxide, and a molar weight of nickel in the layered lithium-containing transition metal oxide accounts for 95% of a total molar weight of transition metal elements in the layered lithium-containing transition metal oxide.

For the battery cell 20 in the following comparative examples and embodiments, the battery cell is tested with reference to a short circuit test method of Chapter 6.2.4 of *GBT31485-2015 Safety Requirement for Power Battery for Electric Vehicles and Test Method.* After the test, the integrity of the case 211 is observed. To be specific, whether the case 211 is molten is observed.

**Table 3**

| | p (°C) | T (mm) | C (Ah) | Case material | Test results |
|---|---|---|---|---|---|
| Comparative Example 1 | 660 | 0.7 | 350 | Aluminum | Case molten |
| Comparative Example 2 | 660 | 0.15 | 72 | Aluminum | Case molten |
| Embodiment 1 | 1250 | 0.15 | 350 | High carbon ferromanganese | Case integrated |
| Embodiment 2 | 1250 | 0.15 | 72 | High carbon ferromanganese | Case integrated |
| Embodiment 3 | 1425 | 0.15 | 350 | Low carbon steel | Case integrated |
| Embodiment 4 | 1425 | 0.15 | 72 | Low carbon steel | Case integrated |
| Embodiment 5 | 1510 | 0.15 | 350 | Stainless steel | Case integrated |
| Embodiment 6 | 1510 | 0.15 | 72 | Stainless steel | Case integrated |

As can be seen by comparing the two comparative examples and the six embodiments in the foregoing Table 3, when the case 211 uses different materials, different melting points p may be correspondingly determined. When the melting point p satisfies 1200°C≤p≤2000°C, for example, in Embodiments 1 to 6, the case 211 of the battery cell 20 is not molten, which can satisfy the design requirement of the battery cell 20. In addition, when other parameters of the battery cell 20 fluctuate differently, for example, the capacity C of the battery cell 20 is different, or the thickness of a wall having the largest area of the case 211 is different, the battery cell 20 is not molten, which can satisfy the design requirement of the battery cell 20. However, when the melting point p does not satisfy 1200°C≤p≤2000°C, for example, in Comparative Examples 1 to 2, the case 211 of the battery cell 20 is molten, and therefore, the design requirement of the battery cell 20 cannot be satisfied.

In some embodiments, the electrode assembly further includes a positive electrode plate. The positive electrode plate includes a positive electrode active material with a metal ion reversely deintercalated and intercalated. The positive electrode active material includes a nickel-containing compound. At least a portion of regions of the case has a tensile strength of Rn at a temperature of 500°C, where Rn satisfies: 100 MPa≤Rn≤1200 MPa.

The positive electrode active material may include the nickel-containing compound, so that the energy density and the long cycle life of the battery cell 20 can be effectively increased. Gases generated during the use of the battery cell 20 can also be increased. Especially when thermal runaway occurs during the use of the battery cell 20, the internal temperature of the battery cell 20 rapidly increases, and a large quantity of gases are generated.

Therefore, by properly increasing the tensile strength Rn of at least a portion of regions of the case 211 at a high temperature of 500°C, the deformation capability of the portion of the case 211 when thermal runaway occurs in the battery cell 20, so that the case 211 is not prone to quick damage and explosion, thereby further reducing a risk of thermal runaway from adjacent battery cells 20, to improve the reliability of the battery 10. However, the tensile strength Rn of at least a portion of regions of the case 211 at the high temperature should not be excessively large. Otherwise, the processing difficulty may be increased. For example, a grinding tool may be prone to scratching, and the service life of the grinding tool may be shortened. Therefore, by properly reducing the tensile strength Rn, costs can be saved, and processing can be facilitated. For example, it may be generally set that the tensile strength Rn satisfies: 100 MPa≤Rn≤1200 MPa.

It should be understood that, in this embodiment of the present application, a value range of the tensile strength Rn of at least a portion of regions of the case 211 at the high temperature of 500°C may be adjusted according to an actual application. For example, the value of the tensile strength Rn at the high temperature may satisfy 100 MPa≤Rn≤1200 MPa. For another example, the value of the tensile strength Rn at the high temperature may alternatively satisfy 112 MPa≤Rn≤720 MPa. On one hand, by properly increasing the value of the tensile strength Rn, the deformation capability of the portion of the case 211 when thermal runaway occurs in the battery cell 20, so that the case 211 is not prone to quick damage and explosion, thereby further reducing a risk of thermal runaway from adjacent battery cells 20, to improve the reliability of the battery 10. In addition, the tensile strength Rn of at least a portion of regions of the case 211 at the high temperature should not be excessively large, to reduce the processing difficulty, thereby reducing costs and facilitating processing.

Further, a value of the tensile strength Rn at the high temperature may be set to satisfy 152 MPa≤Rn≤480 MPa. The deformation capability of the portion of the case 211 when thermal runaway occurs in the battery cell 20 can be improved, and the structural strength of the case 211 can be improved, so that the case 211 is not prone to quick damage and explosion, thereby further reducing a risk of thermal runaway from adjacent battery cells 20, to improve the reliability of the battery 10. In addition, the processing difficulty can be reduced, and costs can be reduced.

In some embodiments, the value of the tensile strength Rn at the high temperature in this embodiment of the present application may alternatively be set to another value. For example, the value of the tensile strength Rn at the high temperature may be any one of the following values or between any two of the following values: 100 MPa, 112 MPa, 130 MPa, 150 MPa, 152 MPa, 168 MPa, 180 MPa, 200 MPa, 228 MPa, 250 MPa, 280 MPa, 300 MPa, 320 MPa, 350 MPa, 380 MPa, 400 MPa, 430 MPa, 450 MPa, 480 MPa, 500 MPa, 530 MPa, 550 MPa, 580 MPa, 600 MPa, 630 MPa, 650 MPa, 680 MPa, 700 MPa, 720 MPa, 750 MPa, 780 MPa, 800 MPa, 830 MPa, 850 MPa, 880 MPa, 900 MPa, 930 MPa, 950 MPa, 980 MPa, 1000 MPa, 1050 MPa, 1100 MPa, 1150 MPa, and 1200 MPa.

It should be understood that the tensile strength in this embodiment of the present application refers to a maximum value of stress applied to the material before being broken. A manner of testing the tensile strength Rn of at least a portion of regions of the case 211 at a high temperature of 500°C in this embodiment of the present application may be selected according to an actual application. For example, a national standard GB/T 228.1-2010 may be used to test the tensile strength Rn at a high temperature of 500°C.

A plurality of comparative examples and a plurality of embodiments are used for comparison below. Specifically, the battery cells 20 in the following embodiments and comparative examples belong, for example, to a square battery shown in FIG. 3 and FIG. 4, where the case 211 is of a hollow structure with one end open.

In the following embodiments and comparative examples, methods for preparing a positive electrode plate 223, a negative electrode plate 224, an electrolytic solution, and a spacer 225 of the battery cell 20 are as follows.

### 1. Preparation of a positive electrode plate 223

A positive electrode slurry was prepared by mixing a positive electrode active material LiNi_{0.95}Co_{0.04}Mn_{0.01}O₂, a conductive agent Super P, and a binder polyvinylidene fluoride (PVDF) in N-methylpyrrolidone (NMP), where the solid content in the positive electrode slurry was 50wt%, and a mass ratio of LiNi_{0.7}Co_{0.1}Mn_{0.1}O₂, Super P, and PVDF in solid components was 8:1:1. The positive electrode slurry was coated onto upper and lower surfaces of an aluminum foil current collector and dried at 85°C, followed by cold pressing, trimming, slicing, and slitting. Then the positive electrode plate 223 was prepared by drying for 4 h under a vacuum condition of 85°C.

### 2. Preparation of a negative electrode plate 224

A negative electrode slurry was prepared by uniformly mixing a negative electrode active material, the conductive agent Super P, a thickener carboxymethyl cellulose (CMC), and a binder styrene-butadiene rubber (SBR) in deionized water, where the negative electrode active material included graphite and a silicon-based material, the silicon-based material was a silicon oxide, the solid content in the negative electrode slurry was 30wt%, and the mass ratio of the negative electrode active material, silicon monoxide, Super P, CMC, and the binder styrene-butadiene rubber (SBR) in solid components was 88:7:3:2. The negative electrode slurry was coated onto upper and lower surfaces of a copper foil current collector and dried at 85°C, followed by cold pressing, trimming, slicing, and slitting. Then the negative electrode plate 224 was prepared by drying for 12 h under a vacuum condition of 120°C.

### 3. Preparation of an electrolytic solution

In an argon atmosphere glove box (H2O<0.1 ppm and O2<0.1 ppm), a thoroughly dried electrolyte salt LiPF6 was dissolved in a mixed solvent (the mixed solvent included ethylene carbonate (EC) and diethyl carbonate (DEC). The ethylene carbonate (EC) and the diethyl carbonate (DEC) were mixed at a mass ratio of 50:50. An electrolytic solution having a concentration of 1 mol/L was obtained after uniform mixing.

### 4. Preparation of a spacer 225

A polyethylene film having a thickness of 16 µm was used as the spacer 225.

### 5. Preparation of a lithium-ion battery cell 20

The positive electrode plate 223, the spacer 225, and the negative electrode plate 224 were laminated in order, so that the spacer 225 was located between the positive electrode plate 223 and the negative electrode plate 224 to space a positive electrode from a negative electrode, wound to obtain a bare battery core, and welded with tabs. The bare battery core was placed in a shell of different materials. The prepared electrolytic solution was injected into the dried shell, followed by packaging, standing, formation, shaping, capacity testing, and the like. In this way, the preparation of the lithium-ion battery cell 20 was completed.

In the following embodiments and comparative examples, the tensile strength of the case 211 of the battery cell 20 at a temperature of 500°C is Rn, and to obtain different tensile strengths Rn, different materials are correspondingly selected for the case 211. The capacity of the battery cell 20 is C. The wall thickness of a wall having the largest area of the battery cell 20 is T. The foregoing specific parameter settings are shown in Table 4. In addition, in each embodiment and comparative example, materials in all regions of the case 211 are the same, and the tensile strength Rn of the case 211 under a condition of 500°C is measured by using a method stipulated by GB/T 228.1-2010. In addition, except that the parameter settings shown in Table 4 are different, setting conditions of the battery cells 20 in the following embodiments and comparative examples are all the same. For example, the positive electrode active material of the positive electrode plate 223 of the electrode assembly 22 of the battery cell 20 in the embodiments includes a nickel-containing compound. The nickel-containing compound includes a layered lithium-containing transition metal oxide, and a molar weight of nickel in the layered lithium-containing transition metal oxide accounts for 95% of a total molar weight of transition metal elements in the layered lithium-containing transition metal oxide.

For the battery cell 20 in the following comparative examples and embodiments, the battery cell is tested with reference to a short circuit test method of Chapter 6.2.4 of *GBT31485-2015 Safety Requirement for Power Battery for Electric Vehicles and Test Method.* After the test, the integrity of the case 211 is observed. To be specific, whether the case 211 is cracked is observed.

**Table 4**

| | Rn (MPa) | T (mm) | C (Ah) | Case material | Test results |
|---|---|---|---|---|---|
| Comparative Example 1 | 13 | 0.7 | 350 | Aluminum | Case cracked |
| Comparative Example 2 | 12 | 0.15 | 72 | Aluminum | Case cracked |
| Embodiment 1 | 115 | 0.15 | 350 | Low carbon steel | Case integrated |
| Embodiment 2 | 113 | 0.15 | 72 | Low carbon steel | Case integrated |
| Embodiment 3 | 129 | 0.15 | 350 | Low carbon steel | Case integrated |
| Embodiment 4 | 194 | 0.15 | 350 | Stainless steel | Case integrated |
| Embodiment 5 | 191 | 0.15 | 72 | Stainless steel | Case integrated |
| Embodiment 6 | 234 | 0.15 | 350 | Stainless steel | Case integrated |

As can be seen by comparing the two comparative examples and the six embodiments in the foregoing Table 4, when the case 211 uses different materials, different tensile strengths Rn may be correspondingly determined. When the tensile strength Rn satisfies 100 MPa≤Rn≤1200 MPa, for example, in Embodiments 1 to 6, the case 211 of the battery cell 20 is not cracked, which can satisfy the design requirement of the battery cell 20. In addition, when other parameters of the battery cell 20 fluctuate differently, for example, the capacity C of the battery cell 20 is different, or the thickness of a wall having the largest area of the case 211 is different, the battery cell 20 is not cracked, which can satisfy the design requirement of the battery cell 20. However, when the tensile strength Rn does not satisfy 100 MPa≤Rn≤1200 MPa, for example, in Comparative Examples 1 to 2, the case 211 of the battery cell 20 is cracked, and therefore, the design requirement of the battery cell 20 cannot be satisfied.

It should be understood that at least a portion of regions of the case 211 in this embodiment of the present application may include a partial region of the case 211, or may include all regions of the case 211. In some embodiments, the case 211 includes a weld 2113. At least a portion of regions of the case 211 includes a region within a preset distance from the case 211 to the weld 2113. The preset distance is L, where L satisfies: L=10 mm. When the negative electrode active material of the negative electrode plate 224 of the electrode assembly 22 includes a silicon-based material, an amount of deformation of the electrode assembly 22 in the battery cell 20 during use is increased because the silicon-based material may accommodate more metal ions, causing volume expansion of the electrode assembly 22, and further increasing pressure of the electrode assembly 22 on the case 211 of the battery cell 20. Under the same conditions, the structural strength of a region of the case 211 close to the weld 2113 is small relative to the structural strength of another region of the case 211. Therefore, the region of the case 211 close to the weld 2113 is more prone to breaking during the use of the battery cell 20. Therefore, the region within the preset distance L from the weld 2113 is set to satisfy a requirement on the tensile strength Rm or the yield strength Re at the room temperature, so that the deformation capability of the region of the case 211 close to the weld 2113 can be improved, and the region of the case 211 is not prone to breaking, thereby increasing the structural stability and service life of the battery cell 20.

When the positive electrode active material of the positive electrode plate 223 of the electrode assembly 22 includes a nickel-containing compound, if thermal runaway occurs in the battery cell 20, an internal temperature of the battery cell 20 rapidly increases and a large quantity of gases are generated. However, under the same conditions, the structural strength of the region close to the weld 2113 of the case 211 is small relative to the structural strength of another region of the case 211. Therefore, the case 211 is prone to cracking in the region close to the weld 2113, and further, thermal runaway may be caused to a connected battery cell 20. To be specific, thermal diffusion is caused. Therefore, the region within the preset distance L from the weld 2113 is set to satisfy a requirement on the tensile strength Rn or the melting point p at a high temperature, so that the deformation capability of the portion of the case 211 can be improved, and the portion of the region is not prone to quick damage or complete melting, thereby reducing a risk of thermal diffusion or even explosion occurring between a plurality of battery cells 20, to improve the reliability of the battery 10.

It should be understood that the weld 2113 included in the case 211 in this embodiment of the present application may include a weld 2113 at any position of the case 211. For example, the weld 2113 included in the case 211 may include a weld between the case 211 and the cover plate 212. To be specific, a region surrounding an open end of the case 211 is a weld. For another example, the weld 2113 of the case 211 may further include a weld between different portions of the case 211. For example, the case 211 may include at least two portions. The at least two portions are connected by means of welding, to form the case 211. An example in which the case 211 includes two portions along a height direction Z of the battery cell 20 is used in FIG. 4, and a weld 2113 is provided between an upper half of the case and a lower half of the case. Alternatively, different from that shown in FIG. 4, another portion of the case 211 may be provided with a weld 2113. This is not limited in this embodiment of the present application.

In some embodiments, at least a portion of regions of the case 211 includes a surrounding region 2111 of the case 211. The surrounding region 2111 surrounds the electrode assembly 22. The surrounding region 2111 is at least a portion of regions of a side wall of the case 211. In this way, when the negative electrode active material of the negative electrode plate 224 of the electrode assembly 22 includes a silicon-based material, an amount of deformation of the electrode assembly 22 in the battery cell 20 during use is increased because the silicon-based material may accommodate more metal ions, causing volume expansion of the electrode assembly 22, and further increasing pressure of the electrode assembly 22 on the case 211 of the battery cell 20. Therefore, the surrounding region 2111 is disposed to satisfy a requirement on the tensile strength Rm or the yield strength Re at a room temperature, so that the deformation capability of the case 211 can be improved. In addition, the surrounding region 2111 is disposed around the electrode assembly 22, and an extrusion force of the electrode assembly 22 inside on the case 211 in a radial direction can be limited, so that the case 211 is not prone to breaking, thereby increasing the structural stability and service life of the battery cell 20.

When the positive electrode active material of the positive electrode plate 223 of the electrode assembly 22 includes a nickel-containing compound, if thermal runaway occurs in the battery cell 20, the internal temperature of the battery cell 20 rapidly increases and a large quantity of gases are generated. However, the surrounding region 2111 satisfies a requirement on the tensile strength Rn or the melting point p at a high temperature, so that the deformation capability of the surrounding region 2111 of the case 211 can be improved, and the surrounding region 2111 is not prone to quick damage or complete melting, excessively large expansion of the electrode assembly 22 inside the case 211 along a thickness direction thereof can be limited, thereby reducing a possibility of explosion of the battery cell 20, and further reducing a risk of thermal runaway occurring to adjacent battery cells 20, to improve the reliability of the battery 10.

It should be understood that the position and size of the surrounding region 2111 in this embodiment of the present application may be flexibly set according to an actual application. For example, along a height direction Z of the battery cell 20, a height of the surrounding region 2111 may be less than or equal to a height of the case 211. Specifically, if the height of the surrounding region 2111 is less than the height of the case 211 along the height direction Z of the battery cell 20, the surrounding region 2111 may be located at any position of the case 211 along the height direction Z of the battery cell 20. For example, the surrounding region 21111 may be located in the middle of the case 211 along the height direction Z of the battery cell 20, to limit deformation at the corresponding middle of the electrode assembly 22.

If the height of the surrounding region 2111 is equal to the height of the case 211 along the height direction Z of the battery cell 20, the surrounding region 2111 includes an entire side wall of the case 211, and may wrap a side face of the electrode assembly 22, thereby improving the structural strength of the side wall of the case 211, and reducing explosion and heat diffusion after thermal runaway of the battery cell 20 due to damage of a partial weak region of the side wall of the case 211, thereby improving the reliability of the battery 10.

In some embodiments, at least a portion of regions of the case 211 includes all walls of the case 211. To be specific, in this embodiment of the present application, at least a portion of regions of the case 211 may refer to all regions of the case 211. In this way, when the negative electrode active material of the negative electrode plate 224 of the electrode assembly 22 includes a silicon-based material, an amount of deformation of the electrode assembly 22 in the battery cell 20 during use is increased because the silicon-based material may accommodate more metal ions, causing volume expansion of the electrode assembly 22, and further increasing pressure of the electrode assembly 22 on the case 211 of the battery cell 20. Therefore, when all regions of the case 211 are set to satisfy a requirement on the tensile strength Rm or the yield strength Re at a room temperature, the overall deformation capability of the case 211 can be improved, and an extrusion force of the electrode assembly 22 inside on the case 211 in all directions can be further limited, so that the strengths of portions of the case 211 are balanced, and the partial weak region is not prone to breaking, thereby increasing the structural stability and service life of the battery cell 20.

When the positive electrode active material of the positive electrode plate 223 of the electrode assembly 22 includes a nickel-containing compound, if thermal runaway occurs in the battery cell 20, the internal temperature of the battery cell 20 rapidly increases and a large quantity of gases are generated. However, all regions of the case 211 satisfy a requirement on the tensile strength Rn or the melting point p at a high temperature, so that the overall deformation capability of the case 211 can be improved, the case 211 is not prone to damage or melting, and high-temperature and high-pressure gases inside the case 211 can be limited, thereby reducing impact on a connected battery cell 20, and further reducing a risk of thermal runaway occurring to adjacent battery cells 20, to improve the reliability of the battery 10.

Further, the cover plate 212 in this embodiment of the present application may use the same material as at least a portion of regions of the case 211 in this embodiment of the present application, so that the structural strength of the cover plate 212 also satisfies a design requirement. For example, the cover plate 212 may alternatively satisfy at least one requirement of the foregoing requirements on the tensile strength Rm and the yield strength Re at a room temperature, the tensile strength Rn and the melting point p at a high temperature, so as to improve the structural strength of the cover plate 212, and further improve the structural stability of the battery cell 20. However, this is not limited in this embodiment of the present application.

In this embodiment of the present application, at least a portion of regions of the case 211 has a tensile strength of Rm at a temperature of 25°C. At least a portion of the case 211 includes a third case wall 2112. The third case wall has an average thickness of T, where Rm and T satisfy: 250 MPa≤Rm≤2000 MPa, 0.05 mm≤T≤0.5 mm, and 60 mm·MPa≤T×Rm≤500 mm·MPa.

It should be understood that the third case wall 2112 of the case 211 in this embodiment of the present application may be any wall of the case 211. Specifically, the battery cell 20 may be of any polyhedral structure. The case 211 may be of a hollow structure with at least one end open. The case 211 may include one or more walls. The third case wall 2112 is any wall of the case 211. In addition, the case 211 may include one or more third case walls 2112. For example, if the case 211 is a polygonal prism, the third case wall 2112 may be any wall of the polygonal prism, and a surface of the third case wall 2112 may be any polygon. For another example, as shown in FIG. 3 and FIG. 4, if the case 211 is a cuboid, the third case wall 2112 may be any wall of the case 211, and the surface of the third case wall 2112 is rectangular. For another example, if the case 211 is a cylinder, the third case wall 2112 may be a bottom surface of the cylinder, or may be a side face of the cylinder. This is not limited in this embodiment of the present application. In addition, if two adjacent walls of the case 211 are connected by using a rounded corner, when the third case wall 2112 in this embodiment of the present application is any wall of the case 211, the third case wall 2112 does not include a connection region of a rounded corner between the wall and a connected wall.

In this embodiment of the present application, at least a portion of regions of the case 211 includes a third case wall 2112. Then the tensile strength of the third case wall 2112 at a room temperature of 25°C is Rm. By increasing the tensile strength Rm of at least a portion of regions of the case 211 at a room temperature of 25°C, the deformation capability of the case 211 can be improved, so that the case 211 is not prone to breaking during the use of the battery cell 20, thereby increasing the structural stability and service life of the battery cell 20. However, the tensile strength Rm of at least a portion of regions of the case 211 at the room temperature should not be excessively large, to reduce the selection difficulty and processing difficulty of the material of the case 211, reduce costs, and facilitate processing.

However, when the average thickness T of the third case wall 2112 of the case 211 is small, the structural strength of the third case wall 2112 may be increased by improving the tensile strength Rm of the third case wall 2112 of the case 211 at a room temperature of 25°C. In this way, the energy density of the battery cell 20 can be improved, and the structural strength and stability of the battery cell 20 can be improved. On the contrary, when the average thickness T of the third case wall 2112 of the case 211 is large, the structural strength of the case 211 can be improved, and a requirement on the tensile strength Rm of the third case wall 2112 of the case 211 at the room temperature can be properly reduced, to reduce difficulty in selecting a material of the case 211, thereby reducing the processing difficulty and processing costs of the battery cell 20. In addition, T×Rm represents the stiffness of the third case wall. It is limited that the stiffness of the third case wall cannot be excessively small or excessively large, so that the third case wall not only has a good deformation capability, but also can reduce the processing difficulty and reduce costs.

It should be understood that, in this embodiment of the present application, a value range of the average thickness T of the third case wall 2112 may alternatively be flexibly set according to an actual application. For example, the average thickness T of the third case wall 2112 satisfies: 0.05 mm≤T≤0.5 mm. Further, the average thickness T of the third case wall 2112 satisfies: 0.1 mm≤T≤0.4 mm. By properly reducing the average thickness T of the third case wall 2112, space occupied by the case 211 inside the battery 10 can be reduced, thereby improving the energy density of the battery 10. In addition, a requirement of the case 211 for the structural strength can be compensated by improving the tensile strength Rm of the third case wall 2112 at a room temperature, to maintain the stability of the case 211. Moreover, by properly increasing the average thickness T of the third case wall 2112, the processing difficulty of the third case wall 2112 can be reduced.

Further, the average thickness T of the third case wall 2112 satisfies: 0.1 mm≤T≤0.3 mm. The average thickness T of the third case wall 2112 is neither excessively large nor excessively small, which not only can improve the structural strength and structural stability of the case 211, but also can reduce space occupied by the case 211 inside the battery 10, thereby improving the energy density of the battery 10.

In some embodiments, the value of the average thickness T of the third case wall 2112 in this embodiment of the present application may alternatively be set to another value. For example, the value of the average thickness T of the third case wall 2112 may be any one of the following values or between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm, and 0.5 mm.

In some embodiments, the value range of T×Rm may alternatively be adjusted according to an actual application. For example, Rm and T satisfy: 60 mm·MPa≤T×Rm≤500 mm·MPa. Further, Rm and T may further satisfy: 100 mm·MPa≤T×Rm≤500 mm·MPa. By selecting a proper material, the tensile strength Rm of the third case wall 2112 at a room temperature can be improved, thereby reducing the average thickness T of the third case wall 2112, so that the stiffness value of the third case wall 2112 satisfies a design requirement, and not only the structural strength and the structural stability of the third case wall 2112 of the case 211 can be improved, but also the energy density of the battery cell 20 and the battery 10 can be improved.

Further, the value range of T×Rm may alternatively be set as follows: Rm and T satisfy: 100 mm·MPa≤T×Rm≤300 mm·MPa, so that the stiffness value of the third case wall 2112 is more suitable, thereby not only enabling the third case wall 2112 to have a good deformation capability, to prolong the service life of the battery cell 20, but also reducing difficulty in selecting a material, thereby reducing the processing difficulty and the processing costs.

In some embodiments, the value of T×Rm in this embodiment of the present application may alternatively be set to another value. For example, the value of T×Rm may be any one of the following values or may be between any two of the following values: 60 mm·MPa, 65 mm·MPa, 70 mm-MPa, 75 mm·MPa, 80 mm·MPa, 85 mm·MPa, 90 mm·MPa, 95 mm·MPa, 100 mm·MPa, 130 mm·MPa, 150 mm·MPa, 180 mm·MPa, 200 mm·MPa, 230 mm·MPa, 250 mm·MPa, 280 mm·MPa, 300 mm·MPa, 330 mm·MPa, 350 mm·MPa, 380 mm·MPa, 400 mm·MPa, 430 mm·MPa, 450 mm·MPa, 480 mm·MPa, and 500 mm·MPa.

In this embodiment of the present application, the value of the mass ratio g of the silicon-based material and the value of the average thickness T of the third case wall 2112 may be mutually limited, and the value of the tensile strength Rm of at least a portion of regions of the case 211 at a temperature is 25°C may be mutually limited, to balance a relationship between the energy density and structural strength of the battery cell 20. For example, in the negative electrode active material, the mass ratio of the silicon-based material is g, where g and T satisfy: 2%<g<20% and 0.15 mm≤T≤0.4 mm. When the mass ratio g of the silicon-based material is small, the average thickness T of the third case wall 2112 may be properly reduced, so as to improve space utilization of the case 211, improve the energy density of the battery cell 20, and further balance the structural strength of the case 211.

In some embodiments, the mass ratio of the silicon-based material in the negative electrode active material is g, where g, T, and Rm satisfy: 15%<g<40%, 0.2 mm≤T≤0.4 mm, and 100 mm·MPa≤T×Rm≤500 mm·MPa. By increasing the mass g of the silicon-based material, the energy density of the battery cell 20 can be effectively increased, the thickness and the stiffness T×Rm of the third case wall 2112 are improved, and the structural strength and stability of the battery cell 20 can be improved.

It should be understood that the average thickness T of the third case wall 2112 in this embodiment of the present application may refer to an average thickness of at least a portion of regions of the third case wall 2112. For example, the average thickness T of the third case wall 2112 may refer to an average thickness T of all regions of the third case wall 2112. Particularly, when the third case wall 2112 is relatively flat, to be specific, the thicknesses of most regions of the third case wall 2112 are substantially equal or slightly different, or the thicknesses of all regions of the third case wall 2112 are substantially equal or slightly different, it may be determined that the average thickness of all regions of the third case wall 2112 is T.

For another example, the average thickness T of the third case wall 2112 may alternatively refer to an average thickness T of a partial region of the third case wall 2112, i.e., an average thickness T of a remaining region after some regions of the third case wall 2112 are excluded. For example, if a special region exists in the third case wall 2112 and the thickness of the special region is greatly different from that of another region, for example, a protrusion structure or a recess region exists in the special region so that the thickness of the special region is greater or smaller than that of another region, the special region may be excluded, to calculate an average thickness T of a remaining region of the third case wall 2112.

In some embodiments, the third case wall 2112 includes a functional region. The average thickness T of the third case wall 2112 is an average thickness of a region of the third case wall 2112 other than the functional region. The functional region includes at least one of the following regions: a pressure relief region, a region in which an electrode terminal 214 is located, a liquid injection region, and a welding region. A difference between the thickness of the functional region and the thickness of another region of the third case wall 2112 is generally large. Therefore, when the average thickness T of the third case wall 2112 excluding the functional region is calculated, the design of the third case wall 2112 better meets strength requirements, to improve the structural strength and stability of the battery cell 20.

Specifically, the functional region in this embodiment of the present application may include a region provided with a specific structure or having a specific use on the third case wall 2112. For example, the functional region may include a pressure relief region. The pressure relief region is configured for arrangement of a pressure relief mechanism. The pressure relief mechanism is configured to, when an internal pressure or temperature of the battery cell 20 reaches a predetermined threshold, actuate an element or a component for relieving the internal pressure or temperature. The predetermined threshold may be adjusted according to different design requirements. For example, the predetermined threshold may depend on one or more materials of a positive electrode plate, a negative electrode plate, an electrolytic solution, and a separator in the battery cell 20.

"Actuation" mentioned in the present application means that the pressure relief mechanism acts or is activated to a particular state, so that the internal pressure and temperature of the battery cell 20 are relieved. The action generated by the pressure relief mechanism may include, but is not limited to: at least a portion in the pressure relief mechanism is cracked, broken, torn, or opened. When the pressure relief mechanism performs actuation, a high-temperature and high-pressure material inside the battery cell 20 is discharged from an actuated part as an emission. In this way, the pressure and temperature of the battery cell 20 can be relieved with a controllable pressure or temperature, thereby avoiding a potential more serious accident.

The emission from the battery cell 20 mentioned in the present application includes, but is not limited to: an electrolytic solution, positive and negative electrode plates that are dissolved or split, fragments of a separator, a high-temperature and high-pressure gas generated by a reaction, and a flame.

The pressure relief mechanism in this embodiment of the present application may be disposed in any wall of the battery cell 20. For example, the pressure relief mechanism may be disposed in a pressure relief region of the third case wall 2112 of the battery cell 20. The pressure relief mechanism may be a portion of the third case wall 2112, or may be of a split structure with the third case wall 2112 and fixed to the third case wall 2112 by means of, for example, welding. For example, when the pressure relief mechanism is a portion of the third case wall 2112, for example, the pressure relief mechanism may be formed by providing a score on the third case wall 2112, to be specific, the third case wall 2112 is provided with a score in the pressure relief region, and the thickness of the score is obviously less than the thickness of another region of the third case wall 2112. Therefore, the thickness of the score may not be calculated for the average thickness T of the third case wall 2112. The score is a weakest position of the pressure relief mechanism. When too much gas is generated in the battery cell 20, which causes the internal pressure to increase and reach a threshold, or when heat is generated by means of an internal reaction in the battery cell 20, which causes the internal temperature of the battery cell 20 to increase and reach a threshold, the pressure relief mechanism may be cracked at the score, to cause internal and external communication of the battery elevator 20. The pressure and temperature of the gas are released to the outside by splitting of the pressure relief mechanism, thereby avoiding explosion of the battery cell 20.

For another example, the pressure relief mechanism may alternatively be of a split structure with the third case wall 2112. The pressure relief mechanism may use a form such as an anti-explosion valve, a gas valve, a pressure relief valve, or a safety valve, and may specifically use a pressure-sensitive or temperature-sensitive element or structure. For example, a through hole is provided at the pressure relief region in the third case wall 2112. The pressure relief mechanism and the third case wall 2112 are mounted and fixed to each other by using the through hole. The mounted pressure relief mechanism may be protruded or recessed relative to another region of the third case wall 2112. Therefore, for calculation of the average thickness T of the third case wall 2112, a pressure relief region in which the pressure relief mechanism is located may not be included. When the internal pressure or temperature of the battery cell 20 reaches a predetermined threshold, the pressure relief mechanism performs an action or a weak structure in the pressure relief mechanism is damaged, to form an opening or a channel for relieving the internal pressure or temperature.

In some embodiments, the functional region may further include a region in which the electrode terminal 214 is located. Specifically, the electrode terminal 214 in this embodiment of the present application is configured to be electrically connected to the electrode assembly 22 inside the battery cell 20, to output electric energy of the battery cell 20. In addition, the battery cell 20 may include at least two electrode terminals 214. The at least two electrode terminals 214 respectively include at least one first electrode terminal 214a and at least one second electrode terminal 214b. The first electrode terminal 214a and the second electrode terminal 214b have opposite polarity. For example, the first electrode terminal 214a may be a positive electrode terminal, and the second electrode terminal 214b is a negative electrode terminal. Alternatively, the first electrode terminal 214a may be a negative electrode terminal, and the second electrode terminal 214b is a positive electrode terminal. The positive electrode terminal is configured to be electrically connected to a positive tab 222a of the electrode assembly 22. The negative electrode terminal is configured to be electrically connected to a negative tab 222b of the electrode assembly 22. The positive electrode terminal may be connected to the positive tab 222a directly or indirectly. The negative electrode terminal may be directly connected to the negative tab 222b directly or indirectly. For example, the positive electrode terminal may be electrically connected to the positive tab 222a by using one connection member 23. The negative electrode terminal is electrically connected to the negative tab 222b by using one connection member 23.

It should be understood that each electrode terminal 214 in this embodiment of the present application may be disposed on any wall, and the plurality of electrode terminals 214 may be disposed on the same wall or different walls of the battery cell 20. For example, as shown in FIG. 3 and FIG. 4, each battery cell 20 includes two electrode terminals 214, and the two electrode terminals 214 are located on the same wall. For example, the two electrode terminals 214 may be both located on the cover plate 212.

For another example, each battery cell 20 includes two electrode terminals 214, and the two electrode terminals 214 are located on the same wall. Different from that shown in FIG. 3 and FIG. 4, the two electrode terminals 214 may alternatively be located on the case 211. For example, the two electrode terminals 214 may be both located on the third case wall 2112 of the case 211. When the electrode terminal 214 is located on the third case wall 2112, the electrode terminal 214 is generally protruded out of another region of the third case wall 2112. To be specific, the thickness of a region in which the electrode terminal 214 is located is much greater than the thickness of another region of the third case wall 2112. Therefore, for calculation of the average thickness T of the third case wall 2112, the region in which the electrode terminal 214 is located may not be included.

In some embodiments, the functional region may further include a liquid injection region. For example, a liquid injection hole may be provided in the liquid injection region of the third case wall 2112. An electrolytic solution is injected into the case 211 through the liquid injection hole. After the injection of the electrolytic solution is completed, the liquid injection hole may be sealed by using a sealing member. Considering that the thickness of the liquid injection region in which the sealing member is located is generally much greater than the thickness of another region of the third case wall 2112, for calculation of the average thickness T of the third case wall 2112, the liquid injection region may not be included.

In some embodiments, the functional region may further include a welding region. For example, the third case wall 2112 may be fixed to another wall by means of welding. Alternatively, the third case wall 2112 needs to be processed and formed by means of welding, and then the third case wall 2112 may include a welding region. For example, as shown in FIG. 4, the case 211 may be welded in a splicing manner, and then the case 211 may have a weld 2113. Specifically, the case 211 may include at least two portions. The at least two portions are connected by means of welding, to form the case 211. An example in which the case 211 includes two portions along a height direction Z of the battery cell 20 is used in FIG. 4, and a weld 2113 is provided between an upper half of the case and a lower half of the case. Alternatively, different from that shown in FIG. 4, another portion of the case 211 may be provided with a weld 2113. This is not limited in this embodiment of the present application. The welding region of the functional region in this embodiment of the present application may further include the weld 2113. Due to a processing process, the thickness of the welding region is generally greater than the thickness of another region of the third case wall 2112. Therefore, for calculation of the average thickness T of the third case wall 2112, the welding region may not be included.

In this embodiment of the present application, the third case wall 2112 of the case 211 may be any wall of the case 211. For example, the third case wall 2112 is a thinner wall of the case 211. To be specific, by limiting the thickness T of the thinner wall of the case 211, the thickness of another wall of the case 211 is limited, so that each wall of the case 211 may satisfy a structural strength requirement, thereby improving the structural strength and stability of the battery cell 20.

In some embodiments, the third case wall 2112 is a wall having the largest area of the case 211. Considering that when a plurality of battery cells 20 are arranged in the battery 10, the plurality of battery cells 20 generally abut against each other by using the wall having the largest area of the case 211, the wall having the largest area is generally subject to a maximum extrusion force of the electrode assembly 22. Then, by limiting the average thickness T of the third case wall 2112 and the tensile strength Rm at the room temperature, the deformation capability of the case 211 can be effectively improved, thereby improving the structural strength and stability of the battery cell 20.

It should be understood that the position of the wall having the largest area of the case 211 in this embodiment of the present application may be set according to an actual application. For example, the battery 10 may include a plurality of battery cells 20. An arrangement direction of the plurality of battery cells 20 may be perpendicular or parallel to the wall having the largest area of the case 211. This is not limited in this embodiment of the present application.

In some embodiments, the case 211 includes an intersecting bottom wall and side wall. The bottom wall is configured to support an electrode assembly accommodated in the case 211. Specifically, the case 211 may be of a hollow structure with at least one end open. The bottom wall and the side wall of the case 211 do not necessarily refer to walls opposite to and adjacent to the opening, respectively. The electrode assembly 22 is accommodated inside the case 211. In consideration of an actual application, disposition directions of the electrode assembly 22 may be different in different application scenarios. The case 211 may include a wall for supporting the electrode assembly 22. Therefore, the bottom wall of the case 211 in this embodiment of the present application is a wall for supporting the electrode assembly 22. To be specific, the bottom wall of the case 211 is configured to bear the gravity of the electrode assembly 22. Oppositely, a wall directly intersecting with the bottom wall of the case 211 is the side wall of the case 211.

In some embodiments, the third case wall 2112 is the side wall of the case 211. In consideration of different uses of the bottom wall and the side wall of the case 211, design requirements of the bottom wall and the side wall may also be different. For example, the side wall of the case 211 generally has a higher requirement on the deformation capability. Therefore, when the third case wall 2112 is the side wall of the case 211, the deformation capability of the side wall of the case 211 can be effectively improved by limiting the tensile strength Rm of the side wall of the case 211 at a room temperature and the average thickness T of the side wall, thereby improving the structural stability of the battery cell 20.

In some embodiments, the case 211 includes a plurality of side walls. The plurality of side walls have equal thickness, for ease of processing.

In some embodiments, the thickness of the bottom wall of the case 211 is equal to the thickness of the side wall of the case 211, to facilitate processing and optimize space occupied by the case 211.

In some embodiments, the third case wall 2112 is perpendicular to a stacking direction of electrode plates of the electrode assembly 22. The stacking direction of the electrode plates of the electrode assembly 22 is generally a thickness direction of the electrode assembly 22. Considering that the electrode assembly 22 is prone to expansion in the thickness direction of the electrode assembly 22 during the cyclic charging and discharging use of the battery cell 20, deformation requirements on the corresponding wall of the case 211 are high. Therefore, by setting the third case wall 2112 as a wall perpendicular to the stacking direction of the electrode plates of the electrode assembly 22, or arranging the third case wall 2112 and the electrode assembly 22 along the stacking direction of the electrode plates of the electrode assembly 22, the tensile strength Rm of the third case wall 2112 at a room temperature and the average thickness T can be limited, to not only improve the energy density of the battery cell 20, but also effectively improve the deformation capability of the third case wall 2112, thereby improving the structural stability of the battery cell 20.

It should be understood that the cover plate 212 in this embodiment of the present application may use the same design as or a different design from the third case wall 2112. For example, the cover plate 212 and the third case wall 2112 may use the same design. To be specific, an average thickness of the cover plate 212 may be T, a tensile strength of the cover plate 212 at a room temperature may be b, and design requirements of b and T are satisfied, to improve the deformation capability of the cover plate 212, thereby improving the structural strength and stability of the battery cell 20.

In some embodiments, a ratio of an internal space volume of the case 211 to an outer contour volume of the case 211 is greater than or equal to 93%. To be specific, the thickness of the case 211 is small, so that the case 211 occupies a small space, thereby improving the space utilization and energy density of the battery 10.

It should be understood that a specific calculation method for the internal space volume of the case 211 and the outer contour volume of the case 211 in this embodiment of the present application is related to the shape of the case 211. For example, the case 211 is a cuboid. FIG. 8 shows a side-view schematic diagram of a case 211 according to an embodiment of the present application. FIG. 9 shows a top-view schematic diagram of a case 211 according to an embodiment of the present application. For example, the case 211 shown in FIG. 8 and FIG. 9 may be the case 211 of the battery cell 20 shown in FIG. 3 and FIG. 4.

As shown in FIG. 8 and FIG. 9, a cuboid case 211 is used as an example herein, and the case 211 is a hollow cuboid with one end open. When the internal space volume of the case 211 and the outer contour volume of the case 211 are calculated, a rounded corner connection between adjacent walls of the case 211 may be ignored. As shown in FIG. 8 and FIG. 9, because each wall of the case 211 has a particular thickness, in a length direction Y, an inner length of the case 211 is Y1, and an outer length is Y2, where Y2 is greater than Y1. Similarly, in a width direction X, an inner width of the case 211 is X1, and an outer width is X2, where X2 is greater than X1. In a height direction Z, an inner height of the case 211 is Z1, and an outer height is Z2, where Z2 is greater than Z1. Therefore, an internal space volume of the case 211 satisfies: V1=X1×Y1×Z1. An external space volume of the case 211 satisfies: V2=X2×Y2×Z2, where V1/V2 is greater than or equal to 93%, to reduce space occupied by the case 211, thereby improving the space utilization and energy density of the battery 10.

A plurality of comparative examples and a plurality of embodiments are used for comparison below. Specifically, the battery cells 20 in the following embodiments and comparative examples belong, for example, to a square battery shown in FIG. 3 and FIG. 4, where the case 211 is of a hollow structure with one end open.

In the following embodiments and comparative examples, methods for preparing a positive electrode plate 223, a negative electrode plate 224, an electrolytic solution, and a spacer 225 of the battery cell 20 are as follows.

### 1. Preparation of a positive electrode plate 223

A positive electrode slurry was prepared by mixing a positive electrode active material LiNi_{0.95}Co_{0.04}Mn_{0.01}O₂, a conductive agent Super P, and a binder polyvinylidene fluoride (PVDF) in N-methylpyrrolidone (NMP), where the solid content in the positive electrode slurry was 50wt%, and a mass ratio of LiNi_{0.7}Co_{0.1}Mn_{0.1}O₂, Super P, and PVDF in solid components was 8:1:1. The positive electrode slurry was coated onto upper and lower surfaces of an aluminum foil current collector and dried at 85°C, followed by cold pressing, trimming, slicing, and slitting. Then the positive electrode plate 223 was prepared by drying for 4 h under a vacuum condition of 85°C.

### 2. Preparation of a negative electrode plate 224

A negative electrode slurry was prepared by uniformly mixing a negative electrode active material, the conductive agent Super P, a thickener carboxymethyl cellulose (CMC), and a binder styrene-butadiene rubber (SBR) in deionized water, where the negative electrode active material included graphite and a silicon-based material, the silicon-based material was a silicon oxide, the solid content in the negative electrode slurry was 30wt%, and the mass ratio of the negative electrode active material, silicon monoxide, Super P, CMC, and the binder styrene-butadiene rubber (SBR) in solid components was 88:7:3:2. The negative electrode slurry was coated onto upper and lower surfaces of a copper foil current collector and dried at 85°C, followed by cold pressing, trimming, slicing, and slitting. Then the negative electrode plate 224 was prepared by drying for 12 h under a vacuum condition of 120°C.

### 3. Preparation of an electrolytic solution

In an argon atmosphere glove box (H2O<0.1 ppm and O2<0.1 ppm), a thoroughly dried electrolyte salt LiPF6 was dissolved in a mixed solvent (the mixed solvent included ethylene carbonate (EC) and diethyl carbonate (DEC). The ethylene carbonate (EC) and the diethyl carbonate (DEC) were mixed at a mass ratio of 50:50. An electrolytic solution having a concentration of 1 mol/L was obtained after uniform mixing.

### 4. Preparation of a spacer 225

A polyethylene film having a thickness of 16 µm was used as the spacer 225.

### 5. Preparation of a lithium-ion battery cell 20

The positive electrode plate 223, the spacer 225, and the negative electrode plate 224 were laminated in order, so that the spacer 225 was located between the positive electrode plate 223 and the negative electrode plate 224 to space a positive electrode from a negative electrode, wound to obtain a bare battery core, and welded with tabs. The bare battery core was placed in a shell of different materials. The prepared electrolytic solution was injected into the dried shell, followed by packaging, standing, formation, shaping, capacity testing, and the like. In this way, the preparation of the lithium-ion battery cell 20 was completed.

In the following embodiments and comparative examples, the tensile strength of the case 211 of the battery cell 20 at a temperature of 25°C is Rm, and to obtain different tensile strengths Rm, different materials are correspondingly selected for the case 211. The average thickness of the third case wall 2112 of the case 211 is T. The foregoing specific parameter settings are shown in Table 5. In addition, in each embodiment and comparative example, materials in all regions of the case 211 are the same, and the tensile strength Rm of the case 211 under a condition of 25°C is measured by using a method stipulated by GB/T 228.1-2010. In addition, except that the parameter settings shown in Table 5 are different, setting conditions of the battery cells 20 in the following embodiments and comparative examples are all the same. For example, the capacity of the battery cell 20 in each embodiment is 350 Ah.

A cyclic charging fatigue test is performed on the battery cells 20 in the following embodiments and comparative examples. Specifically, the test may be performed by using a clamp 700 for the cyclic charging fatigue test shown in FIG. 7.

Specifically, the battery cell 20 is clamped and fixed into the dedicated clamp 700, to ensure that two opposite walls having the largest area of the battery cell 20 are clamped, an initial pressure is set to 2000 N, and the electrode terminal 214 of the battery cell 20 is connected to a dedicated battery charging and discharging device.

The clamp 700 holding the battery cell 20 is placed in a constant-temperature environment of 25+2°C, and a test is started after the battery cell 20 reaches temperature balance.

Specific test steps are performed with reference to Chapter 6.4 "Standard Cycle Life" of *GBT31484-2015 Cycle Life Requirement of Power Battery for Electric Vehicles and Test Method,* and a test cycle stopping condition is changed to "Stopping the test until a weld 2113 of the battery cell 20 is broken".

For example, the test may be performed according to the following steps: step a: discharging at 1I(A) to a discharging termination condition specified by an enterprise; step b: stopping for not less than 30 min or a stopping condition specified by the enterprise; step c: charging according to a method 6.1.1.3; step d: stopping for not less than 30 min or the stopping condition specified by the enterprise; step e: discharging at 1I1(A) to the discharging termination condition specified by the enterprise; and step f: cyclically performing step b to step e, and stopping testing until the weld 2113 is broken.

In the foregoing test process, the weld 2113 of the battery cell 20 is continuously observed until liquid leakage occurs in the weld 2113, and the number of cycles is recorded, to obtain conditions of the case 211 after 1000 cycles shown in Table 5. In the following embodiments and comparative examples, the weld 2113 refers to a weld between the case 211 and the cover plate 212. To be specific, the weld 2113 surrounds an open end of the case 211, and the case 211 is of an integrally formed structure.

**Table 5**

| | T (mm) | Rm (MPa) | T×Rm (mm·MPa) | Case material | Conditions of case after 1000 cycles |
|---|---|---|---|---|---|
| Comparative Example 1 | 0.1 | 170 | 17 | Aluminum | 656 cracks of case |
| Comparative Example 2 | 0.3 | 170 | 51 | Aluminum | 437 cracks of case |
| Embodiment 1 | 0.2 | 328 | 65.6 | Q195 | Not cracked |
| Embodiment 2 | 0.3 | 328 | 98.4 | Q195 | Not cracked |
| Embodiment 3 | 0.16 | 396 | 63.36 | SPCC | Not cracked |
| Embodiment 4 | 0.3 | 396 | 118.8 | SPCC | Not cracked |
| Embodiment 5 | 0.14 | 459 | 64.26 | SUS430 | Not cracked |
| Embodiment 6 | 0.3 | 459 | 137.7 | SUS430 | Not cracked |
| Embodiment 7 | 0.12 | 533 | 63.96 | SUS304 | Not cracked |
| Embodiment 8 | 0.3 | 533 | 159.9 | SUS304 | Not cracked |
| Embodiment 9 | 0.1 | 625 | 62.5 | SUS304 | Not cracked |
| Embodiment 10 | 0.3 | 625 | 187.5 | SUS304 | Not cracked |
| Embodiment 11 | 0.1 | 763 | 76.3 | SUS304 | Not cracked |
| Embodiment 12 | 0.3 | 763 | 228.9 | SUS304 | Not cracked |

It should be understood that, in the foregoing Table 5, the material of the case 211 may be Q195 carbon steel, and the tensile strength Rm of the Q195 carbon steel at a room temperature of 25°C is generally at least 315 MPa to 430 MPa. In the forgoing embodiments, the tensile strength is only 328 MPa, but this is not limited thereto. Similarly, the material of the case 211 may be SPCC carbon steel, and the tensile strength Rm of the SPCC carbon steel at a room temperature of 25°C is generally at least 380 MPa to 430 MPa. In the forgoing embodiments, the tensile strength is only 396 MPa. The material of the case 211 may be SUS430 stainless steel, and the tensile strength Rm of the SUS430 stainless steel at a room temperature of 25°C is generally at least 450 MPa. In the forgoing embodiments, the tensile strength is only 459 MPa. The material of the case 211 may be SUS304 stainless steel, and the tensile strength Rm of the SUS304 stainless steel at a room temperature of 25°C is generally at least 520 MPa. In the forgoing embodiments, the tensile strength is only 533 MPa, 625 MPa, and 763 MPa.

As can be seen from the foregoing Table 5, in the forgoing embodiments 1 to 12, Rm and T of the third case wall 2112 of the case 211 satisfy: 250 MPa≤Rm≤2000 MPa, 0.05 mm≤T≤0.5 mm, and 60 mm·MPa≤T×Rm≤500 mm·MPa. Failures and fatigues of the battery cell 20 may reach more than one thousand, to satisfy a design requirement of the battery cell 20. In addition, even if the average thickness T of the third case wall 2112 is set to be small, the failures and fatigues of the battery cell 20 may reach more than one thousand, and the average thickness T of the third case wall 2112 is set to be small, so that the energy density of the battery 10 can be increased. However, in the two comparative examples, the structural strength of the third case wall 2112 is insufficient, and Rm and T×Rm both do not satisfy the foregoing values. Even if the average thickness T of the third case wall 2112 is large, the failures and fatigues of the battery cell 20 cannot reach more than one thousand, and the design requirement of the battery cell 20 cannot be satisfied.

In some embodiments, the capacity of the battery cell is C. At least a portion of regions of the case has a tensile strength of Rm at a temperature of 25°C, where Rm and C satisfy: 250 MPa≤Rm≤2000 MPa and 25 Ah≤C≤550 Ah. On the one hand, the capacity C of the battery cell 20 is increased, so that the capacity density of the battery 10 including a plurality of such battery cells 20 can be increased. Alternatively, when the total capacity of the battery 10 is not changed, if the capacity C of a single battery cell 20 is increased, the number of disposed battery cells 20 can be reduced. Correspondingly, the quantity of electrical connections between the plurality of battery cells 20 can also be reduced, thereby reducing a probability that the electrical connection fails, thereby helping improve the reliability of the battery. In addition, when the capacity C of the battery cell 20 is large, a requirement of a high-capacity battery cell 20 for the structural strength of the case 211 may further be satisfied by increasing the tensile strength Rm of at least a portion of regions of the case 211 at a room temperature of 25°C, thereby increasing the reliability and service life of the battery cell 20. On the other hand, if the battery cell 20 has a large capacity, a reaction inside is exacerbated, thereby increasing a requirement on the structural strength of the case 211. Therefore, the capacity C of the battery cell 20 should not be excessively large, to limit a design requirement on the structural strength of the case 211. In this way, the material selection difficulty and processing difficulty of the battery cell 20 can be reduced, thereby reducing costs and improving processing efficiency.

It should be understood that a value range of the capacity C of the battery cell 20 in this embodiment of the present application may be adjusted according to an actual application. For example, the capacity C of the battery cell 20 may be properly selected according to an actual requirement of the battery 10. In some embodiments, it may be set that the capacity C of the battery cell 20 further satisfies: 100 Ah≤C≤300 Ah. By properly improving the capacity C of the battery cell 20, the energy density of the battery 10 can be improved. In addition, the capacity C of the battery cell 20 should not be excessively large, to balance a relationship between the capacity C of the battery cell 20 and the structural strength of the case 211, thereby increasing the reliability and service life of the battery cell 20.

Further, the capacity C of the battery cell 20 may further satisfy: 150 Ah≤C≤250 Ah. Further limiting the capacity C of the battery cell 20 can not only improve the energy density of the battery 10, but also improve the structural strength of the case 211, thereby increasing the reliability and service life of the battery cell 20 and the battery 10.

In some embodiments, the value of the capacity C of the battery cell 20 in this embodiment of the present application may alternatively be set to another value. For example, the value of the capacity C of the battery cell 20 may be any one of the following values or between any two of the following values: 25 Ah, 30 Ah, 35 Ah, 40 Ah, 45 Ah, 50 Ah, 55 Ah, 60 Ah, 65 Ah, 70 Ah, 75 Ah, 80 Ah, 85 Ah, 90 Ah, 95 Ah, 100 Ah, 130 Ah, 150 Ah, 180 Ah, 200 Ah, 230 Ah, 250 Ah, 280 Ah, 300 Ah, 330 Ah, 350 Ah, 380 Ah, 400 Ah, 430 Ah, 450 Ah, 480 Ah, 500 Ah, 530 Ah, and 550 Ah.

It should be understood that the capacity C of the battery cell 20 in this embodiment of the present application represents an amount of electricity that is output when the battery cell is discharged to a termination voltage under a specified discharging condition when the battery cell 20 is fully charged. A manner of testing the capacity C of the battery cell 20 may be selected according to an actual application. For example, a discharging test may be performed by using GB/T 31467.1, to determine the capacity C of the battery cell 20. However, this is not limited in this embodiment of the present application.

A plurality of comparative examples and a plurality of embodiments are used for comparison below. Specifically, the battery cells 20 in the following embodiments and comparative examples belong, for example, to a square battery shown in FIG. 3 and FIG. 4, where the case 211 is of a hollow structure with one end open.

In the following embodiments and comparative examples, methods for preparing a positive electrode plate 223, a negative electrode plate 224, an electrolytic solution, and a spacer 225 of the battery cell 20 are as follows.

### 1. Preparation of a positive electrode plate 223

A positive electrode slurry was prepared by mixing a positive electrode active material LiNi_{0.95}Co_{0.04}Mn_{0.01}O₂, a conductive agent Super P, and a binder polyvinylidene fluoride (PVDF) in N-methylpyrrolidone (NMP), where the solid content in the positive electrode slurry was 50wt%, and a mass ratio of LiNi_{0.7}Co_{0.1}Mn_{0.1}O₂, Super P, and PVDF in solid components was 8:1:1. The positive electrode slurry was coated onto upper and lower surfaces of an aluminum foil current collector and dried at 85°C, followed by cold pressing, trimming, slicing, and slitting. Then the positive electrode plate 223 was prepared by drying for 4 h under a vacuum condition of 85°C.

### 2. Preparation of a negative electrode plate 224

A negative electrode slurry was prepared by uniformly mixing a negative electrode active material, the conductive agent Super P, a thickener carboxymethyl cellulose (CMC), and a binder styrene-butadiene rubber (SBR) in deionized water, where the negative electrode active material included graphite and a silicon-based material, the silicon-based material was a silicon oxide, the solid content in the negative electrode slurry was 30wt%, and the mass ratio of the negative electrode active material, silicon monoxide, Super P, CMC, and the binder styrene-butadiene rubber (SBR) in solid components was 88:7:3:2. The negative electrode slurry was coated onto upper and lower surfaces of a copper foil current collector and dried at 85°C, followed by cold pressing, trimming, slicing, and slitting. Then the negative electrode plate 224 was prepared by drying for 12 h under a vacuum condition of 120°C.

### 3. Preparation of an electrolytic solution

In an argon atmosphere glove box (H2O<0.1 ppm and O2<0.1 ppm), a thoroughly dried electrolyte salt LiPF6 was dissolved in a mixed solvent (the mixed solvent included ethylene carbonate (EC) and diethyl carbonate (DEC). The ethylene carbonate (EC) and the diethyl carbonate (DEC) were mixed at a mass ratio of 50:50. An electrolytic solution having a concentration of 1 mol/L was obtained after uniform mixing.

### 4. Preparation of a spacer 225

A polyethylene film having a thickness of 16 µm was used as the spacer 225.

### 5. Preparation of a lithium-ion battery cell 20

The positive electrode plate 223, the spacer 225, and the negative electrode plate 224 were laminated in order, so that the spacer 225 was located between the positive electrode plate 223 and the negative electrode plate 224 to space a positive electrode from a negative electrode, wound to obtain a bare battery core, and welded with tabs. The bare battery core was placed in a shell of different materials. The prepared electrolytic solution was injected into the dried shell, followed by packaging, standing, formation, shaping, capacity testing, and the like. In this way, the preparation of the lithium-ion battery cell 20 was completed.

In the following embodiments and comparative examples, the tensile strength of the case 211 of the battery cell 20 at a temperature of 25°C is Rm, and to obtain different tensile strengths Rm, different materials are correspondingly selected for the case 211. The capacity of the battery cell 20 is C. The foregoing specific parameter settings are shown in Table 6. In addition, in each embodiment and comparative example, materials in all regions of the case 211 are the same, and the tensile strength Rm of the case 211 under a condition of 25°C is measured by using a method stipulated by GB/T 228.1-2010. In addition, except that the parameter settings shown in Table 6 are different, setting conditions of the battery cells 20 in the following embodiments and comparative examples are all the same. For example, the wall thickness of the wall having the largest area of the battery cell 20 in the embodiments is 0.15 mm. For another example, a chemical system of the battery cell 20 in each embodiment is a nickel-cobalt-manganese ternary system.

**Table 6**

| | Rm (MPa) | C (Ah) | Case material | Test results |
|---|---|---|---|---|
| Comparative Example 1 | 177 | 500 | Aluminum | Case cracked |
| Comparative Example 2 | 190 | 100 | Aluminum | Case cracked |
| Embodiment 1 | 393 | 500 | Low carbon steel | Case integrated |
| Embodiment 2 | 394 | 300 | Low carbon steel | Case integrated |
| Embodiment 3 | 390 | 100 | Low carbon steel | Case integrated |
| Embodiment 4 | 851 | 500 | Stainless steel | Case integrated |
| Embodiment 5 | 854 | 300 | Stainless steel | Case integrated |
| Embodiment 6 | 845 | 100 | Stainless steel | Case integrated |

As can be seen by comparing the two comparative examples and the six embodiments in the foregoing Table 6, when the case 211 uses different materials, different tensile strengths Rm may be correspondingly determined. When the tensile strength Rm satisfies 250 MPa≤Rm≤2000 MPa and the capacity C of the battery cell 20 satisfies 25 Ah≤C≤550 Ah, for example, in Embodiments 1 to 6, the case 211 of the battery cell 20 is not cracked, the structural strength of the case 211 can be applied to a large-capacity battery cell 20, and a design requirement of the battery cell 20 can be satisfied. However, when the tensile strength Rm does not satisfy 250 MPa≤Rm≤2000 MPa, for example, in Comparative Examples 1 to 2, the case 211 of the battery cell 20 is cracked, and therefore, the design requirement of the battery cell 20 cannot be satisfied.

It should be understood that to satisfy the foregoing design requirement, the material of at least a portion of regions of the case 211 in this embodiment of the present application may be flexibly selected according to an actual application.

In some embodiments, the material of at least a portion of regions of the case 211 includes at least one of the following: steel, a copper alloy, a titanium alloy, and a nickel alloy. These materials have large strength, can satisfy a strength requirement of the case 211, are convenient to process, and have low costs.

In some embodiments, the material of at least a portion of regions of the case 211 includes at least one of the following: stainless steel, carbon steel, and high-strength alloy steel. For example, if the case 211 is made of a material such as stainless steel with a large structural strength, requirements on the tensile strength Rm at the room temperature, the yield strength Re at the room temperature, the tensile strength Rn at the high temperature, and the melting point p can be generally satisfied. For example, the stainless steel generally has a melting point between 1400°C and 1500°C. In addition, the material of the case 211 is stainless steel, which is not prone to rusting. Compared with another material, the service life of the case 211 can be prolonged.

If the case 211 is made of a material such as carbon steel with a large structural strength, requirements on the tensile strength Rm at the room temperature, the yield strength Re at the room temperature, the tensile strength Rn at the high temperature, and the melting point p can be satisfied. For example, the carbon steel generally has a melting point between 1425°C and 1525°C. In addition, considering that the carbon steel material may be prone to corrosion during use, an outer surface of the carbon steel case 211 may be plated with nickel. For example, the thickness of a nickel-plating layer is generally 1 µm to 10 µm, to protect the surface of the case 211 from being corroded by oxidation, thereby prolonging the service life of the case 211.

The case 211 may further use another high-strength alloy steel material, to effectively improve the structural strength of the case 211. For example, when a requirement on the structural strength of the case 211 is high, a high-strength alloy steel material may be selected, to satisfy requirements on the tensile strength Rm at the room temperature, the yield strength Re at the room temperature, the tensile strength Rn at the high temperature, and the melting point p.

In some embodiments, when at least a portion of regions of the case 211 uses steel, a type of the steel may include at least one of the following: SPCC, Q195, Q215, Q235, SUS304, SUS316, and other modified stainless steel. The steel is easy to obtain, is strong enough to satisfy a design requirement, and has low costs. For example, for approximate values of the tensile strength Rm at a room temperature of 25°C, the yield strength Re at a room temperature of 25°C, the tensile strength Rn at a high temperature of 500°C, and the melting point p of different steels, refer to the following Table 7.

**Table 7**

| Material | Yield strength Re (MPa) | Tensile strength Rm (MPa) | Tensile strength Rn (MPa) | Melting point p (°C) |
|---|---|---|---|---|
| | 25°C | 25°C | 500°C | |
| SPCC | 270-320 | 380-430 | 230-280 | 1400 |
| Q195 | >195 | 315-430 | 140-180 | 1400-1460 |
| Q215 | >215 | 335-450 | 150-280 | 1420-1480 |
| Q235 | >235 | 375-500 | 160-300 | 1460-1530 |
| SUS304 | >205 | >520 | 210-450 | 1380-1450 |
| SUS316 | >177 | >480 | 200-450 | 1375-1450 |
| Modified stainless steel | 140-180 | 400-600 | 180-350 | 1400-1600 |

It should be understood that another material may be selected as the material of at least a portion of regions of the case 211 in this embodiment of the present application. For example, different materials may be properly selected according to mass content of different elements in the material and functions played by the elements.

In some embodiments, the mass content of chromium in the material of at least a portion of regions of the case 211 is m, where m satisfies: 10%≤m≤30%. An appropriate amount of chromium is added to the material of at least a portion of regions of the case 211, so that the melting point and strength of the material can be increased, to satisfy requirements on the tensile strength Rm at the room temperature, the yield strength Re at the room temperature, the tensile strength Rn at the high temperature, and the melting point p in this embodiment of the present application. In addition, because chromium can react with oxygen to form a dense chromium oxide film, a corrosion-resistant protective film may be formed on the surface of the case 211, thereby improving the corrosion resistance of the case 211.

In some embodiments, the mass content of nickel in the material of at least a portion of regions of the case 211 is n, where n satisfies: 8%≤n≤25%. An appropriate amount of nickel is added to the material of at least a portion of regions of the case 211, so that the structural strength and plasticity of the case 211 can be improved. For example, the tensile strength Rm at the room temperature, the yield strength Re at the room temperature, and the tensile strength Rn at the high temperature can be improved, and the corrosion resistance of the material can be provided.

In some embodiments, an example in which the case 211 is made of steel is used. Different types of steel include different mass contents of different elements. For example, for stainless steel, the mass content of iron, one of the basic elements of the stainless steel, is generally 60% to 70%. For another example, Table 8 shows mass contents of different elements of several steels. Values in Table 8 are maximum values of mass percents of the elements in the material. To be specific, the mass percents of the elements in a correspondingly used material are generally not greater than the values shown in Table 8.

**Table 8**

| | Carbon C | Silicon Si | Manganese Mn | Phosphorus P | Sulfur S | Nickel Ni | Chromium Cr | Molybdenum Mo |
|---|---|---|---|---|---|---|---|---|
| SPCC | 0.12 | / | 0.5 | 0.04 | 0.045 | / | / | / |
| Q195 | 0.12 | 0.3 | 0.5 | 0.035 | 0.035 | 0.3 | 0.3 | / |
| Q215 | 0.15 | 0.35 | 1.2 | 0.035 | 0.035 | 0.3 | 0.3 | / |
| Q235 | 0.22 | 0.35 | 1.4 | 0.035 | 0.035 | 0.3 | 0.3 | / |
| SUS304 | 0.08 | 1.0 | 2.0 | 0.045 | 0.03 | 8.0-10.5 | 18.0-20.0 | / |
| SUS316 | 0.08 | 1.0 | 2.0 | 0.045 | 0.03 | 10.0-1 4.0 | 16.0-18.0 | 2.0-3.0 |
| Modified stainless steel | 0.08 | 1 | 2 | 0.045 | 0.03 | 7.5-10 | 16.5-18.5 | 0.1 |

It should be understood that when steel is used in at least a portion of regions of the case 211, if the mass content of carbon in the steel is increased, the strength and hardness of the steel can be improved. For example, generally, a higher carbon content indicates higher hardness and strength of steel, but the corrosion resistance may be reduced.

If the mass content of chromium in the steel is increased, because chromium can react with oxygen to form a dense chromium oxide film, a corrosion-resistant protective film is formed on the surface of the steel, so that the corrosion-resistant performance of the steel can be improved.

If the mass content of nickel in the steel is increased, the corrosion resistance, strength, and plasticity of the steel can be improved.

If the mass content of molybdenum in the steel is increased, the corrosion resistance and strength of the steel can be improved, which is more prominent especially in a corrosive medium such as acid or salt.

If the mass content of manganese in the steel is increased, the toughness and fatigue resistance of the steel can be increased.

If the mass content of silicon in the steels is increased, the corrosion resistance and strength of stainless steel can be increased.

If the mass content of phosphorus and sulfur in the steel is reduced, negative impacts of the two elements on the corrosion resistance performance, plasticity, and toughness of the steel can be reduced.

In addition, the steel may further be provided with another element. For example, the steel may further include copper. For example, the mass content of copper in Q195, Q215, and Q235 is generally not greater than 0.3%, and the mass content of modified stainless steel is generally not greater than 2% to 3.5%. For another example, the steel may further include nitrogen. For example, the mass content of nitrogen in Q195, Q215, and Q235 is generally not greater than 0.12%.

It should be understood that the method for testing the mass content of each element of the foregoing steel in this embodiment of the present application may be set according to an actual application. For example, an inductively coupled plasma atomic emission spectrometry, i.e., an inductively coupled plasma (ICP) test, may be used. However, this is not limited in this embodiment of the present application.

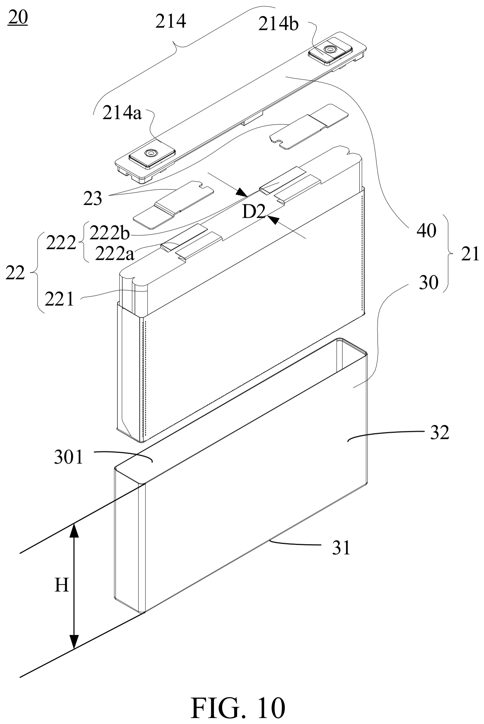

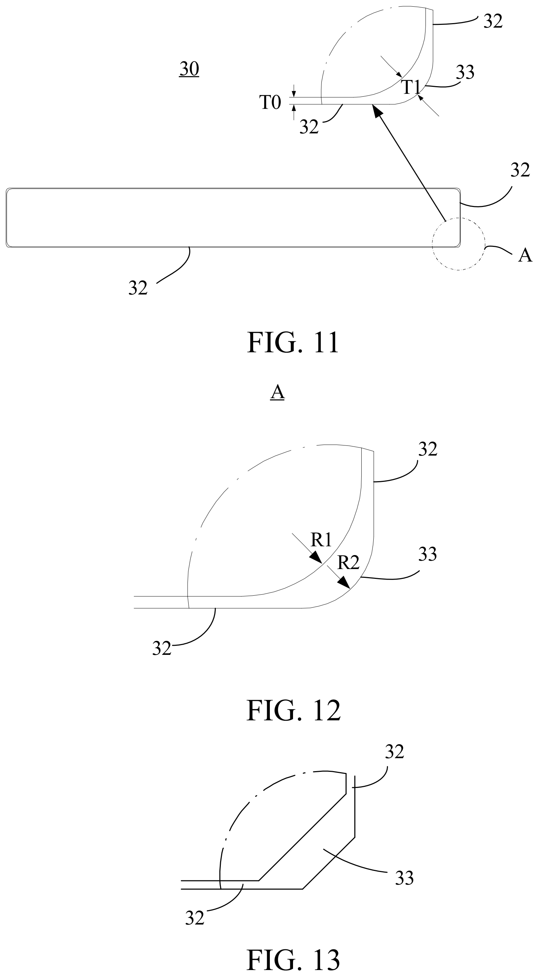

FIG. 10 shows another exploded schematic structural diagram of a battery cell 20 according to an embodiment of the present application. FIG. 11 shows a schematic cross-sectional diagram of a case 30 according to an embodiment of the present application. It should be noted that the case 30 shown in FIG. 10 and FIG. 11 may be applied to the battery cell 20. For example, the case 30 may be applied to the battery cell 20 shown in FIG. 3 and FIG. 4, and the case 30 shown in FIG. 10 and FIG. 11 may be the case 211 shown in FIG. 3 and FIG. 4, which is applicable to the foregoing related descriptions. For brevity, details are not described herein.

As shown in FIG. 10 and FIG. 11, the case 30 has an opening 301. The case 30 includes a first case wall 31 opposite to the opening 301 and at least two second case walls 32. The first case wall 31 and the second case walls 32 intersect with each other.

As shown in a partially enlarged view of a portion A in FIG. 11, a transition region 33 is provided between two adjacent second case walls 32 in the at least two second case walls 32 of the case 30. The transition region 33 has a maximum thickness of T1, and a thicker second case wall 32 in the two adjacent second case walls 32 has a maximum thickness of T0, where T1 is greater than T0.

In some embodiments, the second case wall 32 may be perpendicular to the first case wall 31.

In some embodiments, the at least two second case walls 32 may be connected end to end, to enclose a hollow structure having two ends open. The first case wall 31 covers an opening at one end of the hollow structure.

In some embodiments, a placement manner of the case 30 may be shown in FIG. 10. Then, the first case wall 31 may be a bottom wall of the case 30, to support the electrode assembly 22, and the second case wall 32 is a side wall of the case 30, disposed around the electrode assembly 22.

Generally, the second case wall 32 is not independently prepared. To be specific, the at least two second case walls 32 may be integrally formed. In some other embodiments, the at least two second case walls 32 and the first case wall 31 are integrally formed. To be specific, the case 30 is of an integrally formed structure. For example, a plate-shaped structure is stamped by using a mold to form a hollow structure having an opening. The case 30 obtained after the stamping and forming may have an opening of various shapes. For example, the opening 301 may be in the shape of a circle, a polygon, or a runway. The polygon is, for example, a square, a pentagon, a hexagon, or another irregular shape.

In some embodiments, the thickness of the transition region 33 may be uniform, or may be non-uniform. The maximum thickness T1 of the transition region 33 is defined below by using uniform thickness of the transition region 33 as an example.

As can be seen from FIG. 10, the transition region 33 has two surfaces: an inner surface and an outer surface. In some embodiments, the inner surface and the outer surface may be arc surfaces, and the inner surface and the outer surface are coaxially disposed. The maximum thickness T1 of the transition region 33 may be defined as a length, at the transition region 33, of an extension line of a connecting line between the center of a circle in which an inner arc is located and the center of a circle in which an outer arc is located along any cross section in a direction perpendicular to axes of the inner surface and the outer surface. In some other embodiments, the inner surface and the outer surface may be planes, and the inner surface and the outer surface are parallel. The maximum thickness T1 of the transition region 33 may be defined as a perpendicular distance between the inner surface and the outer surface. Similarly, the second case wall 32 also has two surfaces: an inner surface and an outer surface. A maximum value of a perpendicular distance between the inner surface and the outer surface is a maximum thickness of a second case wall 32.

If at least two second case walls 32 of the case 30 have unequal wall thicknesses, for example, two second case walls 32 corresponding to one transition region 33 have unequal wall thicknesses, in this embodiment of the present application, T0 is the wall thickness of the thicker second case wall 32 in the two second case walls 32 of the case 30 adjacent to the transition region 33. However, if at least two second case walls 32 of the case 30 have equal wall thicknesses, for example, two second case walls 32 corresponding to one transition region 33 have equal wall thicknesses, in this embodiment of the present application, T0 is the thickness of any second case wall 32 of the case 30.

It should be noted that if a second case wall 32 includes a functional region, a maximum thickness of the second case wall 32 actually refers to a maximum thickness of a region of the second case wall 32 other than the functional region. The functional region includes at least one of the following regions: a pressure relief region, a region in which an electrode terminal is located, a liquid injection region, and a welding region.

In this embodiment, the transition region 33 is disposed between two adjacent second case walls 32, so that stress concentration between the two adjacent second case walls 32 can be reduced, and a structural failure risk caused by the stress concentration can be reduced. In addition, the maximum thickness T1 of the transition region 33 is set to be greater than the maximum thickness T0 of the thicker second case wall in the two adjacent second case walls. The thickened transition region 33 can improve the structural strength of the case 30, and is beneficial to resolving the problem of deformation of the case 30 during the production and assembly of the battery cell 20, and the problem of deformation of the case 30 due to expansion of generated gas during the use of the battery cell 20.

In some embodiments, a maximum thickness T1 of the transition region 33 and a maximum thickness T0 of a thicker second case wall 32 in two adjacent second case walls 32 satisfy: 1.5≤T1/T0≤7.

In this embodiment, a ratio of the maximum thickness T1 of the transition region 33 to the maximum thickness T0 of the thicker second case wall 32 in the two adjacent second case walls 32 is set to [1.5, 7]. On one hand, the strength of the case can be improved by using the thick transition region 33. On the other hand, the manufacturing difficulty of the case 30 caused by excessively large thickness of the transition region 33 can be limited, so that the strength of the case 30 and the manufacturing difficulty of the case 30 can be balanced.

In an actual application, a ratio of T1 to T0 may be adjusted. For example, the maximum thickness T1 of the transition region 33 and the maximum thickness T0 of the thicker second case wall 32 in two adjacent second case walls 32 may satisfy: 2≤T1/T0≤4.

For example, T1/T0 may be equal to 2, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, or the like.

In this embodiment, by setting the ratio of the maximum thickness T1 of the transition region 33 to the maximum thickness T0 of the thicker second case wall 32 in the two adjacent second case walls 32 to [2, 4], the strength of the case 30 and the manufacturing difficulty of the case 30 can be maximally balanced.

Optionally, as shown in FIG. 11 and FIG. 12, the two adjacent second case walls 32 are connected by using a first rounded corner 331. The transition region 33 includes the first rounded corner 331. To be specific, the transition region 33 is implemented by using a rounded corner.

In this embodiment, the transition region 33 between the two adjacent second case walls 32 is implemented by using a rounded corner, so that the case 30 can be more easily formed, and has a better surface smoothness. In addition, in the presence of impact from internal gas generation in the battery cell 20, a risk of cracking of the case 30 caused by stress concentration at a sharp point can be reduced.

As shown in FIG. 12, the first rounded corner 331 has an inner diameter of R1, and the first rounded corner 331 has an outer diameter of R2.

In some embodiments, the first rounded corner 331 has an inner surface and an outer surface, and the inner surface and the outer surface are both arc surfaces. The inner diameter R1 of the first rounded corner 331 may be understood as the radius of a circle in which an inner arc of the first rounded corner 331 is located, and the outer diameter R2 of the first rounded corner 331 may be understood as the radius of a circle in which an outer arc of the first rounded corner 331 is located.

In some embodiments, the inner diameter R1 of the first rounded corner 331 satisfies: 2 mm≤R1≤4 mm. For example, R1=2 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, or the like.

In this embodiment, the inner diameter of the first rounded corner 331 between two adjacent second case walls 32 is set to [2 mm, 4 mm]. On one hand, increase of a gas generation pressure inside the case 30 caused by occupation of an internal space of the case 30 due to an excessively large inner diameter is avoided. On the other hand, insufficient strength of the case 30 caused by insufficient wall thickness increment of the first rounded corner 331 due to an excessively small inner diameter is avoided, so that the utilization ratio of the internal space of the case 30 and the strength of the case 30 can be balanced.

In some embodiments, the outer diameter R2 of the first rounded corner 331 satisfies: 1.5 mm≤R2≤3.5 mm. For example, R2=1.5 mm, 2 mm, 2.5 mm, 3.0 mm, 3.5 mm, or the like.

In this embodiment, when the cover plate 40 is fixedly connected to the case 30 by means of side welding, a larger outer diameter R2 of the first rounded corner 331 between two adjacent second case walls 32 indicates that it is unlikely to control quality of welding, and prone to false welding. However, a smaller outer diameter R2 of the first rounded corner 331 indicates that it is unlikely to form the case 30. Therefore, by controlling the outer diameter R2 of the first rounded corner 331 to be in the range of [1.5 mm, 3.5 mm], the quality of welding and the forming difficulty of the case can be balanced.

In some other embodiments, as shown in FIG. 13, the two adjacent second case walls 32 are connected by using a corner C. For example, an angle between the corner C and the two adjacent second case walls 32 is 45°.

In an embodiment, the case 30 may be of an integrally formed structure. As shown in FIG. 10, the case 30 has a depth of H, where the depth H of the case 30 and the inner diameter R1 of the first rounded corner 331 satisfy: 2.5 mm≤R1≤20 mm and 50 mm<H≤250 mm.

In this embodiment of the present application, the depth may be understood as a distance from the opening to the inner bottom. For example, the depth H of the case 30 may be understood as a distance from the opening 301 to the first case wall 31.

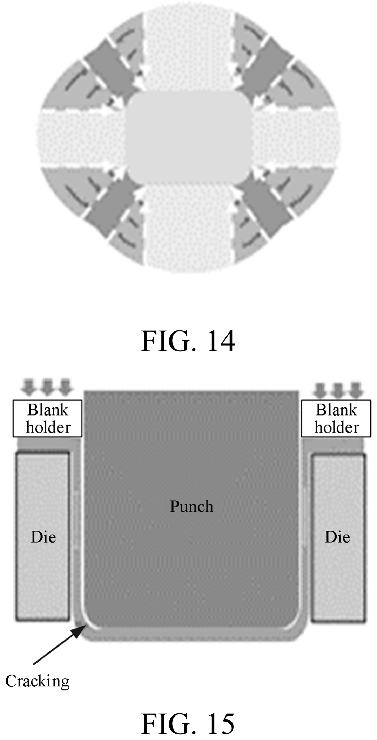

FIG. 14 shows a schematic diagram of material flow of a case 30 in an integral forming process. FIG. 15 shows a schematic diagram of stress on a case 30 in an integral forming process. As can be seen from FIG. 14 and FIG. 15, when the case 30 is formed, the material of the case 30 is prone to accumulation at the position of the first rounded corner 331, resulting in cracking of the case 30 due to a large friction force between the case 30 and the mold. Therefore, in this embodiment, the depth H of the case 30 and the inner diameter R1 of the first rounded corner 331 are set to satisfy: 2.5 mm≤R1≤20 mm and 50 mm<H≤250 mm, so as to resolve, as much as possible, the problem of cracking of the case 30 caused by stress during integral forming without affecting the energy density of the battery cell 20, thereby reducing the forming difficulty of the case 30.

For example, R1=2.5 mm, 5 mm, 7.5 mm, 10 mm, 12.5 mm, 15 mm, 17.5 mm, or 20 mm. And/or, H=50 mm, 100 mm, 150 mm, 200 mm, or 250 mm.

In some embodiments, H and R1 satisfy: 75 mm≤H≤180 mm and 4 mm≤R1≤15 mm.

For example, H=75 mm, 100 mm, 125 mm, 150 mm, 175 mm, or 180 mm. For example, R1=4 mm, 6 mm, 8 mm, 10 mm, 12 mm, 14 mm, or 15 mm.

In this embodiment, by setting that H and R1 satisfy: 4 mm≤R1≤15 mm and 75 mm≤H≤180 mm, on one hand, the energy density of the battery cell 20 is not reduced even though H is excessively small or R is excessively large. On the other hand, cracking of the case 30 under an excessive stress caused by material accumulation during the forming of the case 30 due to an excessively large H or an excessively small R is avoided.

In some other embodiments, H and R1 satisfy: 5 mm≤R1≤ 10 mm and 90 mm≤H≤140 mm. For example, R1=5 mm, 6 mm, 7 mm, 8 mm, 9 mm, or 10 mm. For another example, H=90 mm, 100 mm, 110 mm, 120 mm, 130 mm, or 140 mm.

In some other embodiments, the case 30 is of an integrally formed structure. The case 30 has a yield strength of Re at a temperature of 25°C. The yield strength Re and the inner diameter R1 of the first rounded corner 331 satisfy: 140 MPa≤Re≤1000 Mpa and 2.5 mm≤R1≤20 mm.

For example, Re=140 MPa, 180 MPa, 200 MPa, 230 MPa, 250 MPa, 280 MPa, 300 MPa, 320 MPa, 350 MPa, 380 MPa, 400 MPa, 430 MPa, 450 MPa, 480 MPa, 500 MPa, 550 MPa, 600 MPa, 650 MPa, 700 MPa, 750 MPa, 800 MPa, 850 MPa, 900 MPa, 950 MPa, or 1000 Mpa.

For example, R1=2.5 mm, 5 mm, 7.5 mm, 10 mm, 12.5 mm, 15 mm, 17.5 mm, or 20 mm.

The yield strength may be understood as a critical stress value for material yield. Generally, after a material is under stress, as the stress increases, in addition to elastic deformation, the material may further be plastically deformed. A point at which the material is plastically deformed may be referred to as a yield point, and strength corresponding to the yield point is referred to as the yield strength. A manner of testing the yield strength Re of the case 30 at a temperature of 25°C in this embodiment of the present application may be selected according to an actual application. For example, GB/T 228.1-2010 may be used to test the yield strength Re at a room temperature of 25°C.

To resolve the problem of cracking of the case 30 caused by a large friction force between the case 30 and a mold due to material accumulation at the first rounded corner 331 when the case 30 is integrally formed, an embodiment of the present application further provides another solution. To be specific, for the case 30 having a yield strength Re satisfying 140 MPa≤Re≤1000 Mpa, the inner diameter R1 of the first rounded corner 331 is set to be: 2.5 mm≤R1≤20 mm. R1 cannot be excessively small, thereby reducing the forming difficulty of the case 30. R1 cannot be excessively large, thereby reducing the stress deformation of the case 30.

In this embodiment, the case 30 is manufactured by using a material having a yield strength Re satisfying 140 MPa≤Re≤1000 Mpa, so that the wall thickness of the case can be reduced without reducing the strength of the case 30, thereby improving the capacity space of the battery cell 20. In addition, the inner diameter R1 of the first rounded corner 331 between the adjacent second case walls 32 is set to satisfy 2.5 mm≤R1≤20 mm, so as to reduce, as much as possible, a risk of cracking of the case 30 caused by stress during integral forming, and reduce the forming difficulty of the case 30.

In some embodiments, the yield strength Re of the case 30 and R1 may satisfy: 150 MPa≤Re≤400 Mpa and 4 mm≤R1≤15 mm.

For example, Re=150 MPa, 170 MPa, 190 MPa, 210 MPa, 230 MPa, 260 MPa, 290 MPa, 310 MPa, 330 MPa, 370 MPa, 390 MPa, or 400 Mpa.

For example, R1=4 mm, 6 mm, 8 mm, 10 mm, 12 mm, 14 mm, or 15 mm.

In this embodiment, by defining 150 MPa≤Re≤400 Mpa and 4 mm≤R1≤15 mm, a balance between the forming difficulty and the deformation degree of the case 30 is achieved.

In some embodiments, the yield strength Re of the case 30 and R1 may satisfy: 160 MPa≤Re≤300 Mpa and 5 mm≤R1≤10 mm.

For example, Re=160 MPa, 170 MPa, 180 MPa, 190 MPa, 200 MPa, 210 MPa, 220 MPa, 230 MPa, 240 MPa, 250 MPa, 260 MPa, 270 MPa, 280 MPa, 290 MPa, or 300 Mpa.

For example, R1=5 mm, 6 mm, 7 mm, 8 mm, 9 mm, or 10 mm.

In this embodiment, by defining 160 MPa≤Re≤300 Mpa and 5 mm≤R1≤10 mm, the stress deformation of the case 30 during use can be reduced as much as possible without affecting the forming difficulty of the case 30.

In some embodiments, the case 30 has a tensile strength of Rm at a temperature of 25°C, where Rm and R1 satisfy: 250 MPa≤Rm≤2000 MPa and 2.5 mm≤R1≤20 mm.

The tensile strength may be understood as a maximum value of stress applied to the material in breaking. A manner of testing the tensile strength Rm of the case 30 at a temperature of 25°C in this embodiment of the present application may be selected according to an actual application. For example, ISO 6892-2:2018 may be used to test the tensile strength Rm at a room temperature of 25°C.

For example, Rm=250 MPa, 300 MPa, 350 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1100 Mpa, 1200 MPa, 1300 MPa, 1400 MPa, 1500 MPa, 1600 MPa, 1700 MPa, 1800 MPa, 1900 MPa, or 2000 MPa.

In this embodiment, by setting 250 MPa≤Rm≤1000 MPa and 2.5 mm≤R1≤20 mm, stress on a mold can be reduced as much as possible during the manufacturing of the case 30 without affecting the strength of the case 30, so that the size or surface of the case 30 is not affected.

In some embodiments, Rm and R1 satisfy: 280 MPa≤Rm≤800 MPa and 4 mm≤R1≤15 mm.

For example, Rm=280 MPa, 310 MPa, 340 MPa, 370 MPa, 390 MPa, 430 MPa, 470 MPa, 510 MPa, 540 MPa, 580 MPa, 610 MPa, 630 MPa, 660 MPa, 690 MPa, 720 MPa, 740 MPa, 780 MPa, or 800 MPa.

In some other embodiments, Rm and R1 satisfy: 380 MPa≤Rm≤600 MPa and 5 mm≤R1≤10 mm.

For example, Rm=380 MPa, 390 MPa, 410 MPa, 440 MPa, 480 MPa, 520 MPa, 535 MPa, 570 MPa, 596 MPa, or 600 MPa.

In some embodiments, maximum wall thicknesses of the at least two second case walls 32 of the case 30 are equal.

Further optionally, the wall thickness of each second case wall 32 in the at least two second case walls 32 of the case 30 is uniform, and the wall thicknesses of the at least two second case walls 32 are equal.

In this embodiment, the wall thicknesses of the at least two second case walls 32 are set to be equal. On one hand, the processing difficulty of the case 30 can be reduced. On the other hand, the at least two second case walls 32 may be set to have a minimum processed wall thickness, which is beneficial to fully improving the space utilization of the case 30.

In some other embodiments, a transition region 33 is provided between any two adjacent second case walls 32 in the at least two second case walls 32, and maximum thicknesses of at least two transition regions 33 corresponding to the at least two second case walls 32 are equal.

In this embodiment, the maximum thicknesses of the at least two transition regions 33 between the at least two second case walls 32 of the case 30 are set to be equal, which is beneficial to preparing the case 30 into a symmetrical structure, to facilitate processing. In addition, when the case 30 and the cover plate 40 are assembled, there is no risk of incorrect mounting as a fool-proofing function is implemented.

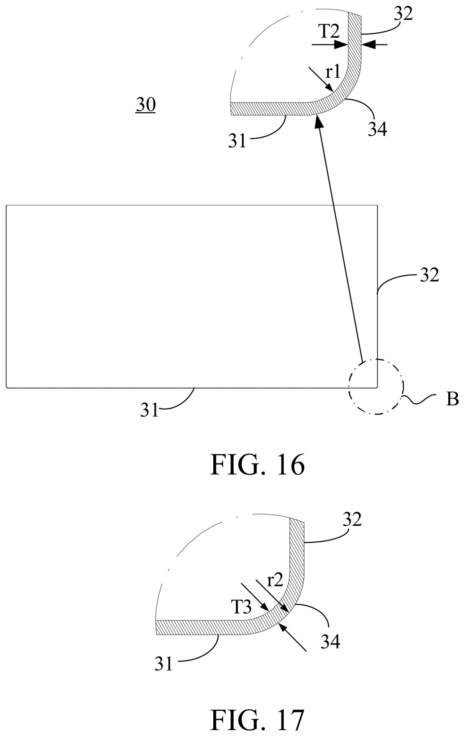

FIG. 16 shows another schematic cross-sectional diagram of a case 30 according to an embodiment of the present application. As shown in a partially enlarged view of a portion B in FIG. 16, the first case wall 31 and the second case wall 32 are connected to each other by using a second rounded corner 34. As shown in an enlarged schematic view of the portion B in FIG. 16, the second rounded corner 34 has an inner diameter of r1, and a thinner second case wall 32 in the at least two second case walls 32 has a minimum thickness of T2, where the inner diameter r1 of the second rounded corner 34 and the minimum thickness T2 of the thinner second case wall 32 in the at least two second case walls 32 satisfy: 2.0≤r1/T2≤30.

It should be understood that the first case wall 31 is connected to at least two second case walls 32. Optionally, any second case wall 32 is connected to the first case wall 31 by using the second rounded corner 34 shown in FIG. 16. In addition, the implementation of the second rounded corner 34 herein is similar to that of the first rounded corner 331 in FIG. 12. To be specific, the second rounded corner 34 has an inner surface and an outer surface, and the inner surface and the outer surface are both arc surfaces. The inner diameter r1 of the second rounded corner 34 may be understood as the radius of a circle in which an inner arc is located.

It should be noted that if each second case wall 32 is a wall having a uniform thickness, the minimum thickness T2 of the second case wall 32 may refer to the thickness of the thinner second case wall 32 in the at least two second case walls 32. If the thickness of the second case walls 32 is non-uniform, the minimum thickness T2 of the second case wall 32 may refer to the thickness of a thinner region in all the second case walls 32.

It should be further noted that if a second case wall 32 includes a functional region, a minimum thickness of the second case wall 32 actually refers to a minimum thickness of a region of the second case wall 32 other than the functional region. The functional region includes at least one of the following regions: a pressure relief region, a region in which an electrode terminal is located, a liquid injection region, and a welding region.

In this embodiment, a ratio of the inner diameter r1 of the second rounded corner 34 between the first case wall 31 and the second case walls 32 to the minimum thickness T2 of the thinner second case wall 32 is set to [2.0, 30], which is beneficial to balancing the processing difficulty of the case 30 with the space capacity and strength of the battery cell 20.

In some embodiments, the inner diameter r1 of the second rounded corner 34 and the minimum thickness T2 of the thinner second case wall 32 in at least two second case walls 32 satisfy: 2.5≤r1/T2≤10. For example, r1/T2=2.5, 3.0, 3.5, 4.0, 4.5, 5.0, 5.5, 6.0, 6.5, 7.0, 7.5, 8.0, 8.5, 9.0, 9.5, 10, or the like.

Optionally, the inner diameter r1 of the second rounded corner 34 may satisfy: 0.8 mm≤r1≤1.5 mm. For example, r1=0.8 mm, 0.9 mm, 1.0 mm, 1.1 mm, 1.2 mm, 1.3 mm, 1.4 mm, or 1.5 mm.

In this embodiment, by setting the inner diameter r1 of the second rounded corner 34 within [0.8 mm, 1.5 mm], on one hand, the manufacturing difficulty of the case 30 is not increased even though r1 is excessively small. On the other hand, interference between the electrode assembly 22 and the second rounded corner 34 is not reduced even though r1 is excessively large. To be specific, assembly of the case 30 and the electrode assembly 22 does not need to be satisfied by reducing the height of the electrode assembly 22 and sacrificing the capacity of the electrode assembly 22. In addition, if r1 is excessively large, the case 30 is also prone to deformation.

FIG. 17 shows another partially enlarged schematic diagram of a portion B in FIG. 16. As shown in FIG. 17, the second rounded corner 34 has an outer diameter of r2, where r2 satisfies: 1 mm≤r2≤2.5 mm. For example, r2=1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, or 2.5 mm.

Similar to the definition of the inner diameter r1 of the second rounded corner 34, the outer diameter r2 of the second rounded corner 34 may be understood as the radius of a circle in which an outer arc of the second rounded corner 34 is located.

In this embodiment, by setting the outer diameter r2 of the second rounded corner 34 within [1.0 mm, 2.5 mm], on one hand, an insulation failure caused by puncturing of an insulation film outside the battery cell 20 by sharp points due to an excessively small r2 is avoided. On the other hand, impact on the strength of the case 30 caused by excessive thinning of the second rounded corner 34 due to an excessively large r2 is avoided.

In some embodiments, H and X2 satisfy: 300≤H/T2≤800. For example, H/T2=300, 350, 400, 450, 500, 550, 600, 650, 700, 750, 800, or the like.

In this embodiment, by setting a ratio of the depth H of the case 30 to the minimum thickness T2 of the thinner second case wall 32 to [300, 800], the volume utilization ratio and the strength of the battery cell 20 can be both considered.

As shown in FIG. 17, the second rounded corner 34 has a maximum thickness of T3, where a ratio of T3 to T2 satisfies: 0.8≤T3/T2≤2. For example, T3/T2=0.8, 0.9, 1.0, 1.1, 1.2, 1.3, 1.4, 1.5, 1.6, 1.7, 1.8, 1.9, or 2.0.

The thickness of the second rounded corner 34 may be uniform, or may be non-uniform. The maximum thickness T3 of the second rounded corner 34 is defined below by using uniform thickness of the second rounded corner 34 as an example. In some embodiments, the maximum thickness T3 of the second rounded corner 34 may be defined as a length, at the second rounded corner 34, of an extension line of a connecting line between the center of a circle in which an inner arc is located and the center of a circle in which an outer arc is located along any cross section in a direction perpendicular to axes of the inner surface and the outer surface.

In this embodiment, by setting a ratio of the maximum thickness T3 of the second rounded corner 34 to the minimum thickness T2 of the thinner second case wall 32 to [0.8, 2], the strength and manufacturability of the case 30 can be balanced. To be specific, both the insufficient strength of the case 30 caused by excessive thinning of the second rounded corner 34 and unlikeliness in manufacturing of the case 30 caused by insufficient thinning of the second rounded corner 34 can be avoided.

In some embodiments, the wall thickness of the case 30 is uniform. To be specific, all the walls of the case 30 have an equal wall thickness.

In this embodiment, the wall thickness of the case 30 is set to be uniform. On one hand, the processing difficulty of the case 30 can be reduced. On the other hand, each wall of the case 30 may be set to have a minimum processed wall thickness, which is beneficial to fully improving the space utilization of the case 30.

In some embodiments, the battery cell 20 further includes a cover plate 40, configured to cover an opening 301 of the case 30, so as to close the electrode assembly 22 in a cavity of the case 30.

In this embodiment, the depth H of the case and the inner diameter R1 of the first rounded corner between the second case walls are set to satisfy: 2.5 mm≤R1≤20 mm and 50 mm<H≤250 mm, so as to resolve, as much as possible, the problem of cracking of the case caused by stress during integral forming without affecting the energy density of the battery cell, thereby reducing the forming difficulty of the case.

In some embodiments, the shape of the battery cell 20 is approximately a cuboid. For example, the battery cell 20 is a cuboid battery cell. For another example, the battery cell 20 is a runway-shaped battery cell. The battery cell 20 has a thickness of D1, where H, R1, and D1 satisfy: 0.15 mm≤R1*D1/H≤36 mm.

For example, R1*D1/H=0.15, 0.5, 1, 5, 10, 15, 17.5, 20, 22.5, 25, 27.5, 30, 32.5, 35, or 36.

In some embodiments, D2 may be a size of the battery cell 20 in an expansion direction of the electrode assembly 22.

In this embodiment, by setting 0.15 mm≤R1*D1/H≤36 mm, a risk of cracking of the case 30 caused by an excessively large stress due to material accumulation during the forming of the case 30 due to an excessively small value of R1*D1/H can be reduced, and impact on the energy density of the battery cell 20 due to an excessively large value of R1*D1/H can be reduced.

In this embodiment, D1 satisfies: 15 mm≤D1≤90 mm. For example, D1=15 mm, 20 mm, 25 mm, 30 mm, 35 mm, 40 mm, 45 mm, 50 mm, 55 mm, 60 mm, 65 mm, 70 mm, 75 mm, 80 mm, 85 mm, or 90 mm.

In this embodiment, H and R1 satisfy: 50 mm≤H≤250 mm and 2.5 mm≤R1≤20 mm.

In some embodiments, H, R1, and D1 satisfy: 0.34 mm≤R1*D1/H≤18 mm.

In this embodiment, by setting 0.34 mm≤R1*D1/H≤18 mm, a balance can be achieved between the forming difficulty and the energy density of the case 30.

For example, R1*D1/H=0.34, 0.5, 1, 3, 5, 8, 11, 13, 16, or 18.

Similarly, in this embodiment, D1 satisfies: 15 mm≤D1≤90 mm.

In this embodiment, H and R1 satisfy: 75 mm≤H≤180 mm and 4 mm≤R1≤15 mm.

In some embodiments, H, R1, and D1 satisfy: 0.9 mm≤R*D/H≤6.6 mm.

For example, R1*D1/H=0.9, 1, 1.3, 1.5, 1.8, 2.0, 2.3, 2.6, 2.8, 3.0, 3.3, 3.5, 3.8, 4.0, 4.3, 4.5, 4.7, 4.9, 5.1, 5.4, 5.7, 6.0, 6.2, 6.5, or 6.6.

In this embodiment, D1 satisfies: 25 mm≤D1≤60 mm. For example, D1=25 mm, 28 mm, 31 mm, 34 mm, 37 mm, 39 mm, 41 mm, 43 mm, 46 mm, 49 mm, 51 mm, 54 mm, 58 mm, or 50 mm.

And in this embodiment, H and R1 satisfy: 90 mm≤H≤140 mm and 3 mm≤R≤10 mm.

It should be noted that, a value range of R1, a value range of H, a value range of D1, and a value range of R1*D1/H may be associated with each other. For example, 0.15 mm≤R1*D1/H≤36 mm when 15 mm≤D1≤90 mm, 50 mm<H≤250 mm, and 2.5 mm≤R1≤20 mm. For another example, 0.34 mm≤R*D/H≤18 mm when 15 mm≤D1≤90 mm, 75 mm≤H≤180 mm, and 4 mm≤R1≤15 mm. For another example, 0.9 mm≤R1*D1/H≤6.6 mm when 25 mm≤D1≤60 mm, 90 mm≤H≤140 mm, and 3 mm≤R1≤10 mm.

In some embodiments, the electrode assembly 22 has a thickness of D2, where R1 and D2 satisfy: 0.125≤R1/D2≤0.45.

For example, R1/D2=0.125, 0.15, 0.175, 0.2, 0.225, 0.25, 0.275, 0.3, 0.325, 0.35, 0.375, 0.4, 0.425, or 0.45.

Optionally, D2 may be a size of the electrode assembly 22 in the expansion direction.

In this embodiment, by setting 0.125≤R1/D2≤0.45, on one hand, impact on the performance of the battery cell 20 caused by interference with the electrode assembly 22 or insufficient residual space inside the battery cell 20 due to an excessively large value of R1 is avoided. On the other hand, the forming difficulty of the case 30 due to an excessively small value of R1 is avoided.

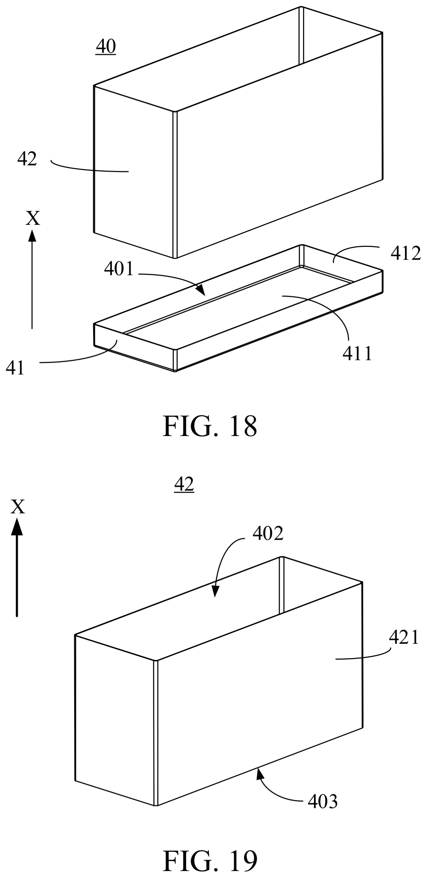

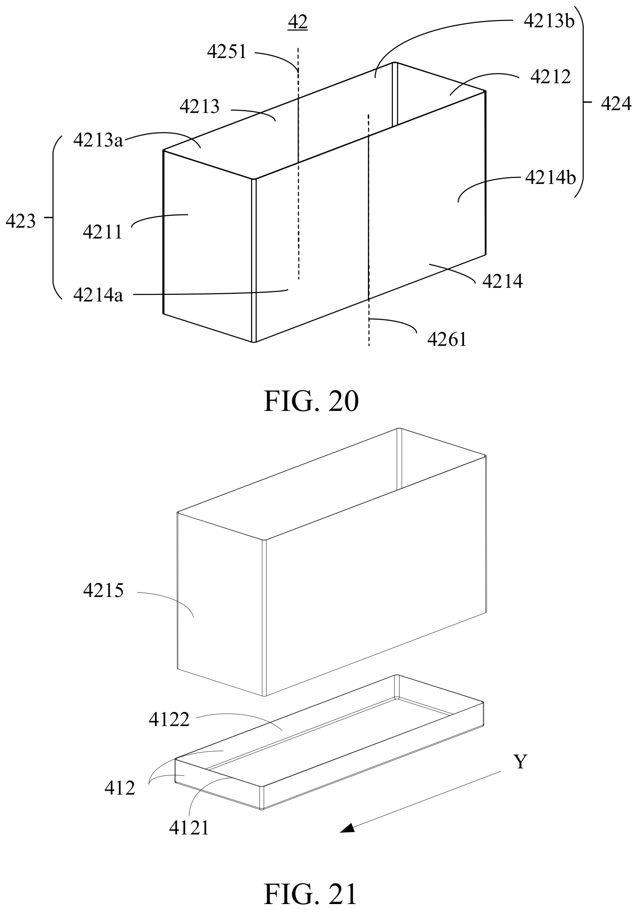

FIG. 18 shows an exploded schematic diagram of a case 40 according to an embodiment of the present application. FIG. 19 shows a schematic structural diagram of a second case portion 42 according to an embodiment of the present application. FIG. 20 shows another schematic structural diagram of a second case portion 42 according to an embodiment of the present application. FIG. 21 shows another exploded schematic diagram of a case 40 according to an embodiment of the present application. It should be noted that the case 40 may be applied to the battery cell 20. For example, the case 40 shown in FIG. 18 to FIG. 21 may be applied to the battery cell 20 shown in FIG. 3 and FIG. 4, and the case 40 may include only the case 211 shown in FIG. 4, or may include both the case 211 shown in FIG. 4 and the cover plate 212 shown in FIG. 4. In addition, a placement manner of the case 40 may alternatively be shown in FIG. 3 or FIG. 4.

As shown in FIG. 18, the case 40 includes a first case portion 41 and a second case portion 42. An opening 401 is formed in the first case portion. The first case portion 41 includes a first wall 411 opposite to the opening 401 and a second wall 412 connected to the first wall 411. The first wall 411 and the second wall 412 are integrally formed. The second case portion is fixedly connected to the second wall 412. In a depth direction X of the first case portion 41, at least a portion of regions of the case 40 is jointly formed by the first case portion 41 and the second case portion 42.

It should be explained that the first wall 411 and the second wall 412 in the first case portion 41 are of an integrally formed structure, which may mean that the first case portion 41 is formed by using an integral stretch forming process. For example, the first case portion 41 may be prepared by using the following steps. In step 1, steel suitable for stretch forming is selected. In step 2, according to the design and process requirements of the case, a suitable stamping mold is prepared, where the mold is generally made of mold steel, carbon steel, or cemented carbide, including a punch, a die, a blank holder, and other components. In step 3, the steel is fixed between the clamp and the mold to ensure that the steel remains stable during the stretching. In step 4, the punch is moved downward into the mold, a tensile stress is exerted on the steel to deform the steel and fill the shape of the mold. In step 5, the speed and pressure of the punch are controlled to ensure that the steel is uniformly deformed during the stretching, so that the steel is stretched to a particular depth, and the required shape is obtained. In step 6, auxiliary operations such as perforation, trimming, and marking are performed during the stretch forming as required. In step 7, after the stretch forming is completed, a product is taken out from the mold, and necessary processing such as cleaning and deburring is performed to obtain the first case portion 41.

Because the first case portion 41 is formed by integral stretching, the first case portion generally has the opening 401. The opening 401 may be in the shape of a circle, a polygon, or a runway. The polygon is, for example, a square, a pentagon, a hexagon, or another irregular shape.

The first case portion 41 is of a hollow structure enclosed by the first wall 411 opposite to the opening 401 and the second wall 412. The second wall 412 and the first wall 411 intersect with each other. For example, the first wall 411 is perpendicular to the second wall 412. In some embodiments, the first case portion 41 includes one second wall 412. Head and tail ends of the second wall 412 are connected, to enclose a cylindrical hollow structure with the first wall 411. In some other embodiments, the first case portion 41 includes four second walls 412. The four second walls 412 are disposed oppositely in pairs, and the two adjacent second walls 412 intersect perpendicularly. Therefore, the four second walls 412 and the first wall 411 enclose a square columnar hollow structure.

Because the first wall 411 is opposite to the opening 401 of the first case portion 41, the depth direction X of the first case portion 41 may be understood as a direction perpendicular to the first wall 411, and a distance from the opening 401 to the first wall 411 of the first case portion 41 is a depth of the first case portion 41.

In this embodiment of the present application, that the second case portion 42 is fixedly connected to the second wall 412 does not include that the second case portion 42 is of a flat plate-shaped structure and the second case portion 42 is embedded at the opening 401 of the first case portion 41. In other words, in this embodiment of the present application, the second case portion 42 includes at least one third wall 421. The at least one third wall 421 encloses a hollow structure having at least one opening. For example, the second case portion 42 includes at least the opening 402 shown in FIG. 19, and the opening 402 of the second case portion 42 is opposite to the opening 401 of the first case portion 41, and fixedly connects the second wall 412 and the third wall 421, so that the second wall 412 and the third wall 421 jointly form at least a portion of regions of the case 40 in the depth direction X of the first case portion 41. To be specific, the depth H of the case 40 is at least greater than the depth of the first case portion 41. The depth H of the case 40 may be understood as the size of the case 40 in the depth direction of the first case portion 41. Generally, the walls of the case 40 have a particular thickness. However, the wall thickness of the case 40 may be omitted herein.

In this embodiment, the case 40 includes the first case portion 41 and the second case portion 42. The first case portion 41 has the opening 401 and includes the first wall 411 opposite to the opening 401 and the second wall 412 connected to the first wall 411. The first wall 411 and the second wall 412 are integrally formed. In the depth direction X of the first case portion 41, at least a portion of regions of the case 40 is jointly formed by the first case portion 41 and the second case portion 42. Compared with a technical solution of directly integrally forming the case 40, the manner of preparing the case 40 can reduce the risk of cracking of the case 40 during integral stretch forming.

In some embodiments, the sizes of the second wall 412 are equal in the depth direction X of the first case portion 41. Similarly, the sizes of the third wall 421 are equal in the depth direction X of the first case portion 41. Then, in the depth direction X of the first case portion 41, the entire region of the case 40 is formed jointly by the first case portion 41 and the second case portion 42.

In some other embodiments, the sizes of the second wall 412 are not exactly equal in the depth direction X of the first case portion 41. For example, the cross-section of the second wall 412 may be semicircular or triangular. Similarly, the sizes of the third wall 421 in the depth direction X of the first case portion 41 are not completely equal. For example, the cross-section of the third wall 421 may be semicircular or triangular. Then, in the depth direction X of the first case portion 41, a portion of regions of the case 40 may be formed jointly by the first case portion 41 and the second case portion 42.

In an embodiment, the first case portion 41 and the second case portion 42 are fixedly connected by welding. In this way, for the case 40 prepared by using the manner in this embodiment of the present application, the case 40 is less likely to be cracked and damaged than the case formed by tailor-welding of a flat plate-shaped structure and a tubular structure having an opening, where welds are not at a right-angle edge.

Optionally, in the depth direction X of the first case portion 41, the second case portion 42 has two openings in communication with each other. For example, the second case portion 42 includes an opening 402 and an opening 403 shown in FIG. 19, and the opening 402 and the opening 403 are provided oppositely in the depth direction X of the first case portion 41.

In this embodiment, the second case portion 42 is configured to have the two openings in communication with each other in the depth direction X of the first case portion 41, so that a cover plate can be independent of the case 40, and an electrode terminal and other assemblies can be better disposed on the cover plate, thereby simplifying the preparation of the case 40.

In other embodiments, the second case portion 42 may have only one opening. For example, the second case portion 42, similar to the first case portion 41, is also prepared by using an integral stretch forming process. The second case portion 42 includes, in addition to the third wall 421, a wall intersecting with the third wall 421 and opposite to the opening of the second case portion 42, for example, a cover plate.

In an embodiment, the second case portion 42 is of an integrally formed structure.

In this embodiment, the second case portion 42 is of the integrally formed structure, so that welds of the case 40 can be reduced, the case 40 has high reliability, and the case 40 is not prone to a risk of deforming, cracking, and breaking.

In another example, when the second case portion 42 has only one opening, the second case portion 42 may be formed by tailor-welding of at least two portions.

It should be noted that when the second case portion 42 is formed by tailor-welding of at least two portions, welds of the second case portion 42 should not be at an edge, i.e., a so-called right-angle edge. For example, as shown in FIG. 20, the second case portion 42 includes four third walls 421, including a fourth wall 4211, a fifth wall 4212, a sixth wall 4213, and a seventh wall 4214, respectively. The fourth wall 4211 is opposite to the fifth wall 4212. The sixth wall 4213 is opposite to the seventh wall 4214. The sixth wall 4213 includes a first sub-wall 4213a and a second sub-wall 4213b. The first sub-wall 4213a and the second sub-wall 4213b are symmetrical with respect to a first centerline 4251. The seventh wall 4214 includes a third sub-wall 4214a and a fourth sub-wall 4214b. The third sub-wall 4214a and the fourth sub-wall 4214b are symmetrical with respect to a second centerline 4261. The second case portion 42 is formed by tailor-welding of a first portion 423 and a second portion 424. The first portion 423 includes the first sub-wall 4213a, the fourth wall 4211, and the third sub-wall 4214a. The second portion 424 includes the second sub-wall 4213b, the fifth wall 4212, and the fourth sub-wall 4214b. The first center line 4251 and the second center line 4261 are welds of the second case portion 42.

In this embodiment, the second case portion 42, formed by tailor-welding of the at least two portions, is easy to process and size-controllable, thereby improving the assembly accuracy of the case 40.

In some embodiments, a surface 4121 of the second wall 412 facing away from the first wall 411 is welded with the second case portion 42. Here, the wall thickness of the case 40 should be considered. It may be understood that the second wall 412 and the third wall 421 are welded, and an inner surface of the second wall 412 and an inner surface of the third wall 421 are spliced together to form a plane.

In other words, the depth of the case 40 is equal to the sum of the depth of the first case portion 41 and the depth of the second case portion 42.

In this embodiment, by welding the surface 4121 of the second wall 412 facing away from the first wall 411 with the second case portion 42, space utilization of the case 40 can be improved.

In some other embodiments, a surface of the second wall 412 perpendicular to a thickness direction Y of the second wall 412 is welded with the second case portion 42. For example, as shown in FIG. 21, an inner surface 4122 of the second wall 412 and the second case portion 42 are welded to an outer surface 4215 of the third wall 421 of the second case portion 42 at the opening 401 of the first case portion 41.

In this embodiment, by welding the surface of the second wall 412 perpendicular to the thickness direction Y of the second wall 412 with the second case portion 42, a welding area between the first case portion 41 and the second case portion 42 can be increased, thereby improving welding strength between the first case portion and the second case portion.

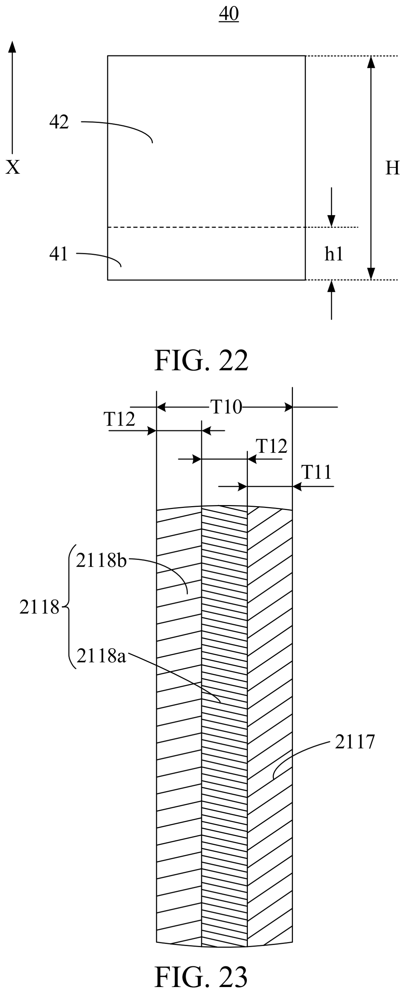

FIG. 22 shows a schematic cross-sectional diagram of a case 40 according to an embodiment of the present application. As shown in FIG. 22, in the depth direction X of the first case portion 41, the first case portion 41 has a maximum size of h1, and the case 40 has a maximum size of H, where H and h1 satisfy: 3≤H/h1≤80.

It should be explained that the size of the first case portion 41 may not be uniform in the depth direction X of the first case portion 41 regardless of the wall thickness. The maximum size h1 of the first case portion 41 may refer to a maximum distance between an end of the second wall 412 away from the first wall 411 and the first wall 411. Similarly, the size of the case 40 may not be uniform in the depth direction X of the first case portion 41 regardless of the wall thickness. The maximum size H of the case 40 may refer to a maximum distance between an end of the second case portion 42 away from the first wall 411 and the first wall 411.

In some embodiments, in the depth direction X of the first case portion 41, the size of the first case portion 41 is uniform and the size of the case 40 is uniform.

For example, H/h1=3, 5, 10, 15, 20, 25, 30, 35, 40, 45, 50, 55, 60, 65, 70, 75, or 80.

In this embodiment, a ratio of H to h1 is set within a range of 3 to 80, thereby avoiding cracking of the welds under an excessively large stress during the use of the battery cell since a welding position of the first case portion 41 and the second case portion 42 is too close to the first case portion 41 due to an excessively large ratio, and also avoiding a large manufacturing difficulty of the first case portion 41 caused by cracking under an excessively large stress during the stretching of the case 40 due to an excessively small ratio.

Further optionally, H and h1 satisfy: 5≤H/h1≤20. For example, H/h1=5, 6, 7, 8, 9, 10, 11, 12, 13, 14, 15, 16, 17, 18, 19, or 20.

In some embodiments, h1 satisfies: 3 mm≤h1≤50 mm.

For example, h1=3 mm, 5 mm, 10 mm, 15 mm, 20 mm, 25 mm, 30 mm, 35 mm, 40 mm, 45 mm, or 50 mm.

In this embodiment, h1 is set within a range of 3 mm to 50 mm, thereby avoiding a cracking risk during the charging and discharging of the battery cell since the welds are too close to the first case portion 41 due to an excessively small h1, and also avoiding a large manufacturing difficulty of the first case portion 41 caused by cracking during the integral stretching of the first case portion 41 due to an excessively large h1.

Further optionally, h1 satisfies: 5 mm≤h1≤30 mm.

It should be noted that when h1 satisfies the foregoing condition, H may satisfy that H is more than or equal to 100 mm. For example, H is equal to 400 mm.

In some embodiments, the case 40 has a yield strength of Re at a temperature of 25°C, where Re satisfies: 125 MPa≤Re≤1000 Mpa.

The yield strength may be understood as a critical stress value for material yield. Generally, after a material is under stress, as the stress increases, in addition to elastic deformation, the material may further be plastically deformed. A point at which the material is plastically deformed may be referred to as a yield point, and strength corresponding to the yield point is referred to as the yield strength. A manner of testing the yield strength Re of the case 40 at a temperature of 25°C in this embodiment of the present application may be selected according to an actual application. For example, GB/T 228.1-2010 may be used to test the yield strength Re at a room temperature of 25°C.

For example, Re=125 MPa, 130 MPa, 150 MPa, 180 MPa, 200 MPa, 230 MPa, 250 MPa, 280 MPa, 300 MPa, 320 MPa, 350 MPa, 380 MPa, 400 MPa, 430 MPa, 450 MPa, 480 MPa, 500 MPa, 530 MPa, 550 MPa, 570 MPa, 600 Mpa, 610 Mpa, 640 Mpa, 680 Mpa, 700 Mpa, 720 Mpa, 750 Mpa, 780 Mpa, 800 Mpa, 830 Mpa, 850 Mpa, 880 Mpa, 900 Mpa, 920 Mpa, 950 Mpa, 980 Mpa, or 1000 Mpa.

In this embodiment, the first case portion is made of a material having a yield strength c satisfying 125 MPa≤Re≤1000 Mpa, the wall thickness of the first case portion can be reduced without reducing the strength of the first case portion, thereby increasing a capacity space of the battery cell.

FIG. 23 shows a partial schematic structural diagram of a case 211 according to an embodiment of the present application. For example, FIG. 23 may be a partially enlarged view of a region A' shown in FIG. 9. As shown in FIG. 23, the case 211 in this embodiment of the present application is of a multi-layer structure. A material of an outermost case 2117 of the case 211 includes at least one of the following: aluminum, an aluminum alloy, copper, a copper alloy, and chromium.

It should be understood that the case 211 in this embodiment of the present application is of a multi-layer structure. To be specific, for any wall of the case 211, a multi-layer structure is stacked along a thickness direction of the wall, so that the case 211 is of a multi-layer structure. In addition, a mounting manner for the multi-layer structure of the case 211 may be set flexibly according to an actual application. For example, a plurality of single-layer case structures having different sizes but basically the same shapes may be first obtained through processing. For example, each single-layer case structure is a hollow structure having an opening. Next, case structures having relatively large sizes among the plurality of single-layer case structures are sequentially sleeved outside case structures having relatively small sizes, so that the plurality of single-layer case structures can be combined into a multi-layer case 211. For another example, an approximate plate-shaped structure having a multi-layer structure may be first obtained through processing. Then, a plurality of such plate-shaped structures are spliced and combined with each other, to form a multi-layer case 211 as well. However, this is not limited in this embodiment of the present application.

It should be understood that the outermost case 2117 of the case 211 in this embodiment of the present application includes an outermost structure of each wall of the case 211. To be specific, the outermost case 2117 is a case structure including an outer surface of the case 211.

In this embodiment of the present application, the material of the outermost case 2117 of the case 211 may include at least one of the following: aluminum, an aluminum alloy, copper, a copper alloy, and chromium. When the material of the outermost case 2117 contains aluminum, the aluminum may be oxidized into a dense aluminum oxide, which can protect against corrosion. When the material of the outermost case 2117 contains copper, the copper may be oxidized into a copper oxide, i.e., patina, which can protect against corrosion. When the material of the outermost case 2117 contains chromium, the chromium is oxidized to a chromium oxide, which can protect against corrosion. Therefore, when the material of the outermost case 2117 is a material capable of protecting against corrosion, another case layer located on an inner side of the outermost case can be protected by using the outermost case 2117, thereby improving the structural stability of the case 211, and prolonging the service life of the case 211.

It should be understood that a specific thickness of the outermost case 2117 in this embodiment of the present application may alternatively be flexibly set according to an actual application. For example, the thickness of the outermost case 2117 may be set according to the thickness of the case 211 and in a particular proportion.

In some embodiments, an average thickness of the outermost case 2117 is T11, and an average thickness of the case 211 is T10, where T11 and T10 satisfy: 0.15≤T11/T10≤0.5. If the ratio T11/T10 is set to be excessively small, because the average thickness T10 of the case 211 is limited, the average thickness T11 of the outermost case 2117 is very small. On one hand, the processing difficulty is increased. On the other hand, the anti-corrosion effect of the outermost case 2117 is reduced, thereby affecting the structural reliability of the case 211. On the contrary, if the ratio T11/T10 is set to be excessively large, the average thickness T11 of the outermost case 2117 is very large, and the thickness of another layer of the case 211 other than the outermost case 2117 is very small. However, the structural strength of the outermost case 2117 may be insufficient. Especially after the outermost case is oxidized, the deformation capability is poor. When the average thickness T11 of the outermost case is large, the overall structural strength of the case 211 is affected, thereby reducing the stability of the case 211.

Further, T11 and T10 satisfy: 0.15≤T11/T10≤0.4. By properly reducing a maximum value of the ratio T11/T10 and increasing a minimum value of the ratio T11/T10, the average thickness T11 of the outermost case 2117 can be limited from being excessively large or excessively small, thereby improving an anti-corrosion effect and also improving the structural strength and structural stability of the case 211.

Further, T11 and T10 satisfy: 0.2≤T11/T10≤0.3, to better improve the anti-corrosion effect and improve the stability and reliability of the case 211.

In some embodiments, the value of the ratio T11/T10 of the average thickness T11 of the outermost case 2117 to the average thickness T10 of the case 211 in this embodiment of the present application may alternatively be set to another value. For example, the value of the ratio T11/T10 may be any one of the following values or be between any two of the following values: 0.15, 0.18, 0.2, 0.23, 0.25, 0.28, 0.3, 0.33, 0.35, 0.38, 0.4, 0.43, 0.45, 0.48, and 0.5.

It should be understood that, in this embodiment of the present application, a value range of the average thickness T10 of the case 211 may alternatively be flexibly set according to an actual application. For example, the average thickness T10 of the case 211 satisfies: 0.05 mm≤T10≤0.5 mm. The value of the average thickness T10 of the case 211 should not be excessively small, to reduce the processing difficulty of the multi-layer case 211 and improve the structural strength of the case 211. For example, the case 211 is not prone to cracking, thereby prolonging the service life of the case 211. On the contrary, the value of the average thickness T10 of the case 211 should not be excessively large, so that the case 211 occupies less space, the space utilization of the battery cell 20 is improved, and the energy density of the battery 10 with a plurality of battery cells 20 is further improved.

Further, the average thickness T10 of the case 211 satisfies: 0.075 mm≤T10≤0.4 mm. By properly reducing the average thickness T10 of the case 211, space occupied by the case 211 inside the battery 10 can be reduced, thereby improving the energy density of the battery 10. By properly increasing the average thickness T10 of the case 211, the processing difficulty of the case 211 can be reduced.

Further, the average thickness T10 of the case 211 satisfies: 0.1 mm≤T10≤0.3 mm. The average thickness T10 of the case 211 is neither excessively large nor excessively small, which not only can improve the structural strength and structural stability of the case 211, but also can reduce space occupied by the case 211 inside the battery 10, thereby improving the energy density of the battery 10.

In some embodiments, the value of the average thickness T10 of the case 211 in this embodiment of the present application may alternatively be set to another value. For example, the value of the average thickness T10 of the case 211 may be any one of the following values or between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm, and 0.5 mm.

It should be understood that, in this embodiment of the present application, a value range of the average thickness T11 of the outermost case 2117 may alternatively be flexibly set according to an actual application. For example, T11 satisfies: 0.015 mm≤T11≤0.25 mm. The average thickness T11 of the outermost case 2117 should not be excessively small, to reduce the processing difficulty and improve the anti-corrosion effect of the outermost case 2117, thereby improving the structural reliability of the case 211. On the contrary, the average thickness T11 of the outermost case 2117 should not be excessively large. Considering that the deformation capability of the outermost case 2117 is relatively poor after being oxidized, when the average thickness T11 is excessively large, the deformation capability of the overall structure of the case 211 is affected, thereby reducing the reliability and stability of the case 211.

Further, the average thickness T11 of the outermost case 2117 may satisfy: 0.05 mm≤T11≤0.2 mm. By properly increasing a minimum value of the average thickness T11 of the outermost case 2117, the anti-corrosion effect of the outermost case 2117 can be improved. By properly reducing a maximum value of the average thickness T11 of the outermost case 2117, the deformation capability of the overall structure of the case 211 can be improved, thereby improving the reliability and stability of the case 211.

Further, the average thickness T11 of the outermost case 2117 may satisfy: 0.075 mm≤T11≤0.15 mm. The anti-corrosion effect of the outermost case 2117 can be improved, and the deformation capability of the overall structure of the case 211 can be improved, thereby improving the reliability and stability of the case 211.

In some embodiments, the value of the average thickness T11 of the outermost case 2117 in this embodiment of the present application may alternatively be set to another value. For example, the value of the average thickness T11 of the outermost case 2117 may be any one of the following values or between any two of the following values: 0.015 mm, 0.02 mm, 0.025 mm, 0.03 mm, 0.035 mm, 0.04 mm, 0.045 mm, 0.05 mm, 0.055 mm, 0.06 mm, 0.065 mm, 0.07 mm, 0.075 mm, 0.08 mm, 0.085 mm, 0.09 mm, 0.095 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm, and 0.25 mm.

It should be understood that the thickness of an inner case 2118 of the case 211 in this embodiment of the present application may alternatively be flexibly set according to an actual application. The inner case 2118 is any case other than the outermost case 2117 of the case 211. In addition, the case 211 may include one or more inner cases 2118. When the case 211 includes a plurality of inner cases 2118, the plurality of inner cases 2118 may have the same thickness, to facilitate processing, or may have different thicknesses, to flexibly adjust the thicknesses of the inner cases 2118 at different positions according to an actual application. For example, as shown in FIG. 23, the case 211 includes a three-layer case structure. The three-layer case structure includes an outermost case 2117 located at an outermost side and two inner cases 2118 located at an inner side. The two inner cases 2118 include an innermost case 2118b and an intermediate case 2118a. An average thickness of the innermost case 2118b and an average thickness of the intermediate case 2118a may be the same or different. For example, the average thickness of the innermost case 2118b and the average thickness of the intermediate case 2118a may both be set to T12, and a value of T12 may be set according to an application. For example, T12 may be greater than or equal to or less than T11. This is not limited in this embodiment of the present application.

It should be understood that the average thickness T10 of the case 211 in this embodiment of the present application may refer to an average thickness of at least a portion of regions of the case 211. The average thickness T11 of the outermost case 2117 of the case 211 may alternatively refer to an average thickness of at least a portion of regions of the outermost case 2117. The average thickness T12 of the inner case 2118 of the case 211 may alternatively refer to an average thickness of at least a portion of regions of the inner case 2118. In addition, a calculating region of the average thickness T10 of the case 211 is generally the same as a calculating region of the average thickness T11 of the outermost case 2117, and is also the same as a calculating region of the average thickness T12 of the inner case 2118. For example, if some regions are excluded from being calculated when the average thickness T10 of the case 211 is calculated, correspondingly, the same region also needs to be excluded from being calculated when the average thickness T11 of the outermost case 2117 is calculated, and the same region also needs to be excluded from being calculated when the average thickness T12 of the inner case 2118 is calculated. For ease of description, calculating the average thickness T10 of the case 211 is used as an example for description below, but related description is also applicable to determining the average thickness T11 of the outermost case 2117 and the average thickness T12 of the inner case 2118. Details are not described herein again.

For example, the average thickness T10 of the case 211 may refer to an average thickness T10 of all regions of the case 211. Particularly, when an entire surface of the case 211 is relatively flat, to be specific, the thicknesses of most regions of the case 211 are substantially equal or slightly different, or the thicknesses of all regions of the case 211 are substantially equal or slightly different, it may be determined that the average thickness of all regions of the case 211 is T10.

For another example, the average thickness T10 of the case 211 may alternatively refer to an average thickness T10 of a partial region of the case 211, i.e., an average thickness T10 of a remaining region after some regions of the case 211 are excluded. For example, if a special region exists in the case 211 and the thickness of the special region is greatly different from that of another region, for example, a protrusion structure or a recess region exists in the special region along a thickness direction so that the thickness of the special region is greater or smaller than that of another region, the special region may be excluded, to calculate an average thickness T10 of a remaining region of the case 211.

In some embodiments, the case 211 may include a functional region. The average thickness T10 of the case 211 is an average thickness of a region of the case 211 other than the functional region. For example, the functional region includes at least one of the following regions: a pressure relief region, a region in which an electrode terminal 214 is located, a liquid injection region, and a welding region. A difference between the thickness of the functional region and the thickness of another region of the case 211 is generally large. Therefore, when the average thickness T10 of the case 211 excluding the functional region is calculated, the design of the case 211 better meets strength requirements, to improve the structural strength and stability of the battery cell 20.

It should be understood that the functional region in this embodiment of the present application may include a region provided with a specific structure or having a specific use on the case 211, and is applicable to the above-described "functional region". For brevity, details are not described herein again. For example, the functional region may include a pressure relief region. The pressure relief region is configured for arrangement of a pressure relief mechanism. The pressure relief mechanism in this embodiment of the present application may be disposed in any wall of the battery cell 20. For example, the pressure relief mechanism may be disposed in a pressure relief region of the case 211 of the battery cell 20. The pressure relief mechanism may be a portion of the case 211, or may be of a split structure with the case 211 and fixed to the case 211 by means of, for example, welding. For example, when the pressure relief mechanism is a portion of the case 211, for example, the pressure relief mechanism may be formed by providing a score on the case 211, to be specific, the case 211 is provided with a score in the pressure relief region, and the thickness of the score is obviously less than the thickness of another region of the case 211. Therefore, the thickness of the score may not be calculated for the average thickness T10 of the case 211. The score is a weakest position of the pressure relief mechanism. When too much gas is generated in the battery cell 20, which causes the internal pressure to increase and reach a threshold, or when heat is generated by means of an internal reaction in the battery cell 20, which causes the internal temperature of the battery cell 20 to increase and reach a threshold, the pressure relief mechanism may be cracked at the score, to cause internal and external communication of the battery elevator 20. The pressure and temperature of the gas are released to the outside by splitting of the pressure relief mechanism, thereby avoiding explosion of the battery cell 20.

For another example, the pressure relief mechanism may alternatively be of a split structure with the case 211. The pressure relief mechanism may use a form such as an anti-explosion valve, a gas valve, a pressure relief valve, or a safety valve, and may specifically use a pressure-sensitive or temperature-sensitive element or structure. For example, a through hole is provided at the pressure relief region in the case 211. The pressure relief mechanism and the case 211 are mounted and fixed to each other by using the through hole. The mounted pressure relief mechanism may be protruded or recessed relative to another region of the case 211. Therefore, for calculation of the average thickness T10 of the case 211, a pressure relief region in which the pressure relief mechanism is located may not be included. When the internal pressure or temperature of the battery cell 20 reaches a predetermined threshold, the pressure relief mechanism performs an action or a weak structure in the pressure relief mechanism is damaged, to form an opening or a channel for relieving the internal pressure or temperature.

In some embodiments, the functional region may further include a region in which the electrode terminal 214 is located. Each electrode terminal 214 in this embodiment of the present application may be disposed on any wall, and the plurality of electrode terminals 214 may be disposed on the same wall or different walls of the battery cell 20. For example, as shown in FIG. 3 to FIG. 4, each battery cell 20 includes two electrode terminals 214, and the two electrode terminals 214 are located on the same wall. For example, the two electrode terminals 214 may be both located on the cover plate 212.

For another example, each battery cell 20 includes two electrode terminals 214, and the two electrode terminals 214 are located on the same wall. Different from that shown in FIG. 3 to FIG. 4, the two electrode terminals 214 may alternatively be located on any wall of the case 211. For example, the two electrode terminals 214 may be both located on a wall having the smallest area of the case 211. When one or more electrode terminals 214 are located on the case 211, each electrode terminal 214 is generally protruded out of another region of the case 211. To be specific, the thickness of a region in which the electrode terminal 214 is located is much greater than the thickness of another region of the case 211. Therefore, for calculation of the average thickness T10 of the case 211, the region in which all electrode terminals 214 are located may not be included.

In some embodiments, the functional region may further include a liquid injection region. For example, a liquid injection hole may be provided in the liquid injection region of the case 211. An electrolytic solution is injected into the case 211 through the liquid injection hole. After the injection of the electrolytic solution is completed, the liquid injection hole may be sealed by using a sealing member. Considering that the thickness of the liquid injection region in which the sealing member is located is generally much greater than the thickness of another region of the case 211, for calculation of the average thickness T10 of the case 211, the liquid injection region may not be included.

In some embodiments, the functional region may further include a welding region. For example, the case 211 and the cover plate 212 may be fixed by means of welding. Alternatively, the case 211 needs to be processed and formed by means of welding. For example, any two walls of the case 211 may be welded, or the case 211 is formed by splicing at least two portions, and then the case 211 may include a welding region. For example, the case 211 may be welded in a splicing manner, and then the case 211 may have a weld 2113. Specifically, the case 211 may include at least two portions. The at least two portions are connected by means of welding, to form the case 211. An example in which the case 211 includes two portions along a height direction Z of the battery cell 20 is mainly used in this embodiment of the present application, and a weld 2113 is provided between an upper half of the case and a lower half of the case. Alternatively, different from that shown in FIG. 4, another portion of the case 211 may be provided with a weld 2113. This is not limited in this embodiment of the present application. The welding region of the functional region in this embodiment of the present application may further include the weld 2113. Due to a processing process, the thickness of the welding region is generally greater than the thickness of another region of the case 211. Therefore, for calculation of the average thickness T10 of the case 211, the welding region may not be included.

It should be understood that to further improve the structural strength and reliability of the case 211, the inner case 2118 of the case 211 may be disposed according to an actual application. In some embodiments, the inner case 2118 of the case 211 has a tensile strength of Rm1 under a condition of 25°C, where Rm1 satisfies: 250 MPa≤Rm1≤2000 MPa. The entire structural strength and stability of the case 211 are increased by improving the tensile strength Rm1 of the inner case 2118 of the case 211 at a room temperature of 25°C. However, the tensile strength Rm1 of the inner case 2118 at the room temperature should not be excessively large, to reduce difficulty in selecting a material of the inner case 2118, thereby reducing the processing difficulty and processing costs of the battery cell 20.

It should be understood that, in this embodiment of the present application, a value range of the tensile strength Rm1 of the inner case 2118 at the room temperature of 25°C may be adjusted according to an actual application. For example, the value of the tensile strength Rm1 at the room temperature may alternatively satisfy 400 MPa≤Rm1≤1200 MPa. On one hand, by increasing the tensile strength Rm1 of the inner case 2118 at the room temperature, the deformation capability of the inner case 2118 can be improved, to resist expansion of the electrode assembly 22, so that the inner case 2118 is not prone to breaking, thereby increasing the structural stability and service life of the case 211 and the battery cell 20. On the other hand, the tensile strength Rm1 of the inner case 2118 at the room temperature is controlled not to be excessively large, to reduce the selection difficulty and processing difficulty of the material of the inner case 2118, reduce costs, and facilitate processing.

Further, it may be generally set that the tensile strength Rm1 of the inner case 2118 at the room temperature satisfies: 450 MPa≤Rm1≤800 MPa. The tensile strength Rm1 of the inner case 2118 at the room temperature is not excessively large or not excessively small, thereby improving the deformation capability of the inner case 2118, to resist expansion of the electrode assembly 22, and facilitating implementation and reducing costs.

In some embodiments, the value of the tensile strength Rm1 of the inner case 2118 at the room temperature in this embodiment of the present application may alternatively be set to another value. For example, the value of the tensile strength Rm1 at the room temperature may be any one of the following values or between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength in this embodiment of the present application refers to a maximum value of stress applied to the material before being broken. A manner of testing the tensile strength Rm1 of the inner case 2118 at a temperature of 25°C in this embodiment of the present application may be selected according to an actual application. For example, a national standard GB/T 228.1-2010 may be used to test the tensile strength Rm1 at a room temperature of 25°C.

The foregoing mainly uses a cuboid battery cell 20 as an example for description. A cylindrical battery cell 20 is described below with reference to the accompanying drawings. Except for different shapes of the cylindrical battery cell 20 in this embodiment of the present application and the rectangular battery cell 20 above, other descriptions are mutually applicable, and details are not described herein.

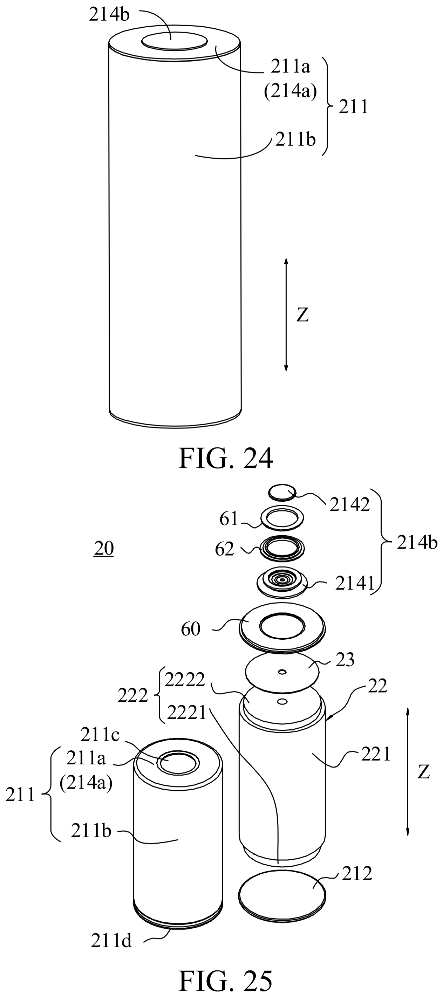

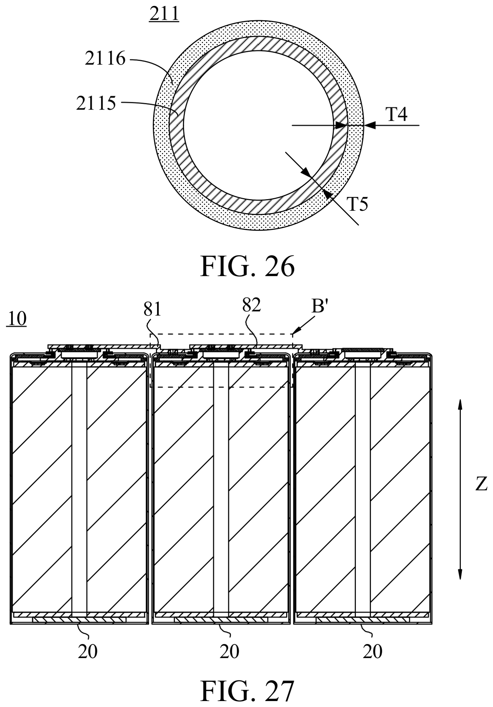

FIG. 24 shows a schematic structural diagram of a battery cell 20 according to an embodiment of the present application. For example, the battery cell 20 shown in FIG. 3 may be any battery cell 20 in the battery 10. FIG. 25 shows a partially exploded schematic structural diagram of a battery cell 20 according to an embodiment of the present application. For example, FIG. 25 may be a partially exploded schematic structural diagram of the battery cell 20 shown in FIG. 24. FIG. 26 shows a cross-sectional schematic diagram of a case 211 of a battery cell 20 according to an embodiment of the present application. For example, FIG. 26 may be a cross-sectional view of the case 211 of the battery cell 20 shown in FIG. 24 and FIG. 25. The cross-section is a cross section of the case 211.

In this embodiment of the present application, as shown in FIG. 24 to FIG. 26, the battery cell 20 includes an electrode assembly 22, a first electrode terminal 214a, and a case 211. The electrode assembly 22 includes a first tab 2221. The case 211 includes a barrel 211b and a cover 211a connected to the barrel 211b. The barrel 211b is disposed around an outer periphery of the electrode assembly 22. The cover 211a includes the first electrode terminal 214a. The first tab 2221 is electrically connected to the first electrode terminal 214a by using the barrel 211b. The case 211 is of a multi-layer structure. The multi-layer structure has different resistivity.

The case 211 may have a plurality of shapes, for example, a cylinder, a cuboid, or another polyhedron. For example, as shown in FIG. 24 to FIG. 26, descriptions are provided by using an example in which the case 211 is of a hollow cylinder structure. In addition, this embodiment of the present application mainly uses an example in which the case 211 is of a hollow structure having an opening formed at one end. The corresponding cover plate 212 is of a circular plate-shaped structure matching the case 211. For the cylindrical case 211, correspondingly, the barrel 211b is a cylinder, and the cover 211a is of a circular plate-shaped structure.

The electrode assembly 22 in this embodiment of the present application may include a first tab 2221. The first tab 2221 may be electrically connected to the first electrode terminal 214a by using the barrel 211b of the case 211, so that the structure of the battery cell 20 can be simplified. The case 211 is of a multi-layer structure, and the multi-layer structure has different resistivity. Therefore, an overcurrent capability of the battery cell 20 can be improved by using a layer with a low resistivity, and the structural strength of the case 211 can be improved by using a layer with a high resistivity. This not only can improve the performance of the battery cell 20, but also can improve the structural strength of the battery cell 20, thereby prolonging the service life of the battery cell 20.

In this embodiment of the present application, the electrode assembly 22 further includes a second tab 2222. The second tab 2222 and the first tab 2221 have opposite polarity. Specifically, from the perspective of an outer contour of the electrode assembly 22, the electrode assembly 22 includes a main body portion 221 and a tab 222. The tab 222 includes a first tab 2221 and a second tab 2222. The first tab 2221 and the second tab 2222 are protruded from the main body portion 221. The first tab 2221 is a portion, not coated with an active material layer, of a first electrode plate. The second tab 2222 is a portion, not coated with an active material layer, of a second electrode plate. The first tab 2221 and the second tab 2222 are configured to draw a current in the main body portion 221.

The first tab 2221 and the second tab 2222 may extend out from the same side of the main body portion 221. To be specific, the first tab 2221 and the second tab are located on the same end face of the electrode assembly 22. Alternatively, the first tab 2221 and the second tab 2222 may extend out from different sides of the main body portion 221. To be specific, the first tab 2221 and the second tab are located on different end faces of the electrode assembly 22. For example, the first tab 2221 and the second tab 2222 may respectively extend out from opposite sides. To be specific, the first tab 2221 and the second tab 2222 are respectively located on opposite end faces of the electrode assembly 22, to facilitate processing. As shown in FIG. 24 to FIG. 26, the first tab 2221 and the second tab 2222 may be respectively disposed at two sides of the main body portion 221 along a first direction Z. In other words, the first tab 2221 and the second tab 2222 are respectively disposed at two ends of the electrode assembly 22 along the first direction Z. The first direction Z may be a height direction Z of the electrode assembly 22.

It should be understood that the electrode assembly 22 includes a first electrode plate, a second electrode plate, and a spacer. The spacer is configured to space the first electrode plate from the second electrode plate. The first electrode plate and the second electrode plate have opposite polarity. In other words, one of the first electrode plate and the second electrode plate is a positive electrode plate 223, and the other of the first electrode plate and the second electrode plate is a negative electrode plate 224.

The first electrode plate, the second electrode plate, and the spacer each have a strip-like structure. The first electrode plate, the second electrode plate, and the spacer are wound together to form a winding structure. The winding structure may be a cylindrical structure, a flat structure, or a structure of another shape.

Optionally, the first tab 2221 is wound around a central axis of the electrode assembly 22 for a plurality of circles. The first tab 2221 includes a plurality of circles of tab layers. After the winding is completed, the first tab 2221 is generally cylindrical, and a gap is reserved between two adjacent circles of tab layers. In this embodiment of the present application, the first tab 2221 may be processed, to reduce the gap between the tab layers, thereby facilitating connection of the first tab 2221 to another conductive structure. For example, in this embodiment of the present application, the first tab 2221 may be flattened, so that an end region of the first tab 2221 far away from the main body portion 221 is gathered together. The flattening processing forms a dense end face at an end of the first tab 2221 far away from the main body portion 221, to reduce the gap between the tab layers, thereby facilitating connection of the first tab 2221 to another conductive structure. Alternatively, in this embodiment of the present application, a conductive material may be filled between two adjacent circles of tab layers, to reduce the gap between the tab layers.

Optionally, the second tab 2222 is wound around a central axis of the electrode assembly 22 for a plurality of circles. The second tab 2222 includes a plurality of circles of tab layers. For example, the second tab 2222 is also flattened, to reduce the gap between the tab layers of the second tab 2222.

In this embodiment of the present application, the battery cell 20 further includes a second electrode terminal 214b. The second electrode terminal 214b is electrically connected to the second tab 2222. The first electrode terminal 214a and the second electrode terminal 214b are located on the same wall of the battery cell 20, to improve integration of the battery cell 20, improve space utilization of the battery cell 20 in the battery 10, and facilitate processing and assembly.

It should be understood that the cover 211a in this embodiment of the present application includes the first electrode terminal 214a. For example, the first electrode terminal 214a may be disposed in the cover 211a. Alternatively, the cover 211a may be directly used as the first electrode terminal 214a.

In some embodiments, the cover 211a is the first electrode terminal 214a. The cover 211a is provided with an electrode lead-out hole 211c. The second electrode terminal 214b is insulated from the cover 211a and is mounted in the electrode lead-out hole 211c. One of the cover 211a and the second electrode terminal 214b is a positive output electrode of the battery cell, and the other is a negative output electrode of the battery cell. At least a portion of the case 211 may be used as an output electrode of the battery cell 20, so that a conventional electrode terminal is omitted, and the structure of the battery cell 20 can be simplified. When a plurality of battery cells 20 are assembled into a group, the case 211 may be electrically connected to a bus component, so that an overcurrent area can be enlarged, and the structural design of the bus component is more flexible.

For ease of description, an example in which the cover 211a is the first electrode terminal 214a is mainly used below. However, this is not limited in this embodiment of the present application.

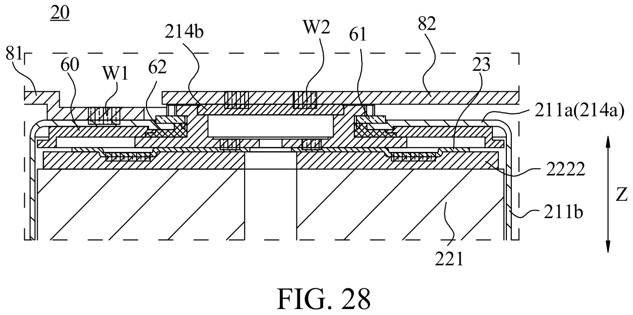

FIG. 27 is a partial cross-sectional schematic diagram of a battery 10 according to some embodiments of the present application. The battery 10 may include a plurality of battery cells 20. FIG. 28 is another partial cross-sectional schematic diagram of a battery 10 according to some embodiments of the present application. For example, FIG. 28 may be an enlarged schematic diagram of the battery 10 shown in FIG. 27 at a region B'.

As shown in FIG. 24 to FIG. 28, the cover 211a is provided with an electrode lead-out hole 211c. At least a portion of the cover 211a is configured to be electrically connected to a first connection member 81 and the first tab 2221 of the battery 10. The second electrode terminal 214b is configured to be electrically connected to a second connection member 82 and the second tab 2222 of the battery 10. The second electrode terminal 214b is insulated from the cover 211a and is mounted in the electrode lead-out hole 211c. One of the cover 211a and the second electrode terminal 214b is a positive output electrode of the battery cell 20, and the other is a negative output electrode of the battery cell 20.

The cover 211a is electrically connected to the barrel 211b. The cover 211a and the barrel 211b may have the same polarity.

It should be understood that the cover 211a and the barrel 211b in this embodiment of the present application may be an integrally formed structure. To be specific, the case 211 is an integrally formed member. In this way, a process of connecting the cover 211a to the barrel 211b may be omitted. For example, the case 211 may be formed by means of a stretching process. Certainly, the cover 211a and the barrel 211b may alternatively be two members that are separately provided, and then are connected together in a manner such as welding, riveting, or bonding. This embodiment of the present application mainly uses an example in which the cover 211a and the barrel 211b are of an integrally formed structure.

The case 211 in this embodiment of the present application may be of a hollow structure with one end open. Specifically, the barrel 211b has an opening 211d at an end facing away from the cover 211a. The battery cell 20 further includes a cover plate 212. The cover plate 212 covers the opening 211d of the barrel 211b, to close the opening 211d of the barrel 211b. The cover plate 212 may be of a plurality of structures. For example, the cover plate 212 is of a plate-shaped structure.

In some embodiments, the cover 211a is provided with an electrode lead-out hole 211c. A region of the cover 211a other than the electrode lead-out hole 211c includes a region for being welded to the first connection member 81. To be specific, the cover 211a may be welded to the first connection member 81 and form a first welding portion W1. For example, during welding, laser acts on a surface of the first connection member 81 facing away from the cover 211a, and the laser fuses and connects a portion of the first connection member 81 and a portion of the cover 211a, to form the first welding portion W1.

The electrode lead-out hole 211c extends through the cover 211a, so that electric energy in the electrode assembly 22 is led out to the outside of the case 211. For example, the electrode lead-out hole 211c extends through the cover 211a along the first direction Z.

The electrode lead-out hole 211c in this embodiment of the present application is made after the case 211 is stretched and formed. For example, in this embodiment, by using an opening process, the electrode lead-out hole 211c for mounting the second electrode terminal 214b is formed on the cover 211a, so that the positive output electrode and the negative output electrode are disposed at an end, facing away from the opening of the case 211, of the battery cell 20. The cover 211a is formed in a forming process of the case 211. The flatness can also be ensured after the electrode lead-out hole 211c is provided, and the connection strength between the cover 211a and the first connection member 81 is ensured. In addition, the flatness of the cover 211a is not limited by the size of the cover. Therefore, the cover 211a may have a large size, thereby improving the overcurrent capability of the battery cell 20.

In some embodiments, the barrel 211b is cylindrical, the electrode lead-out hole 211c is a circular hole, and a central axis of the barrel 211b and a central axis of the electrode lead-out hole 211c coincide. The "coincide" does not require that the central axis of the barrel 211b and the central axis of the electrode lead-out hole 211c absolutely completely coincide, and there may be a deviation allowed in a process.

The electrode lead-out hole 211c may be configured to define the position of the second electrode terminal 214b. In this embodiment, a central axis of the electrode lead-out hole 211c and the central axis of the barrel 211b coincide, so that at least a portion of the second electrode terminal 214b is located at a central position of the cover 211a. In this way, when a plurality of battery cells 20 are assembled into a group, a requirement on position precision of the second electrode terminal 214b can be reduced, an assembly process can be simplified, and the assembly efficiency can be improved.

The central axis of the electrode assembly 22 is a virtual straight line, which is parallel to the first direction Z. The central axis of the electrode assembly 22 may pass through the electrode lead-out hole 211c, or may be staggered from the electrode lead-out hole 211c. This is not limited in this embodiment.

The first tab 2221 is electrically connected to the cover 211a. The first tab 2221 may be directly and electrically connected to the cover 211a, or may be indirectly and electrically connected to the cover 211a by using another conductive structure. For example, the first tab 2221 may be electrically connected to the cover 211a by using the barrel 211b.

The second tab 2222 is electrically connected to the second electrode terminal 214b. The second tab 2222 may be directly and electrically connected to the second electrode terminal 214b, or may be indirectly and electrically connected to the second electrode terminal 214b by using another conductive structure. For example, the second tab 2222 may be electrically connected to the second electrode terminal 214b by using a current collecting member 23.

The second electrode terminal 214b is insulated from the cover 211a. Therefore, the second electrode terminal 214b and the cover 211a may have different polarity, and the second electrode terminal 214b and the cover 211a may be used as different output electrodes.

The second electrode terminal 214b is fixed to the cover 211a. The second electrode terminal 214b may be entirely fixed to an outer side of the cover 211a, or may extend into the case 211 through the electrode lead-out hole 211c.

When the first tab 2221 is a negative tab and the second tab 2222 is a positive tab, the cover 211a is a negative output electrode of the battery cell 20, and the second electrode terminal 214b is a positive output electrode of the battery cell 20. When the first tab 2221 is a positive tab and the second tab 2222 is a negative tab, the cover 211a is a positive output electrode of the battery cell 20, and the second electrode terminal 214b is a negative output electrode of the battery cell 20.

In the battery 10, the plurality of battery cells 20 are electrically connected by using a bus component. The bus component includes a first connection member 81 and a second connection member 82. The first connection member 81 is configured to be connected to the cover 211a of the battery cell 20, and the second connection member 82 is configured to be connected to the second electrode terminal 214b of the battery cell 20.

The first connection member 81 may be connected to the cover 211a by means of welding, bonding, or in another manner, to implement an electrical connection between the first connection member 81 and the cover 211a. The second connection member 82 may be connected to the second electrode terminal 214b by means of welding, bonding, riveting, or another manner, to implement an electrical connection between the second connection member 82 and the second electrode terminal 214b.

For example, the first connection member 81 connects a cover 211a of one battery cell 20 to a second electrode terminal 214b of another battery cell 20, and the second connection member 82 connects a second electrode terminal 214b of the former battery cell 20 to a cover 211a of still another battery cell 20. In this way, the first connection member 81 and the second connection member 82 connect the three battery cells 20 in series.

In this embodiment, the cover 211a and the second electrode terminal 214b are used as output electrodes, so that the structure of the battery cell 20 can be simplified, and the overcurrent capability of the battery cell 20 can be ensured. The cover 211a and the second electrode terminal 214b are located at the same end of the battery cell 20. In this way, the first connection member 81 and the second connection member 82 may be assembled to the same side of the battery cell 20. In this way, the assembly process can be simplified, and the efficiency of assembling a plurality of battery cells 20 into a group can be improved.

It should be understood that, as shown in FIG. 24 to FIG. 28, the second electrode terminal 214b in this embodiment of the present application includes a terminal body 2141. Further, the terminal body 2141 may be fixed to the cover 211a in a manner of riveting. For example, at least a portion of the terminal body 2141 is located in the electrode lead-out hole 211c, and two ends of the terminal body 2141 are riveted to the electrode lead-out hole 211c.

In some embodiments, the terminal body 2141 may be provided with a recess. The recess is recessed from an outer surface of the terminal body 2141 in a direction facing the electrode assembly 22. The bottom of the recess is configured to be welded to the current collecting member 23.

After the electrode assembly 22 and the current collecting member 23 are mounted into the case 211 through the opening 211d of the barrel 211b, and the current collecting member 23 is pressed against the cover 211a, an external welding device can weld the bottom of the recess and the current collecting member 23 from a side, facing away from the current collecting member 23, of the bottom of the recess.

In this embodiment, the thickness of the terminal body 2141 is reduced by providing the recess. In this way, welding power required for welding the bottom of the recess to the current collecting member 23 can be reduced, heat generation is reduced, and a risk that other members (e.g., a first insulating member 61 and a second insulating member 60) are burned is reduced.

In some embodiments, the second electrode terminal 214b further includes a sealing plate 2142. The sealing plate 2142 is configured to close an opening of the recess. The sealing plate 2142 may be entirely located at an outer side of the recess, or may be partially accommodated in the recess, provided that the sealing plate 2142 can close the opening of the recess. The sealing plate 2142 may protect the recess from the outside, thereby reducing external impurities entering the recess, reducing a risk that the bottom of the recess is damaged by the external impurities, and improving the sealing performance of the battery cell 20.

In some embodiments, the sealing plate 2142 is configured to be welded to the second connection member 82 and form a second welding portion W2. The second welding portion W2 can reduce contact resistance between the sealing plate 2142 and the second connection member 82, and improve the overcurrent capability.

In some embodiments, at least a portion of the sealing plate 2142 is protruded from the outer surface of the terminal body 2141. When the second connection member 82 and the sealing plate 2142 need to be welded, the second connection member 82 fits an upper surface of the sealing plate 2142 (i.e., a surface of the sealing plate 2142 facing away from the recess), and then the second connection member 82 and the sealing plate 2142 are welded. At least a portion of the sealing plate 2142 is protruded from the outer surface of the terminal body 2141, to prevent the outer surface of the terminal body 2141 from interfering with the fitting of the sealing plate 2142 and the second connection member 82, and ensure that the second connection member 82 and the sealing plate 2142 are tightly fitted.

In this embodiment of the present application, the battery cell 20 further includes a first insulating member 61. The first insulating member 61 is configured to insulate at least a portion of the second electrode terminal 214b from the cover 211a. For example, at least a portion of the first insulating member 61 is sandwiched between the cover 211a and the second electrode terminal 214b, to insulate the cover 211a from the second electrode terminal 214b, thereby reducing a short-circuit risk.

In this embodiment of the present application, the battery cell 20 further includes a second insulating member 60. The second insulating member 60 is located between the cover 211a and the electrode assembly 22. Specifically, the second insulating member 60 can separate the electrode assembly 22 from the cover 211a, thereby reducing a risk that the electrode assembly 22 is in contact conduction with the cover 211a when the battery cell 20 vibrates, and improving safety performance.

In some embodiments, at least one of the first insulating member 61 and the second insulating member 60 may be configured to seal the electrode lead-out hole 211c. In some other embodiments, the battery cell 20 further includes a sealing ring 62. The sealing ring 62 is sleeved over the second electrode terminal 214b and is configured to seal the electrode lead-out hole 211c. Optionally, a portion of the sealing ring 62 extends into the electrode lead-out hole 211c, to space a hole wall of the electrode lead-out hole 211c from the second electrode terminal 214b.

In some embodiments, the second tab 2222 is disposed at an end of the electrode assembly 22 facing the cover 211a, and the first tab 2221 is disposed at an end of the electrode assembly 22 facing away from the cover 211a. The barrel 211b is configured to connect the first tab 2221 to the cover 211a, so that the first tab 2221 is electrically connected to the cover 211a.

The barrel 211b may be directly and electrically connected to the first tab 2221, or may be electrically connected to the first tab 2221 by using another member. For example, the first tab 2221 is electrically connected to the barrel 211b by using the cover plate 212.

In this embodiment of the present application, the first tab 2221 and the second tab 2222 are disposed at two ends of the electrode assembly 22, thereby reducing a risk of conduction of the first tab 2221 and the second tab 2222, and increasing an overcurrent area of the first tab 2221 and an overcurrent area of the second tab 2222.

In some embodiments, the first tab 2221 is a negative tab, and a base material of the case 211 is steel. The case 211 is electrically connected to the negative tab. To be specific, the case 211 is in a low-potential state. In the low-potential state, the steel case 211 is not prone to corrosion by an electrolytic solution, to reduce safety risks.

In some embodiments, the battery cell 20 further includes a current collecting member 23, configured to connect the second tab 2222 to the second electrode terminal 214b. The current collecting member 23 may be connected to the second tab 2222 in a manner such as welding, abutting, or riveting, and is connected to the second electrode terminal 214b in a manner such as welding, abutting, bonding, or riveting, thereby implementing an electrical connection between the second tab 2222 and the second electrode terminal 214b.

In the first direction Z, the second electrode terminal 214b and a middle region of the second tab 2222 are disposed oppositely. If the second electrode terminal 214b and the second tab 2222 are directly connected, a conductive path between an edge region of the second tab 2222 and the second electrode terminal 214b is relatively long, causing non-uniform current density of the second electrode plate of the electrode assembly 22, increasing internal resistance, and affecting the overcurrent capability and charging efficiency of the battery cell 20.

In this embodiment of the present application, there may be a large connection area between the current collecting member 23 and the second tab 2222, and a current of the second tab 2222 may merge into the second electrode terminal 214b through the current collecting member 23. In this way, the current collecting member 23 can reduce a difference of conductive paths between different regions of the second tab 2222 and the second electrode terminal 214b, improve the current density uniformity of the second electrode plate, reduce the internal resistance, and improve the overcurrent capability and charging efficiency of the battery cell 20.

It should be understood that the case 211 in this embodiment of the present application is of a multi-layer structure. To be specific, both the barrel 211b and the cover 211a of the case 211 are of a multi-layer structure. For ease of description, a case 211 below includes a barrel 211b and a cover 211a.

In this embodiment of the present application, the case 211 includes a first case layer 2115. The first case layer 2115 has a resistivity of K1, where K1 satisfies: 1×10^-8 Ω·m≤K1≤6×10^-8 Ω·m. The first case layer 2115 is any case in the multi-layer case 211. For example, an innermost case is the first case layer 2115 in FIG. 26. However, this is not limited in this embodiment of the present application. By setting the first case layer 2115 included in the case 211 to have a small resistivity K1, the overcurrent capability of the case 211 can be improved, thereby improving the performance of the battery cell 20.

In some embodiments, the resistivity K1 of the first case layer 2115 may further satisfy: 1×10^-8 Ω·m≤K1≤2.8×10^-8 Ω·m. This can not only improve the overcurrent capability and performance of the case 211, but also facilitate implementation. In some embodiments, a value of the resistivity K1 of the first case layer 2115 may alternatively be set to another value. For example, the value of the resistivity K1 of the first case layer 2115 may be any one of the following values or between any two of the following values: 1×10^-8 Ω·m, 1.3×10^-8 Ω·m, 1.5×10^-8 Ω·m, 1.8×10^-8 Ω·m, 2×10^-8 Ω·m, 2.3×10^-8 Ω·m, 2.5×10^-8 Ω·m, 2.8×10^-8 Ω·m, 3×10^-8 Ω·m, 3.3×10^-8 Ω·m, 3.5×10^-8 Ω·m, 3.8×10^-8 Ω·m, 4×10^-8 Ω·m, 4.3×10^-8 Ω·m, 4.5×10^-8 Ω·m, 4.8×10^-8 Ω·m, 5×10^-8 Ω·m, 5.3×10^-8 Ω·m, 5.5×10^-8 Ω·m, 5.8, and 6×10^-8 Ω·m.

It should be understood that a specific thickness of the first case layer 2115 in this embodiment of the present application may alternatively be flexibly set according to an actual application. For example, the thickness of the first case layer 2115 may be set according to the thickness of the case 211 and in a particular proportion.

In some embodiments, an average thickness of the first case layer 2115 is T13, and an average thickness of the case 211 is T10, where T13 and T10 satisfy: 0.15≤T13/T10≤0.85. If T13/T10 is set to be excessively small, when the average thickness T10 of the case 211 is particular, T13 is excessively small, so that the processing difficulty is increased, the overflow heat is excessively large, and thermal runaway is caused. On the contrary, if T13/T10 is set to be excessively large, when the average thickness T10 of the case 211 is particular, T13 is excessively large, the thickness of other structural layers is excessively small, and the structural strength of the case 211 is affected.

Further, T13 and T10 satisfy: 0.2≤T13/T10≤0.6. This can not only improve the overcurrent capability of the case 211, but also improve the structural strength of the case 211. In some embodiments, the value of the ratio T13/T10 may alternatively be set to another value. For example, the value of the ratio T13/T10 may be any one of the following values or be between any two of the following values: 0.15, 0.2, 0.25, 0.3, 0.35, 0.4, 0.45, 0.5, 0.55, 0.6, 0.65, 0.7, 0.75, 0.8, and 0.85.

It should be understood that, in this embodiment of the present application, a value range of the average thickness T10 of the case 211 may alternatively be flexibly set according to an actual application. For example, the average thickness T10 of the case 211 satisfies: 0.05 mm≤T10≤0.5 mm. The value of the average thickness T10 of the case 211 should not be excessively small, to reduce the processing difficulty of the multi-layer case 211 and improve the structural strength of the case 211. For example, the case 211 is not prone to cracking, thereby prolonging the service life of the case 211. On the contrary, the value of the average thickness T10 of the case 211 should not be excessively large, so that the case 211 occupies less space, the space utilization of the battery cell 20 is improved, and the energy density of the battery 10 with a plurality of battery cells 20 is further improved.

Further, the average thickness T10 of the case 211 satisfies: 0.075 mm≤T10≤0.4 mm. By properly reducing the average thickness T10 of the case 211, space occupied by the case 211 inside the battery 10 can be reduced, thereby improving the energy density of the battery 10. By properly increasing the average thickness T10 of the case 211, the processing difficulty of the case 211 can be reduced.

Further, the average thickness T10 of the case 211 satisfies: 0.1 mm≤T10≤0.3 mm. The average thickness T10 of the case 211 is neither excessively large nor excessively small, which not only can improve the structural strength and structural stability of the case 211, but also can reduce space occupied by the case 211 inside the battery 10, thereby improving the energy density of the battery 10.

In some embodiments, the value of the average thickness T10 of the case 211 in this embodiment of the present application may alternatively be set to another value. For example, the value of the average thickness T10 of the case 211 may be any one of the following values or between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm, and 0.5 mm.

In this embodiment of the present application, a material of the first case layer 2115 may be flexibly set according to an actual application. For example, the material of the first case layer 2115 includes at least one of the following: silver, copper, aluminum, magnesium, and brass, to satisfy a design requirement on the resistivity K1 of the first case layer 2115.

In this embodiment of the present application, the case 211 includes a second case layer 2116. The second case layer 2116 has a tensile strength of Rm2 at a temperature of 25°C, where Rm2 satisfies: 250 MPa≤Rm2≤2000 MPa. The second case layer 2116 is any case in the multi-layer case 211. For example, an outermost case is the second case layer 2116 in FIG. 26. However, this is not limited in this embodiment of the present application. By setting a large tensile strength Rm2 of the second case layer 2116 included in the case 211 at a temperature of 25°C, the structural strength and deformation capability of the case 211 can be improved, so that the case 211 is not prone to breaking during the use of the battery cell 20, thereby increasing the structural stability and service life of the battery cell 20. However, the tensile strength Rm2 of the second case layer 2116 at a room temperature of 25°C should not be excessively large, to reduce the selection difficulty and processing difficulty of the material of the case 211, reduce costs, and facilitate processing.

It should be understood that, in this embodiment of the present application, a value range of the tensile strength Rm2 of the second case layer 2116 of the case 211 at a temperature of 25°C may be adjusted according to an actual application. For example, the value of the tensile strength Rm2 at the room temperature may alternatively satisfy 400 MPa≤Rm2≤1200 MPa. On one hand, by increasing the tensile strength Rm2 of the second case layer 2116 at the room temperature, the deformation capability of the second case layer 2116 can be improved, to resist expansion of the electrode assembly 22, so that the second case layer 2116 is not prone to breaking, thereby increasing the structural stability and service life of the battery cell 20. On the other hand, the tensile strength Rm2 of the second case layer 2116 at the room temperature is controlled not to be excessively large, to reduce the selection difficulty and processing difficulty of the material of the second case layer 2116, reduce costs, and facilitate processing.

Further, it may be generally set that the tensile strength Rm2 of the second case layer 2116 at the room temperature satisfies: 450 MPa≤Rm2≤800 MPa. The tensile strength Rm2 of the second case layer 2116 at the room temperature is not excessively large or not excessively small, thereby improving the deformation capability of the portion of the case 211, to resist expansion of the electrode assembly 22, and facilitating implementation and reducing costs.

In some embodiments, the value of the tensile strength Rm2 of the second case layer 2116 of the case 211 at the room temperature in this embodiment of the present application may alternatively be set to another value. For example, the value of the tensile strength Rm2 at the room temperature may be any one of the following values or between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength in this embodiment of the present application refers to a maximum value of stress applied to the material before being broken. A manner of testing the tensile strength Rm2 of the second case layer 2116 of the case 211 at a temperature of 25°C in this embodiment of the present application may be selected according to an actual application. For example, a national standard GB/T 228.1-2010 may be used to test the tensile strength Rm2 at a room temperature of 25°C.

In this embodiment of the present application, an average thickness of the second case layer 2116 is T14, and an average thickness of the case 211 is T10, where T14 and T10 satisfy: 0.15≤T14/T10≤0.85. If T14/T10 is set to be excessively small, when the average thickness T10 of the case 211 is particular, T14 is excessively small, and the structural strength of the case 211 is affected. On the contrary, if T14/T10 is set to be excessively large, when the average thickness T10 of the case 211 is particular, T14 is excessively large, and the thickness of other structural layers is excessively small. For example, the thickness T13 of the first case layer 2115 is excessively small. Consequently, the processing difficulty is increased, the overflow heat is excessively large, and thermal runaway is caused.

Further, T14 and T10 satisfy: 0.2≤T14/T10≤0.6. This can not only improve the overcurrent capability of the case 211, but also improve the structural strength of the case 211. In some embodiments, the value of the ratio T14/T10 may alternatively be set to another value. For example, the value of the ratio T14/T10 may be any one of the following values or be between any two of the following values: 0.15, 0.2, 0.25, 0.3, 0.35, 0.4, 0.45, 0.5, 0.55, 0.6, 0.65, 0.7, 0.75, 0.8, and 0.85.

In addition, in this embodiment of the present application, the average thickness T14 of the second case layer 2116 may be the same as or different from the average thickness T13 of the first case layer 2115, to satisfy different design requirements.

It should be understood that the average thickness T10 of the case 211 in this embodiment of the present application may refer to an average thickness of at least a portion of regions of the case 211. The average thickness T13 of the first case layer 2115 of the case 211 may alternatively refer to an average thickness of at least a portion of regions of the first case layer 2115. The average thickness T14 of the second case layer 2116 of the case 211 may alternatively refer to an average thickness of at least a portion of regions of the second case layer 2116. In addition, a calculating region of the average thickness T10 of the case 211 is generally the same as a calculating region of the average thickness T13 of the first case layer 2115, and is also the same as a calculating region of the average thickness T14 of the second case layer 2116. For example, if some regions are excluded from being calculated when the average thickness T10 of the case 211 is calculated, correspondingly, the same region also needs to be excluded from being calculated when the average thickness T13 of the first case layer 2115 is calculated, and the same region also needs to be excluded from being calculated when the average thickness T14 of the second case layer 2116 is calculated. For ease of description, calculating the average thickness T10 of the case 211 is used as an example for description below, but related description is also applicable to determining the average thickness T13 of the first case layer 2115 and the average thickness T14 of the second case layer 2116. Details are not described herein again.

For example, the average thickness T10 of the case 211 may refer to an average thickness T10 of all regions of the case 211. Particularly, when an entire surface of the case 211 is relatively flat, to be specific, the thicknesses of most regions of the case 211 are substantially equal or slightly different, or the thicknesses of all regions of the case 211 are substantially equal or slightly different, it may be determined that the average thickness of all regions of the case 211 is T10.

For another example, the average thickness T10 of the case 211 may alternatively refer to an average thickness T10 of a partial region of the case 211, i.e., an average thickness T10 of a remaining region after some regions of the case 211 are excluded. For example, if a special region exists in the case 211 and the thickness of the special region is greatly different from that of another region, for example, a protrusion structure or a recess region exists in the special region along a thickness direction so that the thickness of the special region is greater or smaller than that of another region, the special region may be excluded, to calculate an average thickness T10 of a remaining region of the case 211.

In some embodiments, the case 211 may include a functional region. The average thickness T10 of the case 211 is an average thickness of a region of the case 211 other than the functional region. For example, the functional region includes at least one of the following regions: a pressure relief region, a region in which an electrode terminal 214 is located, a liquid injection region, and a welding region. A difference between the thickness of the functional region and the thickness of another region of the case 211 is generally large. Therefore, when the average thickness T10 of the case 211 excluding the functional region is calculated, the design of the case 211 better meets strength requirements, to improve the structural strength and stability of the battery cell 20.

Specifically, the functional region in this embodiment of the present application may include a region provided with a specific structure or having a specific use on the case 211. For example, the functional region may include a pressure relief region. The pressure relief region is configured for arrangement of a pressure relief mechanism. The pressure relief mechanism is configured to, when an internal pressure or temperature of the battery cell 20 reaches a predetermined threshold, actuate an element or a component for relieving the internal pressure or temperature. The predetermined threshold may be adjusted according to different design requirements. For example, the predetermined threshold may depend on one or more materials of a positive electrode plate, a negative electrode plate, an electrolytic solution, and a separator in the battery cell 20.

"Actuation" mentioned in the present application means that the pressure relief mechanism acts or is activated to a particular state, so that the internal pressure and temperature of the battery cell 20 are relieved. The action generated by the pressure relief mechanism may include, but is not limited to: at least a portion in the pressure relief mechanism is cracked, broken, torn, or opened. When the pressure relief mechanism performs actuation, a high-temperature and high-pressure material inside the battery cell 20 is discharged from an actuated part as an emission. In this way, the pressure and temperature of the battery cell 20 can be relieved with a controllable pressure or temperature, thereby avoiding a potential more serious accident.

The emission from the battery cell 20 mentioned in the present application includes, but is not limited to: an electrolytic solution, positive and negative electrode plates that are dissolved or split, fragments of a separator, a high-temperature and high-pressure gas generated by a reaction, and a flame.

The pressure relief mechanism in this embodiment of the present application may be disposed in any wall of the battery cell 20. For example, the pressure relief mechanism may be disposed in a pressure relief region of the case 211 of the battery cell 20. The pressure relief mechanism may be a portion of the case 211, or may be of a split structure with the case 211 and fixed to the case 211 by means of, for example, welding. For example, when the pressure relief mechanism is a portion of the case 211, for example, the pressure relief mechanism may be formed by providing a score on the case 211, to be specific, the case 211 is provided with a score in the pressure relief region, and the thickness of the score is obviously less than the thickness of another region of the case 211. Therefore, the thickness of the score may not be calculated for the average thickness T10 of the case 211. The score is a weakest position of the pressure relief mechanism. When too much gas is generated in the battery cell 20, which causes the internal pressure to increase and reach a threshold, or when heat is generated by means of an internal reaction in the battery cell 20, which causes the internal temperature of the battery cell 20 to increase and reach a threshold, the pressure relief mechanism may be cracked at the score, to cause internal and external communication of the battery elevator 20. The pressure and temperature of the gas are released to the outside by splitting of the pressure relief mechanism, thereby avoiding explosion of the battery cell 20.

For another example, the pressure relief mechanism may alternatively be of a split structure with the case 211. The pressure relief mechanism may use a form such as an anti-explosion valve, a gas valve, a pressure relief valve, or a safety valve, and may specifically use a pressure-sensitive or temperature-sensitive element or structure. For example, a through hole is provided at the pressure relief region in the case 211. The pressure relief mechanism and the case 211 are mounted and fixed to each other by using the through hole. The mounted pressure relief mechanism may be protruded or recessed relative to another region of the case 211. Therefore, for calculation of the average thickness T10 of the case 211, a pressure relief region in which the pressure relief mechanism is located may not be included. When the internal pressure or temperature of the battery cell 20 reaches a predetermined threshold, the pressure relief mechanism performs an action or a weak structure in the pressure relief mechanism is damaged, to form an opening or a channel for relieving the internal pressure or temperature.

In some embodiments, the functional region may further include a region in which the electrode terminal 214 is located. Specifically, the electrode terminal 214 in this embodiment of the present application is configured to be electrically connected to the electrode assembly 22 inside the battery cell 20, to output electric energy of the battery cell 20. In addition, the battery cell 20 may include at least two electrode terminals 214. The at least two electrode terminals 214 respectively include at least one positive electrode terminal and at least one negative electrode terminal. The positive electrode terminal is configured to be electrically connected to a positive tab of the electrode assembly 22. The negative electrode terminal is configured to be electrically connected to a negative tab of the electrode assembly 22. The positive electrode terminal may be connected to the positive tab directly or indirectly. The negative electrode terminal may be directly connected to the negative tab directly or indirectly. For example, in this embodiment of the present application, the positive electrode terminal may be a first electrode terminal 214a, and the negative electrode terminal is a second electrode terminal 214b. Alternatively, the positive electrode terminal may be a second electrode terminal 214b, and the negative electrode terminal is a first electrode terminal 214a.

It should be understood that each electrode terminal 214 in this embodiment of the present application may be disposed on any wall, and the plurality of electrode terminals 214 may be disposed on the same wall or different walls of the battery cell 20. For example, as shown in FIG. 24 to FIG. 28, each battery cell 20 includes two electrode terminals 214, and the two electrode terminals 214 are located on the same wall. For example, the two electrode terminals 214 may be both located on the cover 211a. However, in this embodiment of the present application, the cover 211a is the first electrode terminal 214a. Then, one electrode terminal 214 of the two electrode terminals 214 included in the battery cell 20 is protruded from another region of the cover 211a of the case 211. To be specific, the thickness of a region in which the second electrode terminal 214b is located is much greater than the thickness of another region of the case 211. Therefore, for calculation of the average thickness T10 of the case 211, the region in which the second electrode terminal 214b is located may not be included.

In some embodiments, the functional region may further include a liquid injection region. For example, a liquid injection hole may be provided in the liquid injection region of the case 211. An electrolytic solution is injected into the case 211 through the liquid injection hole. After the injection of the electrolytic solution is completed, the liquid injection hole may be sealed by using a sealing member. Considering that the thickness of the liquid injection region in which the sealing member is located is generally much greater than the thickness of another region of the case 211, for calculation of the average thickness T10 of the case 211, the liquid injection region may not be included.

In some embodiments, the functional region may further include a welding region. For example, the case 211 and the cover plate 212 may be fixed by means of welding. Alternatively, the case 211 needs to be processed and formed by means of welding. For example, any two walls of the case 211 may be welded, or the case 211 is formed by splicing at least two portions, and then the case 211 may include a welding region. For example, the case 211 may be welded in a splicing manner, and then the case 211 may have a weld 2113. Specifically, the case 211 may include at least two portions. The at least two portions are connected by means of welding, to form the case 211. An example in which the case 211 includes two portions along a height direction Z of the battery cell 20 is mainly used in this embodiment of the present application, and a weld 2113 is provided between an upper half of the case and a lower half of the case. Alternatively, different from that shown in FIG. 25, another portion of the case 211 may be provided with a weld 2113. This is not limited in this embodiment of the present application. The welding region of the functional region in this embodiment of the present application may further include the weld 2113. Due to a processing process, the thickness of the welding region is generally greater than the thickness of another region of the case 211. Therefore, for calculation of the average thickness T10 of the case 211, the welding region may not be included.

In some embodiments, the second case layer 2116 has a resistivity of K2, where K2 and K1 satisfy: 2≤K2/K1≤40, and may further satisfy: 2≤K2/K1≤20, to limit the resistivity K1 of the first case layer 2115, thereby improving the overcurrent capability of the case 211.

In this embodiment of the present application, a material of the second case layer 2116 may be flexibly set according to an actual application. For example, the material of the second case layer 2116 includes at least one of the following: titanium, steel, silicon steel, and stainless steel, to satisfy a design requirement of the second case layer 2116.

In some embodiments, the materials of the first case layer 2115 and the second case layer 2116 may be selected from the materials shown in Table 9, to meet the design requirements.

**Table 9**

| No. | Material | Resistivity (Ω·m) | Tensile strength (MPa) |
|---|---|---|---|
| 1 | Silver | 1.59×10^-8 | 160-420 |
| 2 | Copper | 1.68×10^-8 | 210-270 |
| 3 | Aluminum | 2.65×10^-8 | 120-160 |
| 4 | Magnesium | 4.45×10^-8 | 120-220 |
| 5 | Brass | 6×10^-8 | 330-550 |
| 6 | Titanium | 4.2×10^-7 | 280-550 |
| 7 | Steel | 1.35×10^-7 | 370-2000 |
| 8 | Silicon steel | 5×10^-7 | 1,000-1,300 |
| 9 | Stainless steel | 6.9×10^-7 | 500-1,000 |

It should be understood that the case 211 in this embodiment of the present application is of a multi-layer structure. The number of layers of the case 211 may be set according to an actual application. For example, the case 211 includes a plurality of first case layers 2115 and/or a plurality of second case layers 2116, and positions of different first case layers 2115 and second case layers 2116 may be flexibly set according to actual applications, to satisfy different application scenarios.

In some embodiments, the case 211 may include a plurality of first case layers 2115 and a second case layer 2116, and the second case layer 2116 may be located in the middle of or on a side of the plurality of first case layers 2115. Similarly, the case 211 may include a first case layer 2115 and a plurality of second case layers 2116, and the first case layer 2115 may be located in the middle of or on a side of the plurality of second case layers 2116. For another example, the case 211 may include a plurality of first case layers 2115 and a plurality of second case layers 2116. The plurality of first case layers 2115 and the plurality of second case layers 2116 may be spaced apart, or the plurality of first case layers 2115 may be disposed on a side of the plurality of second case layers 2116. This is not limited in this embodiment of the present application.

In some embodiments, if the case 211 includes a plurality of first case layers 2115 satisfying the foregoing design requirement, materials of the plurality of first case layers 2115 may be the same or different, the resistivity K1 may be the same or different, and the thickness T13 may be the same or different, to increase design flexibility. Similarly, if the case 211 includes a plurality of second case layers 2116 satisfying the foregoing design requirement, materials of the plurality of second case layers 2116 may be the same or different, the tensile strengths Rm2 at a room temperature may be the same or different, and the thicknesses T14 may be the same or different, to increase design flexibility.

An embodiment of the present application further provides a battery. The battery includes battery cells 20 according to the forgoing embodiments.

An embodiment of the present application further provides a power consuming device, including a battery. The battery includes battery cells 20 according to the forgoing embodiments, and is configured to supply electric energy to the power consuming device.

The power consuming device may be the vehicle shown in FIG. 1, or may be any device using a battery.

Although the present application is described with reference to preferred embodiments, various improvements may be made to the present application and components therein may be replaced with equivalents without departing from the scope of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising:
an electrode assembly, wherein the electrode assembly comprises a negative electrode plate, the negative electrode plate comprises a negative electrode active material with a metal ion reversely deintercalated and intercalated, and the negative electrode active material comprises a silicon-based material; and
a case, configured to accommodate the electrode assembly, wherein at least a portion of regions of the case has a yield strength of Re at a temperature of 25°C, and Re satisfies: 140 MPa≤Re≤1000 MPa.

2. The battery cell according to claim 1, wherein in the negative electrode active material, a mass ratio of the silicon-based material is g, and g and Re satisfy: 2%<g<40% and 140 MPa<Re<600 MPa.

3. The battery cell according to claim 2, wherein a material of at least a portion of regions of the case comprises carbon steel or stainless steel, and g and Re satisfy: 4.5%≤g≤40% and 170 MPa≤Re<600 MPa.

4. The battery cell according to claim 3, wherein g and Re satisfy: 8%≤g≤40% and 180 MPa≤Re<600 MPa.

5. The battery cell according to claim 4, wherein g and Re satisfy: 10%≤g≤40% and 190 MPa≤Re<600 MPa.

6. The battery cell according to claim 5, wherein g and Re satisfy: 15%≤g≤40% and 200 MPa≤Re<600 MPa.

7. The battery cell according to claim 6, wherein g and Re satisfy: 20%≤g≤40% and 210 MPa≤Re<600 MPa.

8. The battery cell according to any one of claims 1 to 7, wherein the silicon-based material comprises at least one of elemental silicon, a silicon oxide, a silicon-carbon composite, a silicon-nitrogen composite, a silicon alloy, or a silicon oxycarbide composite.

9. The battery cell according to any one of claims 1 to 8, wherein the case comprises a weld, at least a portion of regions of the case comprises a region within a preset distance from the case to the weld, the preset distance is L, and L satisfies: L=10 mm.

10. The battery cell according to any one of claims 1 to 9, wherein at least a portion of regions of the case comprises all walls of the case.

11. The battery cell according to any one of claims 1 to 10, wherein the case is in the shape of a cylinder or a polygonal prism.

12. The battery cell according to any one of claims 1 to 11, wherein at least a portion of regions of the case has a tensile strength of Rm at a temperature of 25°C, and Rm satisfies: 250 MPa≤Rm≤2000 MPa.

13. The battery cell according to any one of claims 1 to 12, wherein the electrode assembly further comprises a positive electrode plate, the positive electrode plate comprises a positive electrode active material with a metal ion reversely deintercalated and intercalated, and the positive electrode active material comprises a nickel-containing compound; and
at least a portion of regions of the case has a melting point of p, and p satisfies: 1200°C≤p≤2000°C.

14. The battery cell according to any one of claims 1 to 13, wherein the electrode assembly further comprises a positive electrode plate, the positive electrode plate comprises a positive electrode active material with a metal ion reversely deintercalated and intercalated, and the positive electrode active material comprises a nickel-containing compound; and
at least a portion of regions of the case has a tensile strength of Rn at a temperature of 500°C, and Rn satisfies: 100 MPa≤Rn≤1200 MPa.

15. The battery cell according to any one of claims 1 to 14, wherein at least a portion of regions of the case has a tensile strength of Rm at a temperature of 25°C, at least a portion of the case comprises a third case wall, the third case wall has an average thickness of T, and Rm and T satisfy: 250 MPa≤Rm≤2000 MPa, 0.05 mm≤T≤0.5 mm, and 60 mm•MPa≤T×Rm≤500 mm•MPa.

16. The battery cell according to any one of claims 1 to 15, wherein the capacity of the battery cell is C, at least a portion of regions of the case has a tensile strength of Rm at a temperature of 25°C, and Rm and C satisfy: 250 MPa≤Rm≤2000 MPa and 25 Ah≤C≤550 Ah.

17. The battery cell according to any one of claims 1 to 16, wherein the case has an opening, the case comprises a first case wall opposite to the opening and at least two second case walls, and the first case wall and the second case walls intersect with each other; and
a transition region is provided between two adjacent second case walls in the at least two second case walls, and a maximum thickness T1 of the transition region and a maximum thickness T0 of a thicker second case wall in the two second case walls satisfy: T1>T0.

18. The battery cell according to any one of claims 1 to 17, wherein the case is of an integrally formed structure, the case has an opening, the case comprises a first case wall opposite to the opening and at least two second case walls, the first case wall and the second case walls intersect with each other, two second case walls in the at least two second case walls are connected by using a first rounded corner, and a depth H of the case and an inner diameter R1 of the first rounded corner satisfy: 2.5 mm≤R1≤20 mm and 50 mm<H≤250 mm.

19. The battery cell according to any one of claims 1 to 18, wherein the case is of an integrally formed structure, the case has an opening, the case comprises a first case wall opposite to the opening and at least two second case walls, the first case wall and the second case walls intersect with each other, two second case walls in the at least two second case walls are connected by using a first rounded corner, and a yield strength Re of the case at a temperature of 25°C and an inner diameter R1 of the first rounded corner satisfy: 140 MPa≤Re≤1000 Mpa and 2.5 mm≤R1≤20 mm.

20. The battery cell according to any one of claims 1 to 19, wherein the case has an opening, the case comprises a first case wall opposite to the opening and at least one second case wall, the first case wall and the second case wall intersect with each other, the first case wall and the second case wall are connected by using a second rounded corner, and an inner diameter r1 of the second rounded corner and a minimum thickness T2 of a thinner second case wall in the at least one second case wall satisfy: 2.0≤r1/T2≤30.

21. The battery cell according to any one of claims 1 to 20, wherein the case comprises:
a first case portion, wherein an opening is formed therein, the first case portion comprises a first wall opposite to the opening and a second wall connected to the first wall, and the first wall and the second wall are integrally formed; and
a second case portion, fixedly connected to the second wall, wherein
in a depth direction of the first case portion, at least a portion of regions of the case is jointly formed by the first case portion and the second case portion.

22. The battery cell according to any one of claims 1 to 21, wherein the battery cell is applied to a battery, and the electrode assembly comprises a first tab and a second tab having opposite polarity;
the case comprises a barrel and a cover connected to the barrel, the cover and the barrel are of an integrally formed structure, the barrel is disposed around an outer periphery of the electrode assembly, the cover is provided with an electrode lead-out hole, at least a portion of the cover is configured to be electrically connected to a first connection member of the battery and the first tab; and
the battery cell further comprises:
a second electrode terminal, configured to be electrically connected to a second connection member of the battery and the second tab, wherein the second electrode terminal is insulated from the cover and is mounted in the electrode lead-out hole, one of the cover and the second electrode terminal is a positive output electrode of the battery cell, and the other is a negative output electrode of the battery cell.

23. The battery cell according to claim 22, wherein the second tab is disposed at an end of the electrode assembly facing the cover, and the first tab is disposed at an end of the electrode assembly facing away from the cover; and
the barrel is configured to connect the first tab to the cover, so that the first tab is electrically connected to the cover.

24. The battery cell according to any one of claims 1 to 23, wherein the electrode assembly comprises a first tab, the case comprises a barrel and a cover connected to the barrel, the barrel is disposed around an outer periphery of the electrode assembly, the cover comprises a first electrode terminal, the first tab is electrically connected to the first electrode terminal by using the barrel, the case is of a multi-layer structure, and the multi-layer structure has different resistivity.

25. The battery cell according to any one of claims 1 to 24, wherein the case is of a multi-layer structure, a material of an outermost case of the case comprises at least one of the following: aluminum, an aluminum alloy, copper, a copper alloy, and chromium.

26. A battery, comprising:
a plurality of battery cells, wherein the battery cell is the battery cell according to any one of claims 1 to 25.

27. A power consuming device, comprising:
a battery, wherein the battery comprises the battery cell according to any one of claims 1 to 25, and the battery is configured to supply power to the power consuming device.
